(19) 

Europäisches Patentamt  
European Patent Office  
Office européen des brevets

(11) **EP 2 904 797 B1**

(12) **EUROPEAN PATENT SPECIFICATION**

(45) Date of publication and mention of the grant of the patent:  
**11.08.2021   Bulletin 2021/32**

(21) Application number: **13854138.8**

(22) Date of filing: **01.10.2013**

(51) Int Cl.:  
*H04N 19/187* (2014.01)    *H04N 19/139* (2014.01)  
*H04N 19/30* (2014.01)    *H04N 19/513* (2014.01)  
*H04N 19/573* (2014.01)

(86) International application number:  
**PCT/FI2013/050948**

(87) International publication number:  
**WO 2014/072571 (15.05.2014 Gazette 2014/20)**

(54) **METHOD AND APPARATUS FOR SCALABLE VIDEO CODING**

VERFAHREN UND VORRICHTUNG FÜR EINE SKALIERBARE VIDEOCODIERUNG

PROCÉDÉ ET APPAREIL DE CODAGE VIDÉO ÉVOLUTIF

(84) Designated Contracting States:  
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **01.10.2012   US 201261708463 P**

(43) Date of publication of application:  
**12.08.2015   Bulletin 2015/33**

(73) Proprietor: **Nokia Technologies Oy**  
**02610 Espoo (FI)**

(72) Inventors:
- **UGUR, Kemal**  
  **FI-33100 Tampere (FI)**
- **BICI, Mehmet Oguz**  
  **35370 Izmir (TR)**
- **BUGDAYCI, Döne**  
  **FI-33720 Tampere (FI)**

(74) Representative: **Berggren Oy**  
**P.O. Box 16**  
**Eteläinen Rautatiekatu 10A**  
**00101 Helsinki (FI)**

(56) References cited:  
**US-A1- 2006 153 300**

- **KIM C ET AL: "Description of scalable video coding technology proposal by LG Electronics and MediaTek (differential coding mode on)", 11. JCT-VC MEETING; 102. MPEG MEETING; 10-10-2012 - 19-10-2012; SHANGHAI; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-K0033, 1 October 2012 (2012-10-01), XP030112965,**
- **LUKASZ BLASZAK ET AL: "Scalable AVC Codec", 68. MPEG MEETING; 15-03-2004 - 19-03-2004; MÃ 1/4 NCHEN; (MOTION PICTUREEXPERT GROUP OR ISO/IEC JTC1/SC29/WG11),, no. M10626, 6 March 2004 (2004-03-06), XP030039454, ISSN: 0000-0257**
- **J-L LIN ET AL: "Improved Advanced Motion Vector Prediction", 95. MPEG MEETING; 24-1-2011 - 28-1-2011; DAEGU; (MOTION PICTURE EXPERT GROUP OR ISO/IEC JTC1/SC29/WG11),, no. m18877, 23 January 2011 (2011-01-23), XP030047446,**
- **LANGE, R. ET AL.: 'Simple AVC-based codecs with spatial scalability' INT. CONF. ON IMAGE PROCESSING 2004 (ICIP 2004) vol. 4, 24 October 2004, SINGAPORE, pages 2299 - 2302, XP010786245**
- **LUO, L. ET AL.: 'Layer-correlated motion estimation and motion vector coding for the 3D-wavelet video coding' INT. CONF. ON IMAGE PROCESSING 2003 (ICIP 2003) 14 September 2003, BARCELONA, SPAIN, pages II-791 - II-794, XP010670584**

**EP 2 904 797 B1**

(Cont. next page)

- **LIN, E. ET AL.: 'A hybrid embedded video codec using base layer information for enhancement layer coding' INT. CONF. ON IMAGE PROCESSING 2001 (ICIP 2001) 07 October 2001, THESSALONIKI, GREECE, pages 1005 - 1008, XP010563936**

- **None**

- **None**

**Description**

## TECHNICAL FIELD

The present application relates generally to an apparatus, a method and a computer program for video coding and decoding.

## BACKGROUND

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

A video coding system may comprise an encoder that transforms an input video into a compressed representation suited for storage/transmission and a decoder that can uncompress the compressed video representation back into a viewable form. The encoder may discard some information in the original video sequence in order to represent the video in a more compact form, for example, to enable the storage/transmission of the video information at a lower bitrate than otherwise might be needed.

Scalable video coding refers to a coding structure where one bitstream can contain multiple representations of the content at different bitrates, resolutions, frame rates and/or other types of scalability. A scalable bitstream may consist of a base layer providing the lowest quality video available and one or more enhancement layers that enhance the video quality when received and decoded together with the lower layers. In order to improve coding efficiency for the enhancement layers, the coded representation of that layer may depend on the lower layers. Each layer together with all its dependent layers is one representation of the video signal at a certain spatial resolution, temporal resolution, quality level, and/or operation point of other types of scalability.

Various technologies for providing three-dimensional (3D) video content are currently investigated and developed. Especially, intense studies have been focused on various multiview applications wherein a viewer is able to see only one pair of stereo video from a specific viewpoint and another pair of stereo video from a different viewpoint. One of the most feasible approaches for such multiview applications has turned out to be such wherein only a limited number of input views, e.g. a mono or a stereo video plus some supplementary data, is provided to a decoder side and all required views are then rendered (i.e. synthesized) locally by the decoder to be displayed on a display.

In the encoding of 3D video content, video compression systems, such as Advanced Video Coding standard H.264/AVC or the Multiview Video Coding MVC extension of H.264/AVC can be used. Patent document US2006153300 discloses a method for scalable video coding involving motion vector prediction in a context of scalable video coding, wherein a motion vector predictor for an enhancement layer block is obtained based on at least one base-layer motion vector predictor candidate and at least one spatial motion vector predictor candidate of the enhancement layer.

## SUMMARY

Some embodiments provide a method for encoding and decoding video information. In some embodiments base layer motion vector is utilized for the motion vector prediction process of the enhancement layer. This may be done by utilizing the base layer motion vector while constructing the motion vector predictor candidate list in the enhancement layer. There may be several alternatives to construct the motion vector predictor candidate list. In some embodiments, when encoding an enhancement layer motion vector, a motion vector predictor candidate associated with the base layer motion vector may be included as a first candidate to be processed in the motion vector prediction list for the corresponding enhancement layer motion vector generation. In some other embodiments, when encoding an enhancement layer motion vector, the motion vector prediction candidate list of an enhancement layer block may be constructed in such a way that the motion vector predictor from the base layer and the motion vector predictor from another picture in the same layer (temporal motion vector predictor candidate) are present in the list if they are both available and the list size is larger than two. This means that the base layer motion vector predictor candidate and the temporal motion vector predictor candidate may be treated with higher priority than the spatial motion vector predictor candidates, if the base layer motion vector predictor candidate is present and if the temporal motion vector predictor is allowed. In yet some other embodiments, when encoding the enhancement layer motion vector, the temporal motion vector predictor is not used but instead it is replaced with the base layer motion vector predictor. The base layer motion vector is placed in the slot in the motion vector prediction list which corresponds with the temporal motion vector predictor. The rest of the motion vector prediction list construction process in enhancement layer may be done in the same manner as in the base layer.

Base layer motion information for a block may be composed of motion vectors (horizontal and vertical offsets of the block with respect to the corresponding block present in the reference picture) and reference picture indices for all the available reference picture lists. For a uni-directional prediction block, there is a single reference picture list and for bi-directional prediction block, there are two reference picture lists. In the enhancement layer, for a reference picture list, reference index coming from the base layer information may be used to determine the reference picture to be used and the motion vector coming from the base layer may be scaled according to picture order count (POC) differences and scalability factors. Corresponding base layer block of an enhancement layer block may be calculated by scaling the top left corner coordinates and size of the enhancement layer block using the scalability factor.

Various aspects of examples of the invention are provided in the detailed description.

According to a first aspect of the present invention, there is provided a method comprising:

coding motion information of an enhancement layer using motion vector information of a reference layer, wherein the coding comprises:

deriving a first candidate list of motion vectors using at least motion vector information from the reference layer, motion vector information from the enhancement layer of the same picture and motion vector information from the enhancement layer of a different picture;
constructing a second candidate list of motion vectors using the first candidate list;; and
selecting a motion vector for said coding from said second candidate list.

According to a second aspect there is provided a method comprising:

coding motion information of an enhancement layer using motion vector information of a reference layer, wherein the coding comprises;
deriving a candidate list of motion vectors,
selecting a motion vector for said coding from said candidate list.

According to a third aspect of the present invention, there is provided an apparatus comprising at least one processor and at least one memory including computer program code, the at least one memory and the computer program code configured to, with the at least one processor, cause the apparatus to:

code motion information of an enhancement layer using motion vector information of a reference layer, wherein the coding comprises:

derive a first candidate list of motion vectors using at least motion vector information from the reference layer, motion vector information from the enhancement layer of the same picture and motion vector information from the enhancement layer of a different picture;
construct a second candidate list of motion vectors using the first candidate list; and select a motion vector for said coding from said second candidate list.

According to a fourth aspect there is provided an apparatus comprising at least one processor and at least one memory including computer program code, the at least one memory and the computer program code configured to, with the at least one processor, cause the apparatus to:

code motion information of an enhancement layer using motion vector information of a reference layer, wherein the coding comprises;
derive a candidate list of motion vectors,
select a motion vector for said coding from said candidate list.

According to a fifth aspect of the present invention, there is provided a computer program product including one or more sequences of one or more instructions which, when executed by one or more processors, cause an apparatus to at least perform the following:

code motion information of an enhancement layer using motion vector information of a reference layer, wherein the coding comprises:

derive a first candidate list of motion vectors using at least motion vector information from the reference layer, motion vector information from the enhancement layer of the same picture and motion vector information from the enhancement layer of a different picture;
construct a second candidate list of motion vectors using the first candidate list; and select a motion vector for said coding from said second candidate list.

According to a sixth aspect there is provided a computer program product including one or more sequences of one or more instructions which, when executed by one or more processors, cause an apparatus to at least perform the following:

code motion information of an enhancement layer using motion vector information of a reference layer, wherein the coding comprises;
derive a candidate list of motion vectors,
select a motion vector for said coding from said candidate list.

According to a seventh aspect of the present invention, there is provided an apparatus comprising:

means for coding motion information of an enhancement layer using motion vector information of a reference layer, wherein the coding comprises:

means for deriving a first candidate list of motion vectors using at least motion vector information from the reference layer, motion vector information from the enhancement layer of the same picture and motion vector information from the enhancement layer of a different picture;
means for constructing a second candidate list of motion vectors using the first candidate list; and
means for selecting a motion vector for said coding from said second candidate list.

According to an eighth aspect there is provided an apparatus comprising:

means for coding motion information of an enhancement layer using motion vector information of a reference layer, wherein the coding comprises;
means for deriving a candidate list of motion vectors,
means for selecting a motion vector for said coding from said candidate list.

According to a ninth aspect of the present invention, there is provided a method comprising:

decoding motion information of an enhancement layer using motion vector information of a reference layer, wherein the decoding comprises:

deriving a first candidate list of motion vectors using at least motion vector information from the reference layer, motion vector information from the enhancement layer of the same picture and motion vector information from the enhancement layer of a different picture;
constructing a second candidate list of motion vectors using the first candidate list; and
selecting a motion vector for said decoding from said second candidate list.

According to a tenth aspect there is provided a method comprising:

decoding motion information of an enhancement layer using motion vector information of a reference layer, wherein the decoding comprises;
deriving a candidate list of motion vectors,
selecting a motion vector for said decoding from said candidate list.

According to an eleventh aspect of the present invention, there is provided an apparatus comprising at least one processor and at least one memory including computer program code, the at least one memory and the computer program code configured to, with the at least one processor, cause the apparatus to:

decode motion information of an enhancement layer using motion vector information of a reference layer, wherein the decoding comprises:

derive a first candidate list of motion vectors using at least motion vector information from the reference layer, motion vector information from the enhancement layer of the same picture and motion vector information from the enhancement layer of a different picture;
construct a second candidate list of motion vectors using the first candidate list; and select a motion vector for said decoding from said second candidate list.

According to a twelfth aspect there is provided an apparatus comprising at least one processor and at least one memory including computer program code, the at least one memory and the computer program code configured to, with the at least one processor, cause the apparatus to:

decode motion information of an enhancement layer using motion vector information of a reference layer, wherein the decoding comprises;
derive a candidate list of motion vectors,
select a motion vector for said decoding from said candidate list.

According to a thirteenth aspect of the present invention, there is provided a computer program product including one or more sequences of one or more instructions which, when executed by one or more processors, cause an apparatus to at least perform the following:

decode motion information of an enhancement layer using motion vector information of a reference layer, wherein the decoding comprises:

derive a first candidate list of motion vectors using at least motion vector information from the reference layer, motion vector information from the enhancement layer of the same picture and motion vector information from the enhancement layer of a different picture;
construct a second candidate list of motion vectors using the first candidate list; and
select a motion vector for said decoding from said second candidate list.

According to a fourteenth aspect there is provided a computer program product including one or more sequences of one or more instructions which, when executed by one or more processors, cause an apparatus to at least perform the following:

decode motion information of an enhancement layer using motion vector information of a reference layer, wherein the decoding comprises;
derive a candidate list of motion vectors,
select a motion vector for said decoding from said candidate list.

According to an fifteenth aspect there is provided an apparatus comprising:

means for decoding motion information of an enhancement layer using motion vector information of a reference layer, wherein the decoding comprises:

means for deriving a first candidate list of motion vectors using at least motion vector information from the reference layer, motion vector information from the enhancement layer of the same picture and motion vector information from the enhancement layer of a different picture;
means for constructing a second candidate list of motion vectors using the first candidate list; and
means for selecting a motion vector for said decoding from said second candidate list.

According to a sixteenth aspect there is provided an apparatus comprising:

means for decoding motion information of an enhancement layer using motion vector information of a reference layer, wherein the decoding comprises;
means for deriving a candidate list of motion vectors,
means for selecting a motion vector for said decoding from said candidate list. The invention is set out in the appended set of claims; the further examples called embodiments in the description are illustrative examples.

## BRIEF DESCRIPTION OF THE DRAWINGS

For a more complete understanding of example embodiments of the present invention, reference is now made to the following descriptions taken in connection with the accompanying drawings in which:

Figure 1 shows schematically an electronic device employing some embodiments of the invention;

Figure 2 shows schematically a user equipment suitable for employing some embodiments of the invention;

Figure 3 further shows schematically electronic devices employing embodiments of the invention connected using wireless and wired network connections;

Figure 4a shows schematically an embodiment of the invention as incorporated within an encoder;

Figure 4b shows schematically an embodiment of a spatial scalability encoding apparatus according to some embodiments of the invention;

Figure 5a shows schematically an embodiment of a decoder;

Figure 5b shows schematically an embodiment of a spatial scalability decoding apparatus according to some embodiments of the invention;

Figure 6a depicts an example of a current block and five spatial neighbors usable as motion prediction candidates;

Figures 6b and 6c depict examples of spatial and temporal motion vector prediction;

Figure 7 shows an example of intra prediction mode directions;

Figures 8a and 8b show examples of a structure for indication of an intra prediction mode for an enhancement layer;

Figures 9a and 9b show an example of enhancement layer prediction block spanning multiple prediction blocks from base layer.

## DETAILED DESCRIPTON OF SOME EXAMPLE EMBODIMENTS

In the following, several embodiments of the invention will be described in the context of one video coding arrangement. It is to be noted, however, that the invention is not limited to this particular arrangement. In fact, the different embodiments have applications widely in any environment where improvement of reference picture handling is required. For example, the invention may be applicable to video coding systems like streaming systems, DVD players, digital television receivers, personal video recorders, systems and computer programs on personal computers, handheld computers and communication devices, as well as network elements such as transcoders and cloud computing arrangements where video data is handled.

The H.264/AVC standard was developed by the Joint Video Team (JVT) of the Video Coding Experts Group (VCEG) of the Telecommunications Standardization Sector of International Telecommunication Union (ITU-T) and the Moving Picture Experts Group (MPEG) of International Organisation for Standardization (ISO) / International Electrotechnical Commission (IEC). The H.264/AVC standard is published by both parent standardization organizations, and it is referred to as ITU-T Recommendation H.264 and ISO/IEC International Standard 14496-10, also known as MPEG-4 Part 10 Advanced Video Coding (AVC). There have been multiple versions of the H.264/AVC standard, each integrating new extensions or features to the specification. These extensions include Scalable Video Coding (SVC) and Multiview Video Coding (MVC).

There is a currently ongoing standardization project of High Efficiency Video Coding (HEVC) by the Joint Collaborative Team - Video Coding (JCT-VC) of VCEG and MPEG.

Some key definitions, bitstream and coding structures, and concepts of H.264/AVC and HEVC are described in this section as an example of a video encoder, decoder, encoding method, decoding method, and a bitstream structure, wherein the embodiments may be implemented. Some of the key definitions, bitstream and coding structures, and concepts of H.264/AVC are the same as in a draft HEVC standard - hence, they are described below jointly. The aspects of the invention are not limited to H.264/AVC or HEVC, but rather the description is given for one possible basis on top of which the invention may be partly or fully realized.

Similarly to many earlier video coding standards, the bitstream syntax and semantics as well as the decoding process for error-free bitstreams are specified in H.264/AVC and HEVC. The encoding process is not specified, but encoders must generate conforming bitstreams. Bitstream and decoder conformance can be verified with the Hypothetical Reference Decoder (HRD). The standards contain coding tools that help in coping with transmission errors and losses, but the use of the tools in encoding is optional and no decoding process has been specified for erroneous bitstreams.

The elementary unit for the input to an H.264/AVC or HEVC encoder and the output of an H.264/AVC or HEVC decoder, respectively, is a picture. In H.264/AVC and HEVC, a picture may either be a frame or a field. A frame comprises a matrix of luma samples and corresponding chroma samples. A field is a set of alternate sample rows of a frame and may be used as encoder input, when the source signal is interlaced. Chroma pictures may be subsampled when compared to luma pictures. For example, in the 4:2:0 sampling pattern the spatial resolution of chroma pictures is half of that of the luma picture along both coordinate axes.

In H.264/AVC, a macroblock is a 16x16 block of luma samples and the corresponding blocks of chroma samples. For example, in the 4:2:0 sampling pattern, a macroblock contains one 8x8 block of chroma samples per each chroma component. In H.264/AVC, a picture is partitioned to one or more slice groups, and a slice group contains one or more slices. In H.264/AVC, a slice consists of an integer number of macroblocks ordered consecutively in the raster scan within a particular slice group.

During the course of HEVC standardization the terminology for example on picture partitioning units has evolved.

In the next paragraphs, some non-limiting examples of HEVC terminology are provided.

In one draft version of the HEVC standard, video pictures are divided into coding units (CU) covering the area of the picture. A CU consists of one or more prediction units (PU) defining the prediction process for the samples within the CU and one or more transform units (TU) defining the prediction error coding process for the samples in the CU. Typically, a CU consists of a square block of samples with a size selectable from a predefined set of possible CU sizes. A CU with the maximum allowed size is typically named as LCU (largest coding unit) and the video picture is divided into non-overlapping LCUs. An LCU can be further split into a combination of smaller CUs, e.g. by recursively splitting the LCU and resultant CUs. Each resulting CU may have at least one PU and at least one TU associated with it. Each PU and TU can further be split into smaller PUs and TUs in order to increase granularity of the prediction and prediction error coding processes, respectively. Each PU may have prediction information associated with it defining what kind of a prediction is to be applied for the pixels within that PU (e.g. motion vector information for inter predicted PUs and intra prediction directionality information for intra predicted PUs). Similarly, each TU may be associated with information describing the prediction error decoding process for the samples within the TU (including e.g. DCT coefficient information). It may be signalled at CU level whether prediction error coding is applied or not for each CU. In the case there is no prediction error residual associated with the CU, it can be considered there are no TUs for the CU. In some embodiments the PU splitting can be realized by splitting the CU into four equal size square PUs or splitting the CU into two rectangle PUs vertically or horizontally in a symmetric or asymmetric way. The division of the image into CUs, and division of CUs into PUs and TUs may be signalled in the bitstream allowing the decoder to reproduce the intended structure of these units.

The decoder reconstructs the output video by applying prediction means similar to the encoder to form a predicted representation of the pixel blocks (using the motion or spatial information created by the encoder and stored in the compressed representation) and prediction error decoding (inverse operation of the prediction error coding recovering the quantized prediction error signal in spatial pixel domain). After applying prediction and prediction error decoding means the decoder sums up the prediction and prediction error signals (pixel values) to form the output video frame. The decoder (and encoder) can also apply additional filtering means to improve the quality of the output video before passing it for display and/or storing it as prediction reference for the forthcoming frames in the video sequence.

In a draft HEVC standard, a picture can be partitioned in tiles, which are rectangular and contain an integer number of LCUs. In a draft HEVC standard, the partitioning to tiles forms a regular grid, where heights and widths of tiles differ from each other by one LCU at the maximum. In a draft HEVC, a slice consists of an integer number of CUs. The CUs are scanned in the raster scan order of LCUs within tiles or within a picture, if tiles are not in use. Within an LCU, the CUs have a specific scan order.

In a Working Draft (WD) 5 of HEVC, some key definitions and concepts for picture partitioning are defined as follows. A partitioning is defined as the division of a set into subsets such that each element of the set is in exactly one of the subsets.

A basic coding unit in a HEVC WD5 is a treeblock. A treeblock is an NxN block of luma samples and two corresponding blocks of chroma samples of a picture that has three sample arrays, or an NxN block of samples of a monochrome picture or a picture that is coded using three separate colour planes. A treeblock may be partitioned for different coding and decoding processes. A treeblock partition is a block of luma samples and two corresponding blocks of chroma samples resulting from a partitioning of a treeblock for a picture that has three sample arrays or a block of luma samples resulting from a partitioning of a treeblock for a monochrome picture or a picture that is coded using three separate colour planes. Each treeblock is assigned a partition signalling to identify the block sizes for intra or inter prediction and for transform coding. The partitioning is a recursive quadtree partitioning. The root of the quadtree is associated with the treeblock. The quadtree is split until a leaf is reached, which is referred to as the coding node. The coding node is the root node of two trees, the prediction tree and the transform tree. The prediction tree specifies the position and size of prediction blocks. The prediction tree and associated prediction data are referred to as a prediction unit. The transform tree specifies the position and size of transform blocks. The transform tree and associated transform data are referred to as a transform unit. The splitting information for luma and chroma is identical for the prediction tree and may or may not be identical for the transform tree. The coding node and the associated prediction and transform units form together a coding unit.

In a HEVC WD5, pictures are divided into slices and tiles. A slice may be a sequence of treeblocks but (when referring to a so-called fine granular slice) may also have its boundary within a treeblock at a location where a transform unit and prediction unit coincide. Treeblocks within a slice are coded and decoded in a raster scan order. For the primary coded picture, the division of each picture into slices is a partitioning.

In a HEVC WD5, a tile is defined as an integer number of treeblocks co-occurring in one column and one row, ordered consecutively in the raster scan within the tile. For the primary coded picture, the division of each picture into tiles is a partitioning. Tiles are ordered consecutively in the raster scan within the picture. Although a slice contains treeblocks that are consecutive in the raster scan within a tile, these treeblocks are not necessarily consecutive in the raster scan within the picture. Slices and tiles need not contain the same sequence of treeblocks. A tile may comprise treeblocks contained in more than one slice. Similarly, a slice may comprise treeblocks contained in several tiles.

A distinction between coding units and coding treeblocks may be defined for example as follows. A slice may be defined as a sequence of one or more coding tree units (CTU) in raster-scan order within a tile or within a picture if tiles are not in use. Each CTU may comprise one luma coding treeblock (CTB) and possibly (depending on the chroma format being used) two chroma CTBs.

In H.264/AVC and HEVC, in-picture prediction may be disabled across slice boundaries. Thus, slices can be regarded as a way to split a coded picture into independently decodable pieces, and slices are therefore often regarded as elementary units for transmission. In many cases, encoders may indicate in the bitstream which types of in-picture prediction are turned off across slice boundaries, and the decoder operation takes this information into account for example when concluding which prediction sources are available. For example, samples from a neighboring macroblock or CU may be regarded as unavailable for intra prediction, if the neighboring macroblock or CU resides in a different slice.

A syntax element may be defined as an element of data represented in the bitstream. A syntax structure may be defined as zero or more syntax elements present together in the bitstream in a specified order.

The elementary unit for the output of an H.264/AVC or HEVC encoder and the input of an H.264/AVC or HEVC decoder, respectively, is a Network Abstraction Layer (NAL) unit. For transport over packet-oriented networks or storage into structured files, NAL units may be encapsulated into packets or similar structures. A bytestream format has been specified in H.264/AVC and HEVC for transmission or storage environments that do not provide framing structures. The bytestream format separates NAL units from each other by attaching a start code in front of each NAL unit. To avoid false detection of NAL unit boundaries, encoders run a byte-oriented start code emulation prevention algorithm, which adds an emulation prevention byte to the NAL unit payload if a start code would have occurred otherwise. In order to, for example, enable straightforward gateway operation between packet- and stream-oriented systems, start code emulation prevention may always be performed regardless of whether the bytestream format is in use or not. A NAL unit may be defined as a syntax structure containing an indication of the type of data to follow and bytes containing that data in the form of an RBSP interspersed as necessary with emulation prevention bytes. A raw byte sequence payload (RBSP) may be defined as a syntax structure containing an integer number of bytes that is encapsulated in a NAL unit. An RBSP is either empty or has the form of a string of data bits containing syntax elements followed by an RBSP stop bit and followed by zero or more subsequent bits equal to 0.

NAL units consist of a header and payload. In H.264/AVC and HEVC, the NAL unit header indicates the type of the NAL unit and whether a coded slice contained in the NAL unit is a part of a reference picture or a non-reference picture.

H.264/AVC NAL unit header includes a 2-bit nal_ref_idc syntax element, which when equal to 0 indicates that a coded slice contained in the NAL unit is a part of a non-reference picture and when greater than 0 indicates that a coded slice contained in the NAL unit is a part of a reference picture. A draft HEVC standard includes a 1-bit nal_ref_idc syntax element, also known as nal_ref_flag, which when equal to 0 indicates that a coded slice contained in the NAL unit is a part of a non-reference picture and when equal to 1 indicates that a coded slice contained in the NAL unit is a part of a reference picture. The header for SVC and MVC NAL units may additionally contain various indications related to the scalability and multiview hierarchy.

In a draft HEVC standard, a two-byte NAL unit header is used for all specified NAL unit types. The first byte of the NAL unit header contains one reserved bit, a one-bit indication nal_ref_flag primarily indicating whether the picture carried in this access unit is a reference picture or a non-reference picture, and a six-bit NAL unit type indication. The second byte of the NAL unit header includes a three-bit temporal_id indication for temporal level and a five-bit reserved field (called reserved_one_5bits) required to have a value equal to 1 in a draft HEVC standard. The temporal_id syntax element may be regarded as a temporal identifier for the NAL unit and TemporalId variable may be defined to be equal to the value of temporal_id. The five-bit reserved field is expected to be used by extensions such as a future scalable and 3D video extension. Without loss of generality, in some example embodiments a variable LayerId is derived from the value of reserved_one_5bits for example as follows: LayerId = reserved_one_5bits - 1.

In a later draft HEVC standard, a two-byte NAL unit header is used for all specified NAL unit types. The NAL unit header contains one reserved bit, a six-bit NAL unit type indication, a six-bit reserved field (called reserved zero_6bits) and a three-bit temporal_id_plus1 indication for temporal level. The temporal_id_plus1 syntax element may be regarded as a temporal identifier for the NAL unit, and a zero-based TemporalId variable may be derived as follows: TemporalId = temporal_id_plus1 - 1. TemporalId equal to 0 corresponds to the lowest temporal level. The value of temporal_id_plus1 is required to be non-zero in order to avoid start code emulation involving the two NAL unit header bytes. Without loss of generality, in some example embodiments a variable LayerId is derived from the value of reserved_zero_6bits for example as follows:

LayerId = reserved_zero_6bits.

It is expected that reserved_one_5bits, reserved_zero_6bits and/or similar syntax elements in NAL unit header would carry information on the scalability hierarchy. For example, the LayerId value derived from reserved_one_5bits, reserved_zero_6bits and/or similar syntax elements may be mapped to values of variables or syntax elements describing different scalability dimensions, such as quality_id or similar, dependency_id or similar, any other type of layer identifier, view order index or similar, view identifier, an indication whether the NAL unit concerns depth or texture i.e. depth flag or similar, or an identifier similar to priority_id of SVC indicating a valid sub-bitstream extraction if all NAL units greater than a specific identifier value are removed from the bitstream. reserved_one_5bits, reserved_zero_6bits and/or similar syntax elements may be partitioned into one or more syntax elements indicating scalability properties. For example, a certain number of bits among reserved_one_5bits, reserved_zero_6bits and/or similar syntax elements may be used for dependency_id or similar, while another certain number of bits among reserved_one_5bits, reserved_zero_6bits and/or similar syntax elements may be used for quality_id or similar. Alternatively, a mapping of LayerId values or similar to values of variables or syntax elements describing different scalability dimensions may be provided for example in a Video Parameter Set, a Sequence Parameter Set or another syntax structure.

A decoding order may be defined as the order in which syntax elements are processed by the decoding process. A bitstream order may be defined as the order in which syntax elements appear in or are arranged into a bitstream. A bitstream order may be identical to a decoding order. A decoding order may be specified in such a manner that the decoding process of a syntax element may require that earlier syntax elements in decoding order have already been decoded but does not require that later syntax elements in decoding order have been decoded. The decoding order may be determined to follow or be aligned with various prediction processes used for decoding. For example, the decoding of pictures that use inter-picture prediction may follow later in decoding order than other pictures that are referenced by the inter-picture prediction in the decoding process. A coding order of pictures may be defined as the order in which input pictures are encoded into coded pictures. A coding order of pictures may also determine the bitstream order of pictures, which, in turn, may also determine the decoding order of pictures. In some cases, there may be more than one decoding orders for coded data units, such as coded slices, of a coded picture. An output order may be defined as the order in which the decoded pictures are output from the decoded picture buffer.

NAL units can be categorized into Video Coding Layer (VCL) NAL units and non-VCL NAL units. VCL NAL units are typically coded slice NAL units. In H.264/AVC, coded slice NAL units contain syntax elements representing one or more coded macroblocks, each of which corresponds to a block of samples in the uncompressed picture. In a draft HEVC standard, coded slice NAL units contain syntax elements representing one or more CU.

In H.264/AVC a coded slice NAL unit can be indicated to be a coded slice in an Instantaneous Decoding Refresh (IDR) picture or coded slice in a non-IDR picture.

In a draft HEVC standard, a slice layer RBSP includes a slice header, slice data, and a slice extension, and its syntax may be specified as follows. A slice layer RBSP may be included in various types of coded slice NAL units. The slice extension enables e.g. to include syntax elements to the slice layer RBSP syntax that are specified in a scalable HEVC extension, while decoders of the base HEVC standard can decode the coded slice RBSPs correctly.

| slice_layer_rbsp( ) { | **Descripto r** |
|---|---|
| slice_header( ) | |
| slice_data( ) | |
| if(slice_extension_present_flag) { | |
| **slice_extention_flag** | u(1) |
| if(slice_extension_flag) | |
| while(more_rbsp_data( )) | |
| **slice_extension_data_flag** | u(1) |
| } | |
| rbsp_slice trailing_bits( ) | |
| } | |

In a draft HEVC standard, a coded slice NAL unit can be indicated to be one of the following types.

| nal_unit_type | Name of nal_unit_type | Content of NAL unit and RBSP syntax structure |
|---|---|---|
| 1, 2 | TRAIL_R, TRAIL_N | Coded slice of a non-TSA, non-STSA trailing picture slice_layer_rbsp( ) |

(continued)

| nal_unit_type | Name of nal_unit_type | Content of NAL unit and RBSP syntax structure |
|---|---|---|
| 3, 4 | TSA_R,<br>TSA_N | Coded slice of a TSA picture<br>slice_layer_rbsp( ) |
| 5, 6 | STSA_R,<br>STSA_N | Coded slice of an STSA picture<br>slice_layer_rbsp( ) |
| 7, 8, 9 | BLA_W_TFD<br>BLA_W_DLP<br>BLA_N_LP | Coded slice of a BLA picture<br>slice_layer_rbsp() |
| 10, 11 | IDR_W_LP<br>IDR_N_LP | Coded slice of an IDR picture<br>slice_layer_rbsp( ) |
| 12 | CRA_NUT | Coded slice of a CRA picture<br>slice_layer_rbsp( ) |
| 13 | DLP_NUT | Coded slice of a DLP picture<br>slice_layer_rbsp( ) |
| 14 | TFD_NUT | Coded slice of a TFD picture<br>slice_layer_rbsp() |

In a draft HEVC standard, abbreviations for picture types may be defined as follows: Broken Link Access (BLA), Clean Random Access (CRA), Decodable Leading Picture (DLP), Instantaneous Decoding Refresh (IDR), Random Access Point (RAP), Step-wise Temporal Sub-layer Access (STSA), Tagged For Discard (TFD), Temporal Sub-layer Access (TSA). A BLA picture having nal_unit_type equal to BLA_W_TFD is allowed to have associated TFD pictures present in the bitstream. A BLA picture having nal_unit_type equal to BLA_W_DLP does not have associated TFD pictures present in the bitstream, but may have associated DLP pictures in the bitstream. A BLA picture having nal unit_type equal to BLA_N_LP does not have associated leading pictures present in the bitstream. An IDR picture having nal_unit_type equal to IDR_N_LP does not have associated leading pictures present in the bitstream. An IDR picture having nal_unit_type equal to IDR_W_LP does not have associated TFD pictures present in the bitstream, but may have associated DLP pictures in the bitstream. When the value of nal_unit_type is equal to TRAIL_N, TSA_N or STSA_N, the decoded picture is not used as a reference for any other picture of the same temporal sub-layer. That is, in a draft HEVC standard, when the value of nal_unit_type is equal to TRAIL_N, TSA_N or STSA N, the decoded picture is not included in any of RefPicSetStCurrBefore, RefPicSetStCurrAfter and RefPicSetLtCurr of any picture with the same value of TemporalId. A coded picture with nal_unit_type equal to TRAIL_N, TSA_N or STSA_N may be discarded without affecting the decodability of other pictures with the same value of TemporalId. In the table above, RAP pictures are those having nal_unit_type within the range of 7 to 12, inclusive. Each picture, other than the first picture in the bitstream, is considered to be associated with the previous RAP picture in decoding order. A leading picture may be defined as a picture that precedes the associated RAP picture in output order. Any picture that is a leading picture has nal_unit_type equal to DLP_NUT or TFD_NUT. A trailing picture may be defined as a picture that follows the associated RAP picture in output order. Any picture that is a trailing picture does not have nal_unit_type equal to DLP_NUT or TFD_NUT. Any picture that is a leading picture may be constrained to precede, in decoding order, all trailing pictures that are associated with the same RAP picture. No TFD pictures are present in the bitstream that are associated with a BLA picture having nal_unit_type equal to BLA_W_DLP or BLA_N_LP. No DLP pictures are present in the bitstream that are associated with a BLA picture having nal_unit_type equal to BLA_N_LP or that are associated with an IDR picture having nal_unit_type equal to IDR_N_LP. Any TFD picture associated with a CRA or BLA picture may be constrained to precede any DLP picture associated with the CRA or BLA picture in output order. Any TFD picture associated with a CRA picture may be constrained to follow, in output order, any other RAP picture that precedes the CRA picture in decoding order.

Another means of describing picture types of a draft HEVC standard is provided next. As illustrated in the table below, picture types can be classified into the following groups in HEVC: a) random access point (RAP) pictures, b) leading pictures, c) sub-layer access pictures, and d) pictures that do not fall into the three mentioned groups. The picture types and their sub-types as described in the table below are identified by the NAL unit type in HEVC. RAP picture types include IDR picture, BLA picture, and CRA picture, and can further be characterized based on the leading pictures associated with them as indicated in the table below.

| a) Random access point pictures | | |
|---|---|---|
| IDR | Instantaneous decoding refresh | without associated leading pictures |
| | | may have associated leading pictures |
| BLA | Broken link access | without associated leading pictures |
| | | may have associated DLP pictures but without associated TFD pictures |
| | | may have associated DLP and TFD pictures |
| CRA | Clean random access | may have associated leading pictures |

| b) Leading pictures | |
|---|---|
| DLP | Decodable leading picture |
| TFD | Tagged for discard |

| c) Temporal sub-layer access pictures | | |
|---|---|---|
| TSA | Temporal sub-layer access | not used for reference in the same sub-layer |
| | | may be used for reference in the same sub-layer |
| STSA | Step-wise temporal sub-layer access | not used for reference in the same sub-layer |
| | | may be used for reference in the same sub-layer |

| d) Picture that is not RAP, leading or temporal sub-layer access picture | |
|---|---|
| | not used for reference in the same sub-layer |
| | may be used for reference in the same sub-layer |

CRA pictures in HEVC allows pictures that follow the CRA picture in decoding order but precede it in output order to use pictures decoded before the CRA picture as a reference and still allow similar clean random access functionality as an IDR picture. Pictures that follow a CRA picture in both decoding and output order are decodable if random access is performed at the CRA picture, and hence clean random access is achieved.

Leading pictures of a CRA picture that do not refer to any picture preceding the CRA picture in decoding order can be correctly decoded when the decoding starts from the CRA picture and are therefore DLP pictures. In contrast, a TFD picture cannot be correctly decoded when decoding starts from a CRA picture associated with the TFD picture (while the TFD picture could be correctly decoded if the decoding had started from a RAP picture before the current CRA picture). Hence, TFD pictures associated with a CRA may be discarded when the decoding starts from the CRA picture.

When a part of a bitstream starting from a CRA picture is included in another bitstream, the TFD pictures associated with the CRA picture cannot be decoded, because some of their reference pictures are not present in the combined bitstream. To make such splicing operation straightforward, the NAL unit type of the CRA picture can be changed to indicate that it is a BLA picture. The TFD pictures associated with a BLA picture may not be correctly decodable hence should not be output/displayed. The TFD pictures associated with a BLA picture may be omitted from decoding.

In HEVC there are two picture types, the TSA and STSA picture types, that can be used to indicate temporal sub-layer switching points. If temporal sub-layers with TemporalId up to N had been decoded until the TSA or STSA picture (exclusive) and the TSA or STSA picture has TemporalId equal to N+1, the TSA or STSA picture enables decoding of all subsequent pictures (in decoding order) having TemporalId equal to N+1. The TSA picture type may impose restrictions on the TSA picture itself and all pictures in the same sub-layer that follow the TSA picture in decoding order. None of these pictures is allowed to use inter prediction from any picture in the same sub-layer that precedes the TSA picture in decoding order. The TSA definition may further impose restrictions on the pictures in higher sub-layers that follow the TSA picture in decoding order. None of these pictures is allowed to refer a picture that precedes the TSA picture in decoding order if that picture belongs to the same or higher sub-layer as the TSA picture. TSA pictures have TemporalId greater than 0. The STSA is similar to the TSA picture but does not impose restrictions on the pictures in higher sub-layers that follow the STSA picture in decoding order and hence enable up-switching only onto the sub-layer where the STSA picture resides.

A non-VCL NAL unit may be for example one of the following types: a sequence parameter set, a picture parameter set, a supplemental enhancement information (SEI) NAL unit, an access unit delimiter, an end of sequence NAL unit, an end of stream NAL unit, or a filler data NAL unit. Parameter sets may be needed for the reconstruction of decoded pictures, whereas many of the other non-VCL NAL units are not necessary for the reconstruction of decoded sample values.

Parameters that remain unchanged through a coded video sequence may be included in a sequence parameter set. In addition to the parameters that may be needed by the decoding process, the sequence parameter set may optionally contain video usability information (VUI), which includes parameters that may be important for buffering, picture output timing, rendering, and resource reservation. There are three NAL units specified in H.264/AVC to carry sequence parameter sets: the sequence parameter set NAL unit (having NAL unit type equal to 7) containing all the data for H.264/AVC VCL NAL units in the sequence, the sequence parameter set extension NAL unit containing the data for auxiliary coded pictures, and the subset sequence parameter set for MVC and SVC VCL NAL units. The syntax structure included in the sequence parameter set NAL unit of H.264/AVC (having NAL unit type equal to 7) may be referred to as sequence parameter set data, seq_parameter_set_data, or base SPS data. For example, profile, level, the picture size and the chroma sampling format may be included in the base SPS data. A picture parameter set contains such parameters that are likely to be unchanged in several coded pictures.

In a draft HEVC, there is also another type of a parameter set, here referred to as an Adaptation Parameter Set (APS), which includes parameters that are likely to be unchanged in several coded slices but may change for example for each picture or each few pictures. In a draft HEVC, the APS syntax structure includes parameters or syntax elements related to quantization matrices (QM), sample adaptive offset (SAO), adaptive loop filtering (ALF), and deblocking filtering. In a draft HEVC, an APS is a NAL unit and coded without reference or prediction from any other NAL unit. An identifier, referred to as aps_id syntax element, is included in APS NAL unit, and included and used in the slice header to refer to a particular APS.

A draft HEVC standard also includes yet another type of a parameter set, called a video parameter set (VPS), which was proposed for example in document JCTVC-H0388 (http://phenix.int-evry.fr/jct/doc_end_user/documents/8_San%20Jose/wg11/JCTVC-H0388-v4.zip). A video parameter set RBSP may include parameters that can be referred to by one or more sequence parameter set RBSPs.

The relationship and hierarchy between VPS, SPS, and PPS may be described as follows. VPS resides one level above SPS in the parameter set hierarchy and in the context of scalability and/or 3DV. VPS may include parameters that are common for all slices across all (scalability or view) layers in the entire coded video sequence. SPS includes the parameters that are common for all slices in a particular (scalability or view) layer in the entire coded video sequence, and may be shared by multiple (scalability or view) layers. PPS includes the parameters that are common for all slices in a particular layer representation (the representation of one scalability or view layer in one access unit) and are likely to be shared by all slices in multiple layer representations.

In a draft HEVC standard, the syntax of VPS is specified as follows:

| video_parameter_set_rbsp() { | Descriptor |
|---|---|
| **video_parameter_set_id** | u(4) |
| **vps_temporal_id_nesting_flag** | u(1) |
| **vps_reserved_zero_2bits** | u(2) |
| **vps_reserved_zero_6bits** | u(6) |
| **vps_max_sub_layers_minus1** | u(3) |
| profile_and_level(1, vps _max_sub_layers_minus1) | |
| **vps_reserved_zero_12bits** | u(12) |
| for(i = 0; i <= vps_max_sub_layers__minus1; i++) { | |
| **vps_max_dec_pic_buffering[i]** | ue(v) |
| **vps_max_num_reorder_pics[i]** | ue(v) |

(continued)

| video_parameter_set_rbsp() { | Descriptor |
|---|---|
| **vps_max_latency_increase[i]** | ue(v) |
| } | |
| **vps_num_hrd_parameters** | ue(v) |
| for(i = 0; i < vps_num_hrd_parameters; i++) { | |
| if(i > 0) | |
| op_point(**i**) | |
| hrd_parameters( i = = 0, vps _max_sub_layers_minus1 ) | |
| } | |
| **vps_extension_flag** | u(1) |
| if(vps_extension_flag) | |
| while(more_rbsp_data()) | |
| **vps_extension_data_flag** | u(1) |
| } | |
| rbsp_trailing_bits() | |
| } | |

In a draft HEVC standard, the semantics of some syntax elements of the VPS may be specified as follows: video_parameter_set_id identifies a video parameter set. The syntax element vps_temporal_id_nesting_flag can be used to indicate that temporal up-switching, i.e. switching from decoding of up to a specific TemporalId tIdN to decoding up to a TemporalId tIdM that is greater than tIdN, is always possible. vps_max_sub_layers_minus1 plus 1 specifies the maximum number of temporal sub-layers that may be present in the bitstream. It is anticipated that in a future extension of the HEVC standard vps_reserved_zero_12bits specifies the byte offset of the next set of fixed-length coded information in the video parameter set NAL unit, starting from the beginning of the NAL unit. In the anticipated future extension, video parameter set information for non-base layer or view starts from a byte-aligned position of the video parameter set NAL unit, with fixed-length coded information that is essential for session negotiation and/or capability exchange. vps_max_dec_pic_buffering[i] specifies the required size of the decoded picture buffer in units of picture storage buffers when HighestTid is equal to i. vps_max_num_reorder_pics[i] indicates the maximum allowed number of pictures preceding any picture in decoding order and succeeding that picture in output order when HighestTid is equal to i. vps_max_latency_increase[i] not equal to 0 is used to compute the value of MaxLatencyPictures[i] as specified by setting MaxLatencyPictures[i] to vps_max_num_reorder_pics[i] + vps_max_latency_increase[**i**]. When vps_max_latency_increase[i] is not equal to 0, the value of MaxLatencyPictures[i] specifies the maximum number of pictures that can precede any picture in the coded video sequence in output order and follow that picture in decoding order when HighestTid is equal to i. When vps_max_latency_increase[i] is equal to 0, no corresponding limit is expressed. vps_num_hrd_parameters specifies the number of hrd_parameters() syntax structures present in the video parameter set RBSP.

VPS may provide information about the dependency relationships of the layers in a bitstream, as well as many other information that are applicable to all slices across all (scalability or view) layers in the entire coded video sequence. In a scalable extension of HEVC, VPS may for example include a mapping of the LayerId value derived from the NAL unit header to one or more scalability dimension values, for example correspond to dependency_id, quality_id, view_id, and depth flag for the layer defined similarly to SVC and MVC. VPS may include profile and level information for one or more layers as well as the profile and/or level for one or more temporal sub-layers (consisting of VCL NAL units at and below certain TemporalId values) of a layer representation.

For example, in document JCTVC-J1007 the following syntax structure for VPS in HEVC scalable extension has been proposed:

| video_parameter_set_rbsp( ) { | Descriptor |
|---|---|
| **video_parameter_set_id** | u(4) |

(continued)

| video_parameter_set_rbsp( ) { | Descriptor |
|---|---|
| **vps_temporal_id_nesting_flag** | u(1) |
| **reserved_zero_2bits** | u(2) |
| **max_num_layers_minus1** //reserved_zero_6bits in the base spec | u(6) |
| **vps_max_sub_layers_minus1** | u(3) |
| profile_level( 1, vps_max_sub_layers_minus1 ) | |
| **next_essential_info_byte_offset**//reserved_zero_12bits in the base spec | u(12) |
| for( i = 0; i <= vps_max_sub_layers_minus1; i++ ) { | |
| **vps_max_dec_pic_buffering[** i ] | ue(v) |
| **vps_max_num_reorder_pics[** i ] | ue(v) |
| **vps_max_latency_increase[** i **]** | ue(v) |
| } | |
| **num_hrd_parameters** | ue(v) |
| for( i = 0; i < num_hrd_parameters; i++ ) { | |
| if( i > 0 ) | |
| op_point( i ) | |
| hrd_parameters( i = = 0, vps_max_sub_layers_minus1 ) | |
| } | |
| **bit_equal_to_one** | u(1) |
| vps_extension( ) | |
| **vps_extension_flag** | u(1) |
| if( vps_extension_flag ) | |
| while( more_rbsp_data( ) ) | |
| **vps_extension_data_flag** | u(1) |
| rbsp_trailing_bits( ) | |
| } | |

The semantics of the additional syntax elements (compared to the one presented earlier) may be specified as follows: max_num_layers_minus1 plus 1 specifies the maximum number of layers in the coded video sequences referring to the video parameter set. next_essential_info_byte_offset specifies the byte offset of the next set of fixed-length coded information in the video parameter set NAL unit, starting from the beginning of the NAL unit. The vps_extension syntax structure may be used for example for providing information about the dependency relationships of the layers.

The op_point syntax structure may specify an operation point by listing layer id values decoded in the operation point. For example the following syntax structure may be used:

| op_point(opIdx) { | **Descriptor** |
|---|---|
| **op_num_layer_id_values_minus1**[opIdx] | ue(v) |
| for(i = 0; i <= op_num_layer_id_values_minus1; i++) | |
| **op_layer_id**[opIdx][i] | u(6) |
| } | |

The vps_extension syntax structure or a similar syntax structure may be specified for example as follows:

| vps_extension() { | Descriptor |
|---|---|
| while(!byte_aligned() ) | |
| **vps_extension_byte_alignment_reserved_one_bit** | u(1) |
| // layer specific information | |
| for(i = 1; i <= vps_max_layers_minus1; i++) { | |
| // mapping of layer ID to scalability dimension IDs | |
| **num_dimensions_minus1**[i] | u(4) |
| for(j = 0; j <= num_dimensions_minus1; j++) { | |
| **dimension_type**[i][j] | u(4) |
| **dimension_id**[i][j] | u(8) |
| } | |
| // layer dependency | |
| **num_direct_ref_layers**[i] | u(6) |
| for(j = 0; j < num_direct_ref_layers[i]; j++) | |
| **ref_layer_id**[i][j] | u(6) |
| } | |
| } | |

The semantics of some syntax elements of the presented vps_extension syntax structure or similar may be specified for example as follows. num_dimensions_minus1[i] plus 1 specifies the number of scalability dimension types and identifiers signalled for the i-th layer. A scalability dimension types may include for example but are not limited to the following: view, spatial, quality (which may be further categorized e.g. to coarse, medium, and fine granularity), depth/texture. **dimension_type**[i][j] specifies the j-th scalability dimension type of the i-th layer, which has layer_id equal to i, as specified in the following table

| dimension_type[i][j] | dimension_id[i][j] |
|---|---|
| 0 | view order idx |
| 1 | depth flag |
| 2 | dependency ID |
| 3 | quality ID |
| 4..15 | reserved |

dimension_id[i][j] specifies the identifier value of the j-th scalability dimension type of the i-th layer. When not present, the value of dimension_id[i][j] may be inferred to be equal to 0. num_direct_ref_layers[i] specifies the number of layers the i-th layer directly depends on. A first layer may be defined to directly depend on a second layer, when reconstructed/decoded sample values of the second layer, syntax element values of the second layer and/or values of variables derived from the syntax element values of the second layer are used in the decoding process of the first layer. ref_layer_id[i][j] identifies the j-th layer the i-th layer directly depends on.

While an example of providing information about the dependency relationships of the layers in a bitstream was provided, it needs to be understood that other approaches for describing or indicating dependency or prediction relationships exist. For example, the 6-bit layer_id (i.e., the reserved_zero_6bits in a draft HEVC base specification) in the NAL unit header may be partitioned into specific scalability dimension identifiers (e.g. view_order_index, depth_flag, dependency_id and quality_id) and the partitioning method and/or the bit count for each scalability dimension identifier may be indicated in the video parameter set.

H.264/AVC and HEVC syntax allows many instances of parameter sets, and each instance is identified with a unique identifier. In order to limit the memory usage needed for parameter sets, the value range for parameter set identifiers has been limited. In H.264/AVC and a draft HEVC standard, each slice header includes the identifier of the picture parameter set that is active for the decoding of the picture that contains the slice, and each picture parameter set contains the identifier of the active sequence parameter set. In a HEVC standard, a slice header additionally contains an APS identifier. Consequently, the transmission of picture and sequence parameter sets does not have to be accurately synchronized with the transmission of slices. Instead, it is sufficient that the active sequence and picture parameter sets are received at any moment before they are referenced, which allows transmission of parameter sets "out-of-band" using a more reliable transmission mechanism compared to the protocols used for the slice data. For example, parameter sets can be included as a parameter in the session description for Real-time Transport Protocol (RTP) sessions. If parameter sets are transmitted in-band, they can be repeated to improve error robustness.

A parameter set may be activated by a reference from a slice or from another active parameter set or in some cases from another syntax structure such as a buffering period SEI message. In the following, non-limiting examples of activation of parameter sets in a draft HEVC standard are given.

Each adaptation parameter set RBSP is initially considered not active at the start of the operation of the decoding process. At most one adaptation parameter set RBSP is considered active at any given moment during the operation of the decoding process, and the activation of any particular adaptation parameter set RBSP results in the deactivation of the previously-active adaptation parameter set RBSP (if any).

When an adaptation parameter set RBSP (with a particular value of aps_id) is not active and it is referred to by a coded slice NAL unit (using that value of aps_id), it is activated. This adaptation parameter set RBSP is called the active adaptation parameter set RBSP until it is deactivated by the activation of another adaptation parameter set RBSP. An adaptation parameter set RBSP, with that particular value of aps_id, is available to the decoding process prior to its activation, included in at least one access unit with temporal_id equal to or less than the temporal_id of the adaptation parameter set NAL unit, unless the adaptation parameter set is provided through external means.

Each picture parameter set RBSP is initially considered not active at the start of the operation of the decoding process. At most one picture parameter set RBSP is considered active at any given moment during the operation of the decoding process, and the activation of any particular picture parameter set RBSP results in the deactivation of the previously-active picture parameter set RBSP (if any).

When a picture parameter set RBSP (with a particular value of pic_parameter_set_id) is not active and it is referred to by a coded slice NAL unit or coded slice data partition A NAL unit (using that value of pic_parameter_set_id), it is activated. This picture parameter set RBSP is called the active picture parameter set RBSP until it is deactivated by the activation of another picture parameter set RBSP. A picture parameter set RBSP, with that particular value of pic_parameter_set_id, is available to the decoding process prior to its activation, included in at least one access unit with temporal_id equal to or less than the temporal_id of the picture parameter set NAL unit, unless the picture parameter set is provided through external means.

Each sequence parameter set RBSP is initially considered not active at the start of the operation of the decoding process. At most one sequence parameter set RBSP is considered active at any given moment during the operation of the decoding process, and the activation of any particular sequence parameter set RBSP results in the deactivation of the previously-active sequence parameter set RBSP (if any).

When a sequence parameter set RBSP (with a particular value of seq_parameter_set id) is not already active and it is referred to by activation of a picture parameter set RBSP (using that value of seq_parameter set id) or is referred to by an SEI NAL unit containing a buffering period SEI message (using that value of seq_parameter_set id), it is activated. This sequence parameter set RBSP is called the active sequence parameter set RBSP until it is deactivated by the activation of another sequence parameter set RBSP. A sequence parameter set RBSP, with that particular value of seq_parameter_set_id is available to the decoding process prior to its activation, included in at least one access unit with temporal_id equal to 0, unless the sequence parameter set is provided through external means. An activated sequence parameter set RBSP remains active for the entire coded video sequence.

Each video parameter set RBSP is initially considered not active at the start of the operation of the decoding process. At most one video parameter set RBSP is considered active at any given moment during the operation of the decoding process, and the activation of any particular video parameter set RBSP results in the deactivation of the previously-active video parameter set RBSP (if any).

When a video parameter set RBSP (with a particular value of video_parameter_set_id) is not already active and it is referred to by activation of a sequence parameter set RBSP (using that value of video_parameter_set_id), it is activated. This video parameter set RBSP is called the active video parameter set RBSP until it is deactivated by the activation of another video parameter set RBSP. A video parameter set RBSP, with that particular value of video_parameter_set_id is available to the decoding process prior to its activation, included in at least one access unit with temporal_id equal to 0, unless the video parameter set is provided through external means. An activated video parameter set RBSP remains active for the entire coded video sequence.

During operation of the decoding process in a draft HEVC standard, the values of parameters of the active video parameter set, the active sequence parameter set, the active picture parameter set RBSP and the active adaptation parameter set RBSP are considered in effect. For interpretation of SEI messages, the values of the active video parameter set, the active sequence parameter set, the active picture parameter set RBSP and the active adaptation parameter set RBSP for the operation of the decoding process for the VCL NAL units of the coded picture in the same access unit are considered in effect unless otherwise specified in the SEI message semantics.

A SEI NAL unit may contain one or more SEI messages, which are not required for the decoding of output pictures but may assist in related processes, such as picture output timing, rendering, error detection, error concealment, and resource reservation. Several SEI messages are specified in H.264/AVC and HEVC, and the user data SEI messages enable organizations and companies to specify SEI messages for their own use. H.264/AVC and HEVC contain the syntax and semantics for the specified SEI messages but no process for handling the messages in the recipient is defined. Consequently, encoders are required to follow the H.264/AVC standard or the HEVC standard when they create SEI messages, and decoders conforming to the H.264/AVC standard or the HEVC standard, respectively, are not required to process SEI messages for output order conformance. One of the reasons to include the syntax and semantics of SEI messages in H.264/AVC and HEVC is to allow different system specifications to interpret the supplemental information identically and hence interoperate. It is intended that system specifications can require the use of particular SEI messages both in the encoding end and in the decoding end, and additionally the process for handling particular SEI messages in the recipient can be specified.

A coded picture is a coded representation of a picture. A coded picture in H.264/AVC comprises the VCL NAL units that are required for the decoding of the picture. In H.264/AVC, a coded picture can be a primary coded picture or a redundant coded picture. A primary coded picture is used in the decoding process of valid bitstreams, whereas a redundant coded picture is a redundant representation that should only be decoded when the primary coded picture cannot be successfully decoded. In a draft HEVC, no redundant coded picture has been specified.

In H.264/AVC, an access unit comprises a primary coded picture and those NAL units that are associated with it. In H.264/AVC, an access unit is defined as a set of NAL units that are consecutive in decoding order and contain exactly one primary coded picture. In H.264/AVC, in addition to the primary coded picture, an access unit may also contain one or more redundant coded pictures, one auxiliary coded picture, or other NAL units not containing slices or slice data partitions of a coded picture.

In a draft HEVC standard, an access unit is defined as a set of NAL units that are consecutive in decoding order and contain exactly one coded picture. In a draft HEVC standard, in addition to the coded slice NAL units of the coded picture, the access unit may also contain other NAL units not containing slices of the coded picture.

In H.264/AVC and a draft HEVC standard, the decoding of an access unit results in a decoded picture.

In H.264/AVC, the appearance order of NAL units within an access unit is constrained as follows. An optional access unit delimiter NAL unit may indicate the start of an access unit. It is followed by zero or more SEI NAL units. The coded slices of the primary coded picture appear next. In H.264/AVC, the coded slice of the primary coded picture may be followed by coded slices for zero or more redundant coded pictures. A redundant coded picture is a coded representation of a picture or a part of a picture. A redundant coded picture may be decoded if the primary coded picture is not received by the decoder for example due to a loss in transmission or a corruption in physical storage medium.

In H.264/AVC, an access unit may also include an auxiliary coded picture, which is a picture that supplements the primary coded picture and may be used for example in the display process. An auxiliary coded picture may for example be used as an alpha channel or alpha plane specifying the transparency level of the samples in the decoded pictures. An alpha channel or plane may be used in a layered composition or rendering system, where the output picture is formed by overlaying pictures being at least partly transparent on top of each other. An auxiliary coded picture has the same syntactic and semantic restrictions as a monochrome redundant coded picture. In H.264/AVC, an auxiliary coded picture contains the same number of macroblocks as the primary coded picture.

In H.264/AVC, a coded video sequence is defined to be a sequence of consecutive access units in decoding order from an IDR access unit, inclusive, to the next IDR access unit, exclusive, or to the end of the bitstream, whichever appears earlier. In a draft HEVC standard, a coded video sequence is defined to be a sequence of access units that consists, in decoding order, of a CRA access unit that is the first access unit in the bitstream, an IDR access unit or a BLA access unit, followed by zero or more non-IDR and non-BLA access units including all subsequent access units up to but not including any subsequent IDR or BLA access unit.

A group of pictures (GOP) and its characteristics may be defined as follows. A GOP can be decoded regardless of whether any previous pictures were decoded. An open GOP is such a group of pictures in which pictures preceding the initial intra picture in output order might not be correctly decodable when the decoding starts from the initial intra picture of the open GOP. In other words, pictures of an open GOP may refer (in inter prediction) to pictures belonging to a previous GOP. An H.264/AVC decoder can recognize an intra picture starting an open GOP from the recovery point SEI message in an H.264/AVC bitstream. An HEVC decoder can recognize an intra picture starting an open GOP, because a specific NAL unit type, CRA NAL unit type, is used for its coded slices. A closed GOP is such a group of pictures in which all pictures can be correctly decoded when the decoding starts from the initial intra picture of the closed GOP. In other words, no picture in a closed GOP refers to any pictures in previous GOPs. In H.264/AVC and HEVC, a closed GOP starts from an IDR access unit. In HEVC a closed GOP may also start from a BLA_W_DLP or a BLA_N_LP picture. As a result, closed GOP structure has more error resilience potential in comparison to the open GOP structure, however at the cost of possible reduction in the compression efficiency. Open GOP coding structure is potentially more efficient in the compression, due to a larger flexibility in selection of reference pictures.

A Structure of Pictures (SOP) may be defined as one or more coded pictures consecutive in decoding order, in which the first coded picture in decoding order is a reference picture at the lowest temporal sub-layer and no coded picture except potentially the first coded picture in decoding order is a RAP picture. Any picture in the previous SOP has a smaller decoding order than any picture in the current SOP and any picture in the next SOP has a larger decoding order than any picture in the current SOP. The term group of pictures (GOP) may sometimes be used interchangeably with the term SOP and having the same semantics as the semantics of SOP rather than the semantics of closed or open GOP as described above.

A draft HEVC standard specifies the syntax and semantics of the SOP description SEI message, which describes the structure of the bitstream through reference picture sets. The knowledge of the temporal and inter prediction structure may be helpful for example for a gateway, which can use the SOP information in bit rate adaptation to determine a set of inter-related pictures that can be dropped without affecting the decoding of the forwarded bitstream. Such bitstream trimming can have a finer granularity than the sub-bitstream extraction based on TemporalId and can therefore be more suitable for subtle temporary bit rate adaptation. When present, the SOP description SEI message resides in the first access unit of a SOP according to a draft HEVC standard. The SEI message provides the following information for each picture in the SOP: an indication whether the picture is a reference or a non-reference picture, the TemporalId value of the picture, the short-term RPS index used by the picture, and the picture order count relative to the first picture of the SOP. These pieces of information represent the temporal structure and the inter prediction hierarchy of the SOP.

There may be video coding schemes in which the structure for structures of pictures (SOP), groups of pictures (GOP), sequences of SOPs (SOSOP), sequences of GOPs (SOGOP), and/or coded video sequences may be encoded into a bitstream and may be used in decoding or other processes.

There may be video coding schemes in which each picture in a SOP description or a GOP description may be characterized by a set of syntax elements or structures, including but not limited to for example the following:

- nal_ref_flag or nal_ref_idc of the picture or any other similar syntax element indicating if a picture is a reference picture or a non-reference picture,
- temporal_id or other temporal layer identifier of the picture,
- any other scalability identifier of the picture such as spatial or SNR layer number, e.g. dependency_id and quality_id of H.264/AVC, view identifier of a multiview sequence,
- an identifier identifying a type of the coded picture for example being a texture picture, a depth picture, a redundant texture picture, an auxiliary picture or some other type of a picture,
- an identifier identifying the coding mode used for the coded picture, for example being indicative of an intra-coded picture, inter-coded picture with uni-prediction, and inter-coded picture with bi-prediction,
- picture order count information, such as picture order count difference relative to a certain other picture, or least significant bits of the POC value for the picture,
- reference picture set for the picture,
- reference picture list modification for the picture,
- reference picture list modification for the picture,
- decoded reference picture marking for the picture,
- any other syntax elements or information that remains unchanged for the picture.

There may be video coding schemes in which syntax structures, such as the used reference picture set, for the picture may be included either in the SOP description or the GOP description, or an index or other identifier of the syntax structure may be included in the SOP description or the GOP description.

There may be video coding schemes in which pictures in a SOP description or a GOP description may be listed in their decoding or bitstream order.

There may be video coding schemes in which SOP descriptions may be collected into a sequence-of-SOPs (SOSOP), also referred to as SOP sequences, which may have their own dedicated syntax structure. A single SOP may be included multiple times in a SOSOP and many different SOPs may be included in a SOSOP. A SOSOP may also include other SOSOPs.

There may be video coding schemes in which a GOP description may be given as a syntax structure that includes one or more of the following: a specified list of SOPs, a specified list of SOSOPs, a specified sequence of pictures. SOPs and SOSOPs may be identified in a GOP description using an identifier or they may be included in a GOP description. A list of SOPs or SOSOPs may contain a number of list items, where each list item may contain a repetition count for the SOP or SOSOP and may also identify or include the SOP or SOSOP corresponding to the list item.

There may be video coding schemes in which GOP descriptions may be collected into a sequence-of-GOPs (SOGOP), also referred to as GOP sequences, which may have their own dedicated syntax structure. A single GOP may be included multiple times in a SOGOP and many different GOPs may be included in a SOGOP. A SOGOP may also include other SOGOPs.

There may be video coding schemes in which SOP descriptions, SOSOP descriptions, GOP descriptions, or SOGOP descriptions may be included by reference in a coded video sequence description. A coded video sequence description may include a number of entries, each of which may specify that a certain SOP, SOSOP, GOP or SOGOP description to be repeated a specified number of times.

There may be video coding schemes in which a coded video sequence description may be inferred to start with an IDR picture that needs not be included in any SOP, SOSOP, GOP or SOGOP description.

There may be video coding schemes in which SOP, SOSOP, GOP, SOGOP, and coded video sequence descriptions may be included for example in a sequence parameter set syntax structure, sequence header, supplemental enhancement information (SEI) message, or alike. Different descriptions need not be included in the same syntax structure. For example, SOP descriptions may be provided in the sequence parameter set, while a coded video sequence description may be provided in a SEI message.

There may be video coding schemes in which a slice header may include an index identifying the SOP and/or GOP where the current picture belongs to and an order number identifying the picture within the SOP and/or GOP. The order number may use a definite or signaled numbering scheme. For example, the pictures within the SOP may be indexed starting from 0 and the index may be incremented by 1 for each picture in decoding order. In another example, an order number is qualified by the temporal_id and/or nal_ref_flag values so that the order number may start from 0 and be incremented by 1 among those pictures in the SOP and/or GOP that share the same values of temporal_id and/or nal_ref_flag.

Motion-compensated prediction / inter prediction can be constrained by the encoder in a manner that allows temporal layer switching at each picture, which may be referred to as temporal nesting or temporal id nesting. The constraint of temporal nesting may be expressed as follows: for each access unit auA with temporal id equal to tIdA, an access unit auB with temporal_id equal to tIdB and tIdB less than or equal to tIdA is constrained so that it is not referenced by inter prediction when there exists an access unit auC with temporal_id equal to tIdC and tIdC less than tIdB, which follows the access unit auB and precedes the access unit auA in decoding order. The encoder may indicate, for example with a flag included in a video parameter set or any other syntax structure, that the bitstream or a certain layer, such as a certain dependency representation, is encoded in a manner that fulfills the temporal nesting constraint.

The bitstream syntax of H.264/AVC and HEVC indicates whether a particular picture is a reference picture for inter prediction of any other picture. Pictures of any coding type (I, P, B) can be reference pictures or non-reference pictures in H.264/AVC and HEVC. In H.264/AVC, the NAL unit header indicates the type of the NAL unit and whether a coded slice contained in the NAL unit is a part of a reference picture or a non-reference picture.

Many hybrid video codecs, including H.264/AVC and HEVC, encode video information in two phases. In the first phase, pixel or sample values in a certain picture area or "block" are predicted. These pixel or sample values can be predicted, for example, by motion compensation mechanisms, which involve finding and indicating an area in one of the previously encoded video frames that corresponds closely to the block being coded. Additionally, pixel or sample values can be predicted by spatial mechanisms which involve finding and indicating a spatial region relationship.

Prediction approaches using image information from a previously coded image can also be called as inter prediction methods which may also be referred to as temporal prediction and motion compensation. Prediction approaches using image information within the same image can also be called as intra prediction methods.

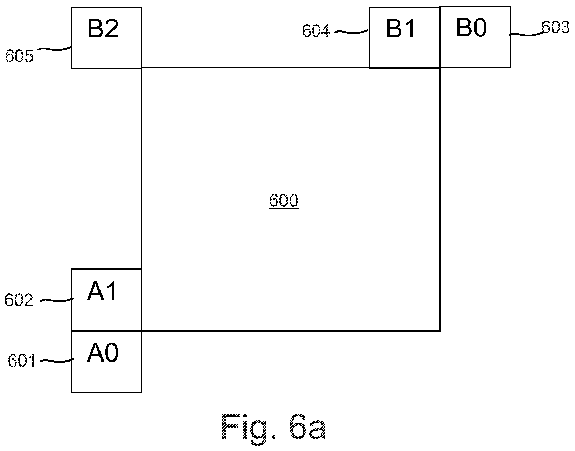

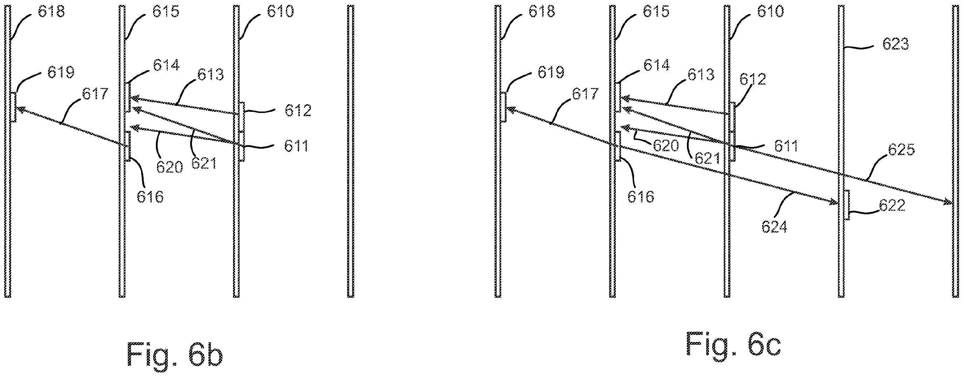

Intra prediction methods may exploit the spatial correlation within the picture. In intra prediction, a block may be coded by taking the difference between the original and the prediction signal, where the prediction signal is generated using the neighboring pixels of the block. In HEVC, there exist 35 different intra prediction modes. 33 out of these 35 modes are called angular prediction, and they are used to model the different directional structures efficiently. The remaining two modes are called DC and PLANAR modes, and those are used to code the smooth areas within the picture more efficiently. Figure 6 illustrates the angular intra prediction modes.

The intra prediction mode of a block is correlated with the modes of its neighbors. In order to exploit this correlation, a set of most probable modes for a given coded block may be first defined. The most probable modes are derived with respect to the modes of the neighboring blocks. If the mode of the current block is one of the most probable modes, then the index of the mode within the most probable mode list is signaled. Otherwise, the index in the remaining intra prediction modes is signaled.

The second phase is one of coding the error between the predicted block of pixels or samples and the original block of pixels or samples. This may be accomplished by transforming the difference in pixel or sample values using a specified transform. This transform may be a Discrete Cosine Transform (DCT) or a variant thereof. After transforming the difference, the transformed difference is quantized and entropy encoded.

By varying the fidelity of the quantization process, the encoder can control the balance between the accuracy of the pixel or sample representation (i.e. the visual quality of the picture) and the size of the resulting encoded video representation (i.e. the file size or transmission bit rate).

The decoder reconstructs the output video by applying a prediction mechanism similar to that used by the encoder in order to form a predicted representation of the pixel or sample blocks (using the motion or spatial information created by the encoder and stored in the compressed representation of the image) and prediction error decoding (the inverse operation of the prediction error coding to recover the quantized prediction error signal in the spatial domain).

After applying pixel or sample prediction and error decoding processes the decoder combines the prediction and the prediction error signals (the pixel or sample values) to form the output video frame.

The decoder (and encoder) may also apply additional filtering processes in order to improve the quality of the output video before passing it for display and/or storing as a prediction reference for the forthcoming pictures in the video sequence.

The filtering may comprise e.g. sample adaptive offset filtering and/or adaptive loop filtering. In the sample adaptive offset filtering the picture is divided into regions where a separate sample adaptive offset filtering (SAO) decision may be made for each region. The SAO information in a region is encapsulated in SAO parameters adaptation unit (SAO unit) and in HEVC, the basic unit for adapting SAO parameters is CTU (therefore an SAO region is the block covered by the corresponding CTU).

In a SAO algorithm, samples in a CTU are classified according to a set of rules and each classified set of samples are enhanced by adding offset values. The offset values are signalled in the bitstream. There are two types of offsets: 1) Band offset 2) Edge offset. For a CTU, either no SAO or band offset or edge offset is employed. The choice of whether no SAO or band or edge offset to be used may be decided by an encoder with e.g. rate distortion optimization (RDO) and signaled to a decoder.

In the band offset, the whole range of sample values is divided into 32 equal-width bands. For example, for 8-bit samples, the width of a band is 8 (=256/32). Out of the 32 bands, 4 of them are selected and different offsets may be signalled for each of the selected band. The selection decision may be made by the encoder and signalled as follows: The index of the first band is signalled and then it is inferred that following 4 bands are the chosen ones. The band offset may be useful in correcting errors in smooth regions.

In the edge offset type, first of all, the edge offset (EO) type may be chosen out of four possible types (or edge classifications) where each type is associated with a direction: 1) vertical 2) horizontal 3) 135 degrees diagonal and 4) 45 degrees diagonal. The choice of the direction may be given by the encoder and signalled to the decoder. Each type defines the location of two neighbour samples for a given sample based on the angle. Then each sample in the CTU is classified into one of five categories based on comparison of the sample value against the values of the two neighbour samples. The five categories may be described as follows:

1. Current sample value is smaller than the two neighbour samples;
2. Current sample value is smaller than one of the neighbors and equal to the other neighbor;
3. Current sample value is greater than one of the neighbors and equal to the other neighbor;
4. Current sample value is greater than two neighbour samples;
5. None of the above.

These five categories are not required to be signalled to the decoder because the classification is based on only reconstructed samples, which are available and identical in both the encoder and decoder. After each sample in an edge offset type CTU is classified as one of the five categories, an offset value for each of the first four categories is determined and signalled to the decoder. The offset for each category is added to the sample values associated with the corresponding category. Edge offsets may be effective in correcting ringing artifacts.

The SAO parameters may be signalled as interleaved in CTU data. Above the CTU, the slice header contains a syntax element specifying whether SAO is used in the slice. If SAO is used, then two additional syntax elements specify whether SAO is applied to Cb and Cr components. For each CTU, there are three options: 1) copying SAO parameters from the left CTU 2) copying SAO parameters from the above CTU or 3) signalling new SAO parameters.

The adaptive loop filter (ALF) is another method to enhance quality of the reconstructed samples. This may be achieved by filtering the sample values in the loop. The encoder may determine which regions of the pictures are to be filtered and the filter coefficients based on RDO and this information is signalled to the decoder.

In many video codecs, including H.264/AVC and HEVC, motion information is indicated by motion vectors associated with each motion compensated image block. Each of these motion vectors represents the displacement of the image block in the picture to be coded (in the encoder) or decoded (at the decoder) and the prediction source block in one of the previously coded or decoded images (or pictures). H.264/AVC and HEVC, as many other video compression standards, divide a picture into a mesh of rectangles, for each of which a similar block in one of the reference pictures is indicated for inter prediction. The location of the prediction block is coded as a motion vector that indicates the position of the prediction block relative to the block being coded.

Inter prediction process may be characterized for example using one or more of the following factors.

### The accuracy of motion vector representation.

For example, motion vectors may be of quarter-pixel accuracy, half-pixel accuracy or full-pixel accuracy and sample values in fractional-pixel positions may be obtained using a finite impulse response (FIR) filter.

### Block partitioning for inter prediction.

Many coding standards, including H.264/AVC and HEVC, allow selection of the size and shape of the block for which a motion vector is applied for motion-compensated prediction in the encoder, and indicating the selected size and shape in the bitstream so that decoders can reproduce the motion-compensated prediction done in the encoder.

### Number of reference pictures for inter prediction.

The sources of inter prediction are previously decoded pictures. Many coding standards, including H.264/AVC and HEVC, enable storage of multiple reference pictures for inter prediction and selection of the used reference picture on a block basis. For example, reference pictures may be selected on macroblock or macroblock partition basis in H.264/AVC and on PU or CU basis in HEVC. Many coding standards, such as H.264/AVC and HEVC, include syntax structures in the bitstream that enable decoders to create one or more reference picture lists. A reference picture index to a reference picture list may be used to indicate which one of the multiple reference pictures is used for inter prediction for a particular block. A reference picture index may be coded by an encoder into the bitstream is some inter coding modes or it may be derived (by an encoder and a decoder) for example using neighboring blocks in some other inter coding modes.

### Motion vector prediction.

In order to represent motion vectors efficiently in bitstreams, motion vectors may be coded differentially with respect to a block-specific predicted motion vector. In many video codecs, the predicted motion vectors are created in a predefined way, for example by calculating the median of the encoded or decoded motion vectors of the adjacent blocks. Another way to create motion vector predictions is to generate a list of candidate predictions from adjacent blocks and/or co-located blocks in temporal reference pictures and signalling the chosen candidate as the motion vector predictor. In addition to predicting the motion vector values, the reference index of previously coded/decoded picture can be predicted. The reference index may be predicted from adjacent blocks and/or co-located blocks in temporal reference picture. Differential coding of motion vectors may be disabled across slice boundaries.

### Multi-hypothesis motion-compensated prediction.

H.264/AVC and HEVC enable the use of a single prediction block in P slices (herein referred to as uni-predictive slices) or a linear combination of two motion-compensated prediction blocks for bi-predictive slices, which are also referred to as B slices. Individual blocks in B slices may be bi-predicted, uni-predicted, or intra-predicted, and individual blocks in P slices may be uni-predicted or intra-predicted. The reference pictures for a bi-predictive picture may not be limited to be the subsequent picture and the previous picture in output order, but rather any reference pictures may be used. In many coding standards, such as H.264/AVC and HEVC, one reference picture list, referred to as reference picture list 0, is constructed for P slices, and two reference picture lists, list 0 and list 1, are constructed for B slices. For B slices, when prediction in forward direction may refer to prediction from a reference picture in reference picture list 0, and prediction in backward direction may refer to prediction from a reference picture in reference picture list 1, even though the reference pictures for prediction may have any decoding or output order relation to each other or to the current picture.

### Weighted prediction.

Many coding standards use a prediction weight of 1 for prediction blocks of inter (P) pictures and 0.5 for each prediction block of a B picture (resulting into averaging). H.264/AVC allows weighted prediction for both P and B slices. In implicit weighted prediction, the weights are proportional to picture order counts, while in explicit weighted prediction, prediction weights are explicitly indicated.

In many video codecs, the prediction residual after motion compensation is first transformed with a transform kernel (like DCT) and then coded. The reason for this is that often there still exists some correlation among the residual and transform can in many cases help reduce this correlation and provide more efficient coding.

In a draft HEVC, each PU has prediction information associated with it defining what kind of a prediction is to be applied for the pixels within that PU (e.g. motion vector information for inter predicted PUs and intra prediction directionality information for intra predicted PUs). Similarly each TU is associated with information describing the prediction error decoding process for the samples within the TU (including e.g. DCT coefficient information). It may be signalled at CU level whether prediction error coding is applied or not for each CU. In the case there is no prediction error residual associated with the CU, it can be considered there are no TUs for the CU.

In some coding formats and codecs, a distinction is made between so-called short-term and long-term reference pictures. This distinction may affect some decoding processes such as implicit weighted prediction or motion vector scaling in the temporal direct mode or a similar mode. If both of the reference pictures used for the temporal direct mode are short-term reference pictures, the motion vector used in the prediction may be scaled according to the picture order count (POC) difference between the current picture and each of the reference pictures. However, if at least one reference picture for the temporal direct mode is a long-term reference picture, default scaling of the motion vector may be used, for example scaling the motion to half may be used. Similarly, if a short-term reference picture is used for implicit weighted prediction, the prediction weight may be scaled according to the POC difference between the POC of the current picture and the POC of the reference picture. However, if a long-term reference picture is used for implicit weighted prediction, a default prediction weight may be used, such as 0.5 in implicit weighted prediction for bi-predicted blocks.

Some video coding formats, such as H.264/AVC, include the frame_num syntax element, which is used for various decoding processes related to multiple reference pictures. In H.264/AVC, the value of frame_num for IDR pictures is 0. The value of frame_num for non-IDR pictures is equal to the frame_num of the previous reference picture in decoding order incremented by 1 (in modulo arithmetic, i.e., the value of frame_num wrap over to 0 after a maximum value of frame_num).

H.264/AVC and HEVC include a concept of picture order count (POC). A value of POC is derived for each picture and is non-decreasing with increasing picture position in output order. POC therefore indicates the output order of pictures. POC may be used in the decoding process for example for implicit scaling of motion vectors in the temporal direct mode of bi-predictive slices and/or for implicitly derived weights in weighted prediction and/or for reference picture list initialization and/or to identify pictures and/or for deriving motion parameters in merge mode and motion vector prediction. Furthermore, POC may be used in the verification of output order conformance. In H.264/AVC, POC is specified relative to the previous IDR picture or a picture containing a memory management control operation marking all pictures as "unused for reference".

H.264/AVC specifies the process for decoded reference picture marking in order to control the memory consumption in the decoder. The maximum number of reference pictures used for inter prediction, referred to as M, is determined in the sequence parameter set. When a reference picture is decoded, it is marked as "used for reference". If the decoding of the reference picture caused more than M pictures marked as "used for reference", at least one picture is marked as "unused for reference". There are two types of operation for decoded reference picture marking: adaptive memory control and sliding window. The operation mode for decoded reference picture marking is selected on picture basis. The adaptive memory control enables explicit signaling which pictures are marked as "unused for reference" and may also assign long-term indices to short-term reference pictures. The adaptive memory control may require the presence of memory management control operation (MMCO) parameters in the bitstream. MMCO parameters may be included in a decoded reference picture marking syntax structure. If the sliding window operation mode is in use and there are M pictures marked as "used for reference", the short-term reference picture that was the first decoded picture among those short-term reference pictures that are marked as "used for reference" is marked as "unused for reference". In other words, the sliding window operation mode results into first-in-first-out buffering operation among short-term reference pictures.

One of the memory management control operations in H.264/AVC causes all reference pictures except for the current picture to be marked as "unused for reference". An instantaneous decoding refresh (IDR) picture contains only intra-coded slices and causes a similar "reset" of reference pictures.

In a draft HEVC standard, reference picture marking syntax structures and related decoding processes are not used, but instead a reference picture set (RPS) syntax structure and decoding process are used instead for a similar purpose. A reference picture set valid or active for a picture includes all the reference pictures used as reference for the picture and all the reference pictures that are kept marked as "used for reference" for any subsequent pictures in decoding order. There are six subsets of the reference picture set, which are referred to as namely RefPicSetStCurr0, RefPicSetStCurr1, RefPicSetStFoll0, RefPicSetStFoll1, RefPicSetLtCurr, and RefPicSetLtFoll. The notation of the six subsets is as follows. "Curr" refers to reference pictures that are included in the reference picture lists of the current picture and hence may be used as inter prediction reference for the current picture. "Foll" refers to reference pictures that are not included in the reference picture lists of the current picture but may be used in subsequent pictures in decoding order as reference pictures. "St" refers to short-term reference pictures, which may generally be identified through a certain number of least significant bits of their POC value. "Lt" refers to long-term reference pictures, which are specifically identified and generally have a greater difference of POC values relative to the current picture than what can be represented by the mentioned certain number of least significant bits. "0" refers to those reference pictures that have a smaller POC value than that of the current picture. "1" refers to those reference pictures that have a greater POC value than that of the current picture. RefPicSetStCurr0, RefPicSetStCurr1, RefPicSetStFollO and RefPicSetStFoll1 are collectively referred to as the short-term subset of the reference picture set. RefPicSetLtCurr and RefPicSetLtFoll are collectively referred to as the long-term subset of the reference picture set.

In a draft HEVC standard, a reference picture set may be specified in a sequence parameter set and taken into use in the slice header through an index to the reference picture set. A reference picture set may also be specified in a slice header. A long-term subset of a reference picture set is generally specified only in a slice header, while the short-term subsets of the same reference picture set may be specified in the picture parameter set or slice header. A reference picture set may be coded independently or may be predicted from another reference picture set (known as inter-RPS prediction). When a reference picture set is independently coded, the syntax structure includes up to three loops iterating over different types of reference pictures; short-term reference pictures with lower POC value than the current picture, short-term reference pictures with higher POC value than the current picture and long-term reference pictures. Each loop entry specifies a picture to be marked as "used for reference". In general, the picture is specified with a differential POC value. The inter-RPS prediction exploits the fact that the reference picture set of the current picture can be predicted from the reference picture set of a previously decoded picture. This is because all the reference pictures of the current picture are either reference pictures of the previous picture or the previously decoded picture itself. It is only necessary to indicate which of these pictures should be reference pictures and be used for the prediction of the current picture. In both types of reference picture set coding, a flag (used_by_curr_pic_X_flag) is additionally sent for each reference picture indicating whether the reference picture is used for reference by the current picture (included in a *Curr list) or not (included in a *Foll list). Pictures that are included in the reference picture set used by the current slice are marked as "used for reference", and pictures that are not in the reference picture set used by the current slice are marked as "unused for reference". If the current picture is an IDR picture, RefPicSetStCurr0, RefPicSetStCurr1, RefPicSetStFoll0, RefPicSetStFoll1, RefPicSetLtCurr, and RefPicSetLtFoll are all set to empty.

A Decoded Picture Buffer (DPB) may be used in the encoder and/or in the decoder. There are two reasons to buffer decoded pictures, for references in inter prediction and for reordering decoded pictures into output order. As H.264/AVC and HEVC provide a great deal of flexibility for both reference picture marking and output reordering, separate buffers for reference picture buffering and output picture buffering may waste memory resources. Hence, the DPB may include a unified decoded picture buffering process for reference pictures and output reordering. A decoded picture may be removed from the DPB when it is no longer used as a reference and is not needed for output.

In many coding modes of H.264/AVC and HEVC, the reference picture for inter prediction is indicated with an index to a reference picture list. The index may be coded with variable length coding, which usually causes a smaller index to have a shorter value for the corresponding syntax element. In H.264/AVC and HEVC, two reference picture lists (reference picture list 0 and reference picture list 1) are generated for each bi-predictive (B) slice, and one reference picture list (reference picture list 0) is formed for each inter-coded (P) slice. In addition, for a B slice in a draft HEVC standard, a combined list (List C) is constructed after the final reference picture lists (List 0 and List 1) have been constructed. The combined list may be used for uni-prediction (also known as uni-directional prediction) within B slices.

A reference picture list, such as reference picture list 0 and reference picture list 1, is typically constructed in two steps: First, an initial reference picture list is generated. The initial reference picture list may be generated for example on the basis of frame_num, POC, temporal_id, or information on the prediction hierarchy such as GOP structure, or any combination thereof. Second, the initial reference picture list may be reordered by reference picture list reordering (RPLR) commands, also known as reference picture list modification syntax structure, which may be contained in slice headers. The RPLR commands indicate the pictures that are ordered to the beginning of the respective reference picture list. This second step may also be referred to as the reference picture list modification process, and the RPLR commands may be included in a reference picture list modification syntax structure. If reference picture sets are used, the reference picture list 0 may be initialized to contain RefPicSetStCurr0 first, followed by RefPicSetStCurr1, followed by RefPicSetLt-Curr. Reference picture list 1 may be initialized to contain RefPicSetStCurr1 first, followed by RefPicSetStCurr0. The initial reference picture lists may be modified through the reference picture list modification syntax structure, where pictures in the initial reference picture lists may be identified through an entry index to the list.

The combined list in a draft HEVC standard may be constructed as follows. If the modification flag for the combined list is zero, the combined list is constructed by an implicit mechanism; otherwise it is constructed by reference picture combination commands included in the bitstream. In the implicit mechanism, reference pictures in List C are mapped to reference pictures from List 0 and List 1 in an interleaved fashion starting from the first entry of List 0, followed by the first entry of List 1 and so forth. Any reference picture that has already been mapped in List C is not mapped again. In the explicit mechanism, the number of entries in List C is signaled, followed by the mapping from an entry in List 0 or List 1 to each entry of List C. In addition, when List 0 and List 1 are identical the encoder has the option of setting the ref_pic_list_combination_flag to 0 to indicate that no reference pictures from List 1 are mapped, and that List C is equivalent to List 0.

The advanced motion vector prediction (AMVP) may operate for example as follows, while other similar realizations of advanced motion vector prediction are also possible for example with different candidate position sets and candidate locations with candidate position sets. Two spatial motion vector predictors (MVPs) may be derived and a temporal motion vector predictor (TMVP) may be derived. They may be selected among the positions shown in Figure 6a: three spatial motion vector predictor candidate positions 603, 604, 605 located above the current prediction block 600 (B0, B1, B2) and two 601, 602 on the left (A0, A1). The first motion vector predictor that is available (e.g. resides in the same slice, is inter-coded, etc.) in a pre-defined order of each candidate position set, (B0, B1, B2) or (A0, A1), may be selected to represent that prediction direction (up or left) in the motion vector competition. A reference index for the temporal motion vector predictor may be indicated by the encoder in the slice header (e.g. as a collocated_ref_idx syntax element). The motion vector obtained from the co-located picture may be scaled according to the proportions of the picture order count differences of the reference picture of the temporal motion vector predictor, the co-located picture, and the current picture. Moreover, a redundancy check may be performed among the candidates to remove identical candidates, which can lead to the inclusion of a zero motion vector in the candidate list. The motion vector predictor may be indicated in the bitstream for example by indicating the direction of the spatial motion vector predictor (up or left) or the selection of the temporal motion vector predictor candidate.

In addition to predicting the motion vector values, the reference index of previously coded/decoded picture can be predicted. The reference index may be predicted from adjacent blocks and/or from co-located blocks in a temporal reference picture.

Many high efficiency video codecs such as a draft HEVC codec employ an additional motion information coding/decoding mechanism, often called merging/merge mode/process/mechanism, where all the motion information of a block/PU is predicted and used without any modification/correction. The aforementioned motion information for a PU may comprise 1) The information whether 'the PU is uni-predicted using only reference picture list0' or 'the PU is uni-predicted using only reference picture list1' or 'the PU is bi-predicted using both reference picture list0 and list1'; 2) Motion vector value corresponding to the reference picture list0; 3) Reference picture index in the reference picture list0; 4) Motion vector value corresponding to the reference picture list1; and 5) Reference picture index in the reference picture list1. Similarly, predicting the motion information is carried out using the motion information of adjacent blocks and/or co-located blocks in temporal reference pictures. A list, often called as a merge list, may be constructed by including motion prediction candidates associated with available adjacent/co-located blocks and the index of selected motion prediction candidate in the list is signalled and the motion information of the selected candidate is copied to the motion information of the current PU. When the merge mechanism is employed for a whole CU and the prediction signal for the CU is used as the reconstruction signal, i.e. prediction residual is not processed, this type of coding/decoding the CU is typically named as skip mode or merge based skip mode. In addition to the skip mode, the merge mechanism may also be employed for individual PUs (not necessarily the whole CU as in skip mode) and in this case, prediction residual may be utilized to improve prediction quality. This type of prediction mode is typically named as an inter-merge mode.

There may be a reference picture lists combination syntax structure, created into the bitstream by an encoder and decoded from the bitstream by a decoder, which indicates the contents of a combined reference picture list. The syntax structure may indicate that the reference picture list 0 and the reference picture list 1 are combined to be an additional reference picture lists combination used for the prediction units being uni-directional predicted. The syntax structure may include a flag which, when equal to a certain value, indicates that the reference picture list 0 and the reference picture list 1 are identical thus the reference picture list 0 is used as the reference picture lists combination. The syntax structure may include a list of entries, each specifying a reference picture list (list 0 or list 1) and a reference index to the specified list, where an entry specifies a reference picture to be included in the combined reference picture list.

A syntax structure for decoded reference picture marking may exist in a video coding system. For example, when the decoding of the picture has been completed, the decoded reference picture marking syntax structure, if present, may be used to adaptively mark pictures as "unused for reference" or "used for long-term reference". If the decoded reference picture marking syntax structure is not present and the number of pictures marked as "used for reference" can no longer increase, a sliding window reference picture marking may be used, which basically marks the earliest (in decoding order) decoded reference picture as unused for reference.

A coding technique known as isolated regions is based on constraining in-picture prediction and inter prediction jointly. An isolated region in a picture can contain any macroblock (or alike) locations, and a picture can contain zero or more isolated regions that do not overlap. A leftover region, if any, is the area of the picture that is not covered by any isolated region of a picture. When coding an isolated region, at least some types of in-picture prediction is disabled across its boundaries. A leftover region may be predicted from isolated regions of the same picture.

A coded isolated region can be decoded without the presence of any other isolated or leftover region of the same coded picture. It may be necessary to decode all isolated regions of a picture before the leftover region. In some implementations, an isolated region or a leftover region contains at least one slice.

Pictures, whose isolated regions are predicted from each other, may be grouped into an isolated-region picture group. An isolated region can be inter-predicted from the corresponding isolated region in other pictures within the same isolated-region picture group, whereas inter prediction from other isolated regions or outside the isolated-region picture group may be disallowed. A leftover region may be inter-predicted from any isolated region. The shape, location, and size of coupled isolated regions may evolve from picture to picture in an isolated-region picture group.

Coding of isolated regions in the H.264/AVC codec may be based on slice groups. The mapping of macroblock locations to slice groups may be specified in the picture parameter set. The H.264/AVC syntax includes syntax to code certain slice group patterns, which can be categorized into two types, static and evolving. The static slice groups stay unchanged as long as the picture parameter set is valid, whereas the evolving slice groups can change picture by picture according to the corresponding parameters in the picture parameter set and a slice group change cycle parameter in the slice header. The static slice group patterns include interleaved, checkerboard, rectangular oriented, and freeform. The evolving slice group patterns include horizontal wipe, vertical wipe, box-in, and box-out. The rectangular oriented pattern and the evolving patterns are especially suited for coding of isolated regions and are described more carefully in the following.

For a rectangular oriented slice group pattern, a desired number of rectangles are specified within the picture area. A foreground slice group includes the macroblock locations that are within the corresponding rectangle but excludes the macroblock locations that are already allocated by slice groups specified earlier. A leftover slice group contains the macroblocks that are not covered by the foreground slice groups.

An evolving slice group is specified by indicating the scan order of macroblock locations and the change rate of the size of the slice group in number of macroblocks per picture. Each coded picture is associated with a slice group change cycle parameter (conveyed in the slice header). The change cycle multiplied by the change rate indicates the number of macroblocks in the first slice group. The second slice group contains the rest of the macroblock locations.

In H.264/AVC in-picture prediction is disabled across slice group boundaries, because slice group boundaries lie in slice boundaries. Therefore each slice group is an isolated region or leftover region.

Each slice group has an identification number within a picture. Encoders can restrict the motion vectors in a way that they only refer to the decoded macroblocks belonging to slice groups having the same identification number as the slice group to be encoded. Encoders should take into account the fact that a range of source samples is needed in fractional pixel interpolation and all the source samples should be within a particular slice group.

The H.264/AVC codec includes a deblocking loop filter. Loop filtering is applied to each 4x4 block boundary, but loop filtering can be turned off by the encoder at slice boundaries. If loop filtering is turned off at slice boundaries, perfect reconstructed pictures at the decoder can be achieved when performing gradual random access. Otherwise, reconstructed pictures may be imperfect in content even after the recovery point.

The recovery point SEI message and the motion constrained slice group set SEI message of the H.264/AVC standard can be used to indicate that some slice groups are coded as isolated regions with restricted motion vectors. Decoders may utilize the information for example to achieve faster random access or to save in processing time by ignoring the leftover region.

A sub-picture concept has been proposed for HEVC e.g. in document JCTVC-I0356 < http://phenix.int-evry.fr/jct/doc_end_user/documents/9_Geneva/wg11/JCTVC-I0356-v1.zip>, which is similar to rectangular isolated regions or rectangular motion-constrained slice group sets of H.264/AVC. The sub-picture concept proposed in JCTVC-I0356 is described in the following, while it should be understood that sub-pictures may be defined otherwise similarly but not identically to what is described below. In the sub-picture concept, the picture is partitioned into predefined rectangular regions. Each sub-picture would be processed as an independent picture except that all sub-pictures constituting a picture share the same global information such as SPS, PPS and reference picture sets. Sub-pictures are similar to tiles geometrically. Their properties are as follows: They are LCU-aligned rectangular regions specified at sequence level. Sub-pictures in a picture may be scanned in sub-picture raster scan of the picture. Each sub-picture starts a new slice. If multiple tiles are present in a picture, sub-picture boundaries and tiles boundaries may be aligned. There may be no loop filtering across sub-pictures. There may be no prediction of sample value and motion info outside the sub-picture, and no sample value at a fractional sample position that is derived using one or more sample values outside the sub-picture may be used to inter predict any sample within the sub-picture. If motion vectors point to regions outside of a sub-picture, a padding process defined for picture boundaries may be applied. LCUs are scanned in raster order within sub-pictures unless a sub-picture contains more than one tile. Tiles within a sub-picture are scanned in tile raster scan of the sub-picture. Tiles cannot cross sub-picture boundaries except for the default one tile per picture case. All coding mechanisms that are available at picture level are supported at sub-picture level.

Scalable video coding refers to a coding structure where one bitstream can contain multiple representations of the content at different bitrates, resolutions and/or frame rates. In these cases the receiver can extract the desired representation depending on its characteristics (e.g. resolution that matches best with the resolution of the display of the device). Alternatively, a server or a network element can extract the portions of the bitstream to be transmitted to the receiver depending on e.g. the network characteristics or processing capabilities of the receiver.

A scalable bitstream may consist of a base layer providing the lowest quality video available and one or more enhancement layers that enhance the video quality when received and decoded together with the lower layers. An enhancement layer may enhance the temporal resolution (i.e., the frame rate), the spatial resolution, or simply the quality of the video content represented by another layer or part thereof. In order to improve coding efficiency for the enhancement layers, the coded representation of that layer may depend on the lower layers. For example, the motion and mode information of the enhancement layer can be predicted from lower layers. Similarly the pixel data of the lower layers can be used to create prediction for the enhancement layer(s).

Each scalable layer together with all its dependent layers is one representation of the video signal at a certain spatial resolution, temporal resolution and quality level. In this document, we refer to a scalable layer together with all of its dependent layers as a "scalable layer representation". The portion of a scalable bitstream corresponding to a scalable layer representation can be extracted and decoded to produce a representation of the original signal at certain fidelity.

In some cases, data in an enhancement layer can be truncated after a certain location, or even at arbitrary positions, where each truncation position may include additional data representing increasingly enhanced visual quality. Such scalability is referred to as fine-grained (granularity) scalability (FGS). FGS was included in some draft versions of the SVC standard, but it was eventually excluded from the final SVC standard. FGS is subsequently discussed in the context of some draft versions of the SVC standard. The scalability provided by those enhancement layers that cannot be truncated is referred to as coarse-grained (granularity) scalability (CGS). It collectively includes the traditional quality (SNR) scalability and spatial scalability. The SVC standard supports the so-called medium-grained scalability (MGS), where quality enhancement pictures are coded similarly to SNR scalable layer pictures but indicated by high-level syntax elements similarly to FGS layer pictures, by having the quality_id syntax element greater than 0.

SVC uses an inter-layer prediction mechanism, wherein certain information can be predicted from layers other than the currently reconstructed layer or the next lower layer. Information that could be inter-layer predicted includes intra texture, motion and residual data. Inter-layer motion prediction includes the prediction of block coding mode, header information, etc., wherein motion from the lower layer may be used for prediction of the higher layer. In case of intra coding, a prediction from surrounding macroblocks or from co-located macroblocks of lower layers is possible. These prediction techniques do not employ information from earlier coded access units and hence, are referred to as intra prediction techniques. Furthermore, residual data from lower layers can also be employed for prediction of the current layer.

SVC specifies a concept known as single-loop decoding. It is enabled by using a constrained intra texture prediction mode, whereby the inter-layer intra texture prediction can be applied to macroblocks (MBs) for which the corresponding block of the base layer is located inside intra-MBs. At the same time, those intra-MBs in the base layer use constrained intra-prediction (e.g., having the syntax element "constrained_intra_pred_flag" equal to 1). In single-loop decoding, the decoder performs motion compensation and full picture reconstruction only for the scalable layer desired for playback (called the "desired layer" or the "target layer"), thereby greatly reducing decoding complexity. All of the layers other than the desired layer do not need to be fully decoded because all or part of the data of the MBs not used for inter-layer prediction (be it inter-layer intra texture prediction, inter-layer motion prediction or inter-layer residual prediction) is not needed for reconstruction of the desired layer. A single decoding loop is needed for decoding of most pictures, while a second decoding loop is selectively applied to reconstruct the base representations, which are needed as prediction references but not for output or display, and are reconstructed only for the so called key pictures (for which "store_ref_base_pic_flag" is equal to 1).

A scalable video coding and/or decoding scheme may use multi-loop coding and/or decoding, which may be characterized as follows. In the encoding/decoding, a base layer picture may be reconstructed/decoded to be used as a motion-compensation reference picture for subsequent pictures, in coding/decoding order, within the same layer or as reference for inter-layer (or inter-view or inter-component) prediction. The reconstructed/decoded base layer picture may be stored in the DPB. An enhancement layer picture may likewise be reconstructed/decoded to be used as a motion-compensation reference picture for subsequent pictures, in coding/decoding order, within the same layer or as a reference for inter-layer (or inter-view or inter-component) prediction for higher enhancement layers, if any. In addition to reconstructed/decoded sample values, syntax element values of the base/reference layer or variables derived from the syntax element values of the base/reference layer may be used in the inter-layer/inter-component/inter-view prediction.

The scalability structure in the SVC draft is characterized by three syntax elements: "temporal_id," "dependency_id" and "quality_id." The syntax element "temporal_id" is used to indicate the temporal scalability hierarchy or, indirectly, the frame rate. A scalable layer representation comprising pictures of a smaller maximum "temporal_id" value has a smaller frame rate than a scalable layer representation comprising pictures of a greater maximum "temporal_id". A given temporal layer typically depends on the lower temporal layers (i.e., the temporal layers with smaller "temporal_id" values) but does not depend on any higher temporal layer. The syntax element "dependency_id" is used to indicate the CGS inter-layer coding dependency hierarchy (which, as mentioned earlier, includes both SNR and spatial scalability). At any temporal level location, a picture of a smaller "dependency_id" value may be used for inter-layer prediction for coding of a picture with a greater "dependency_id" value. The syntax element "quality_id" is used to indicate the quality level hierarchy of a FGS or MGS layer. At any temporal location, and with an identical "dependency_id" value, a picture with "quality_id" equal to QL uses the picture with "quality_id" equal to QL-1 for inter-layer prediction. A coded slice with "quality_id" larger than 0 may be coded as either a truncatable FGS slice or a non-truncatable MGS slice.

For simplicity, all the data units (e.g., Network Abstraction Layer units or NAL units in the SVC context) in one access unit having identical value of "dependency_id" are referred to as a dependency unit or a dependency representation. Within one dependency unit, all the data units having identical value of "quality_id" are referred to as a quality unit or layer representation.

An access unit in SVC may be defined to be a set of NAL units that are consecutive in decoding order and contain exactly one primary coded picture consisting of one or more dependency representations, which may in turn comprise one or more layer representations. In addition to the primary coded picture, an access unit may also contain one or more redundant coded pictures, one auxiliary coded picture, or other NAL units not containing slices or slice data partitions of a coded picture. The decoding of an access unit results in one decoded picture. In other words, an access unit in SVC may be considered to comprise a scalably coded representation of a picture for one output time instance.

A base representation, also known as a decoded base picture, is a decoded picture resulting from decoding the Video Coding Layer (VCL) NAL units of a dependency unit having "quality_id" equal to 0 and for which the "store_ref_base_pic_flag" is set equal to 1. An enhancement representation, also referred to as a decoded picture, results from the regular decoding process in which all the layer representations that are present for the highest dependency representation are decoded.

As mentioned earlier, CGS includes both spatial scalability and SNR scalability. Spatial scalability is initially designed to support representations of video with different resolutions. For each time instance, VCL NAL units are coded in the same access unit and these VCL NAL units can correspond to different resolutions. During the decoding, a low resolution VCL NAL unit provides the motion field and residual which can be optionally inherited by the final decoding and reconstruction of the high resolution picture. When compared to older video compression standards, SVC's spatial scalability has been generalized to enable the base layer to be a cropped and zoomed version of the enhancement layer.

MGS quality layers are indicated with "quality_id" similarly as FGS quality layers. For each dependency unit (with the same "dependency_id"), there is a layer with "quality_id" equal to 0 and there can be other layers with "quality_id" greater than 0. These layers with "quality_id" greater than 0 are either MGS layers or FGS layers, depending on whether the slices are coded as truncatable slices.

In the basic form of FGS enhancement layers, only inter-layer prediction is used. Therefore, FGS enhancement layers can be truncated freely without causing any error propagation in the decoded sequence. However, the basic form of FGS suffers from low compression efficiency. This issue arises because only low-quality pictures are used for inter prediction references. It has therefore been proposed that FGS-enhanced pictures be used as inter prediction references. However, this may cause encoding-decoding mismatch, also referred to as drift, when some FGS data are discarded.

One feature of a draft SVC standard is that the FGS NAL units can be freely dropped or truncated, and a feature of the SVCV standard is that MGS NAL units can be freely dropped (but cannot be truncated) without affecting the conformance of the bitstream. As discussed above, when those FGS or MGS data have been used for inter prediction reference during encoding, dropping or truncation of the data would result in a mismatch between the decoded pictures in the decoder side and in the encoder side. This mismatch is also referred to as drift.

To control drift due to the dropping or truncation of FGS or MGS data, SVC applied the following solution: In a certain dependency unit, a base representation (by decoding only the CGS picture with "quality_id" equal to 0 and all the dependent-on lower layer data) is stored in the decoded picture buffer. When encoding a subsequent dependency unit with the same value of "dependency_id," all of the NAL units, including FGS or MGS NAL units, use the base representation for inter prediction reference. Consequently, all drift due to dropping or truncation of FGS or MGS NAL units in an earlier access unit is stopped at this access unit. For other dependency units with the same value of "dependency_id," all of the NAL units use the decoded pictures for inter prediction reference, for high coding efficiency.

Each NAL unit includes in the NAL unit header a syntax element "use_ref_base_pic_flag." When the value of this element is equal to 1, decoding of the NAL unit uses the base representations of the reference pictures during the inter prediction process. The syntax element "store_ref_base_pic_flag" specifies whether (when equal to 1) or not (when equal to 0) to store the base representation of the current picture for future pictures to use for inter prediction.

NAL units with "quality_id" greater than 0 do not contain syntax elements related to reference picture lists construction and weighted prediction, i.e., the syntax elements "num_ref_active_lx_minus1" (x=0 or 1), the reference picture list reordering syntax table, and the weighted prediction syntax table are not present. Consequently, the MGS or FGS layers have to inherit these syntax elements from the NAL units with "quality_id" equal to 0 of the same dependency unit when needed.

In SVC, a reference picture list consists of either only base representations (when "use_ref_base_pic_flag" is equal to 1) or only decoded pictures not marked as "base representation" (when "use_ref_base_pic_flag" is equal to 0), but never both at the same time.

In an H.264/AVC bit stream, coded pictures in one coded video sequence uses the same sequence parameter set, and at any time instance during the decoding process, only one sequence parameter set is active. In SVC, coded pictures from different scalable layers may use different sequence parameter sets. If different sequence parameter sets are used, then, at any time instant during the decoding process, there may be more than one active sequence picture parameter set. In the SVC specification, the one for the top layer is denoted as the active sequence picture parameter set, while the rest are referred to as layer active sequence picture parameter sets. Any given active sequence parameter set remains unchanged throughout a coded video sequence in the layer in which the active sequence parameter set is referred to.

A scalable nesting SEI message has been specified in SVC. The scalable nesting SEI message provides a mechanism for associating SEI messages with subsets of a bitstream, such as indicated dependency representations or other scalable layers. A scalable nesting SEI message contains one or more SEI messages that are not scalable nesting SEI messages themselves. An SEI message contained in a scalable nesting SEI message is referred to as a nested SEI message. An SEI message not contained in a scalable nesting SEI message is referred to as a non-nested SEI message.

A scalable video encoder for quality scalability (also known as Signal-to-Noise or SNR) and/or spatial scalability may be implemented as follows. For a base layer, a conventional non-scalable video encoder and decoder may be used. The reconstructed/decoded pictures of the base layer are included in the reference picture buffer and/or reference picture lists for an enhancement layer. In case of spatial scalability, the reconstructed/decoded base-layer picture may be upsampled prior to its insertion into the reference picture lists for an enhancement-layer picture. The base layer decoded pictures may be inserted into a reference picture list(s) for coding/decoding of an enhancement layer picture similarly to the decoded reference pictures of the enhancement layer. Consequently, the encoder may choose a base-layer reference picture as an inter prediction reference and indicate its use with a reference picture index in the coded bitstream. The decoder decodes from the bitstream, for example from a reference picture index, that a base-layer picture is used as an inter prediction reference for the enhancement layer. When a decoded base-layer picture is used as the prediction reference for an enhancement layer, it is referred to as an inter-layer reference picture.

While the previous paragraph described a scalable video codec with two scalability layers with an enhancement layer and a base layer, it needs to be understood that the description can be generalized to any two layers in a scalability hierarchy with more than two layers. In this case, a second enhancement layer may depend on a first enhancement layer in encoding and/or decoding processes, and the first enhancement layer may therefore be regarded as the base layer for the encoding and/or decoding of the second enhancement layer. Furthermore, it needs to be understood that there may be inter-layer reference pictures from more than one layer in a reference picture buffer or reference picture lists of an enhancement layer, and each of these inter-layer reference pictures may be considered to reside in a base layer or a reference layer for the enhancement layer being encoded and/or decoded.

Frame packing refers to a method where more than one frame is packed into a single frame at the encoder side as a pre-processing step for encoding and then the frame-packed frames are encoded with a conventional 2D video coding scheme. The output frames produced by the decoder therefore contain constituent frames of that correspond to the input frames spatially packed into one frame in the encoder side. Frame packing may be used for stereoscopic video, where a pair of frames, one corresponding to the left eye/camera/view and the other corresponding to the right eye/camera/view, is packed into a single frame. Frame packing may also or alternatively be used for depth or disparity enhanced video, where one of the constituent frames represents depth or disparity information corresponding to another constituent frame containing the regular color information (luma and chroma information). The use of frame-packing may be signaled in the video bitstream, for example using the frame packing arrangement SEI message of H.264/AVC or similar. The use of frame-packing may also or alternatively be indicated over video interfaces, such as High-Definition Multimedia Interface (HDMI). The use of frame-packing may also or alternatively be indicated and/or negotiated using various capability exchange and mode negotiation protocols, such as Session Description Protocol (SDP). The decoder or renderer may extract the constituent frames from the decoded frames according to the indicated frame packing arrangement type.

In general, frame packing may for example be applied such a manner that a frame may contain constituent frames of more than two views and/or some or all constituent frames may have unequal spatial extents and/or constituent frames may be depth view components. For example, pictures of frame-packed video may contain a video-plus-depth representation, i.e. a texture frame and a depth frame, for example in a side-by-side frame packing arrangement.

Characteristics, coding properties, and alike that apply only to a subset of constituent frames in frame-packed video may be indicated for example through a specific nesting SEI message. Such a nesting SEI message may indicate which constituent frames it applies to and include one or more SEI messages that apply to the indicated constituent frames. For example, a motion-constrained tile set SEI message may indicate a set of tile indexes or addresses alike within an indicated or inferred group of pictures, such as within the coded video sequence, that form an isolated-region picture group.

As indicated earlier, MVC is an extension of H.264/AVC. Many of the definitions, concepts, syntax structures, semantics, and decoding processes of H.264/AVC apply also to MVC as such or with certain generalizations or constraints. Some definitions, concepts, syntax structures, semantics, and decoding processes of MVC are described in the following.

An access unit in MVC is defined to be a set of NAL units that are consecutive in decoding order and contain exactly one primary coded picture consisting of one or more view components. In addition to the primary coded picture, an access unit may also contain one or more redundant coded pictures, one auxiliary coded picture, or other NAL units not containing slices or slice data partitions of a coded picture. The decoding of an access unit results in one decoded picture consisting of one or more decoded view components, when decoding errors, bitstream errors or other errors which may affect the decoding do not occur. In other words, an access unit in MVC contains the view components of the views for one output time instance.

A view component in MVC is referred to as a coded representation of a view in a single access unit.

Inter-view prediction may be used in MVC and refers to prediction of a view component from decoded samples of different view components of the same access unit. In MVC, inter-view prediction is realized similarly to inter prediction. For example, inter-view reference pictures are placed in the same reference picture list(s) as reference pictures for inter prediction, and a reference index as well as a motion vector are coded or inferred similarly for inter-view and inter reference pictures.

An anchor picture is a coded picture in which all slices may reference only slices within the same access unit, i.e., inter-view prediction may be used, but no inter prediction is used, and all following coded pictures in output order do not use inter prediction from any picture prior to the coded picture in decoding order. Inter-view prediction may be used for IDR view components that are part of a non-base view. A base view in MVC is a view that has the minimum value of view order index in a coded video sequence. The base view can be decoded independently of other views and does not use inter-view prediction. The base view can be decoded by H.264/AVC decoders supporting only the single-view profiles, such as the Baseline Profile or the High Profile of H.264/AVC.

In the MVC standard, many of the sub-processes of the MVC decoding process use the respective sub-processes of the H.264/AVC standard by replacing term "picture", "frame", and "field" in the sub-process specification of the H.264/AVC standard by "view component", "frame view component", and "field view component", respectively. Likewise, terms "picture", "frame", and "field" are often used in the following to mean "view component", "frame view component", and "field view component", respectively.

As mentioned earlier, non-base views of MVC bitstreams may refer to a subset sequence parameter set NAL unit. A subset sequence parameter set for MVC includes a base SPS data structure and an sequence parameter set MVC extension data structure. In MVC, coded pictures from different views may use different sequence parameter sets. An SPS in MVC (specifically the sequence parameter set MVC extension part of the SPS in MVC) can contain the view dependency information for inter-view prediction. This may be used for example by signaling-aware media gateways to construct the view dependency tree.

In the context of multiview video coding, view order index may be defined as an index that indicates the decoding or bitstream order of view components in an access unit. In MVC, the inter-view dependency relationships are indicated in a sequence parameter set MVC extension, which is included in a sequence parameter set. According to the MVC standard, all sequence parameter set MVC extensions that are referred to by a coded video sequence are required to be identical. The following excerpt of the sequence parameter set MVC extension provides further details on the way inter-view dependency relationships are indicated in MVC.

| seq_parameter_set_mvc_extension() { | C | Descripto r |
|---|---|---|
| **num_views_minus1** | 0 | ue(v) |
| for(i = 0; i <= num_views_minus1; i++) | | |
| **view-id[i]** | 0 | ue(v) |
| for(i = 1; i <= num_views minus1; i++) { | | |
| **num_anchor_refs_l0[i]** | 0 | ue(v) |
| for(j = 0; j < num_anchor_refs_l0[i]; j++) | | |
| **anchor_ref_l0[i][j]** | 0 | ue(v) |
| **num_anchor_refs_l1[i]** | 0 | ue(v) |
| for(j = 0; j < num_anchor_refs_l1[i]; j++) | | |
| **anchor_ref_l1[i][j]** | 0 | ue(v) |

(continued)

| seq_parameter_set_mvc_extension() { | C | Descripto r |
|---|---|---|
| } | | |
| for(i = 1; i <= num_views minus1; i++) { | | |
| **num_non_anchor_refs_l0[i]** | 0 | ue(v) |
| for(j = 0; j< num_non_anchor_refs_l0[i]; j++) | | |
| **non_anchor_ref_l0[i][j]** | 0 | ue(v) |
| **num_non_anchor_refs_l1[i]** | 0 | ue(v) |
| for(j = 0; j < num_non_anchor_refs_l1[i]; j++) | | |
| **non_anchor_ref_l1[i][j]** | 0 | ue(v) |
| } | | |
| ... | | |

In MVC decoding process, the variable VOIdx may represent the view order index of the view identified by view_id (which may be obtained from the MVC NAL unit header of the coded slice being decoded) and may be set equal to the value of i for which the syntax element view_id[i] included in the referred subset sequence parameter set is equal to view id.

The semantics of the sequence parameter set MVC extension may be specified as follows. **num_views_minus1** plus 1 specifies the maximum number of coded views in the coded video sequence. The actual number of views in the coded video sequence may be less than num_views_minus1plus 1. **view_id[i]** specifies the view_id of the view with VOIdx equal to i. **num_anchor_refs_l0[i]** specifies the number of view components for inter-view prediction in the initial reference picture list RefPicListO in decoding anchor view components with VOIdx equal to i. **anchor_ref_l0[i][j]** specifies the view id of the j-th view component for inter-view prediction in the initial reference picture list RefPicListO in decoding anchor view components with VOIdx equal to i. **num_anchor_refs_l1[i]** specifies the number of view components for inter-view prediction in the initial reference picture list RefPicList1 in decoding anchor view components with VOIdx equal to i. **anchor_ref_l1[i] [j]** specifies the view_id of the j-th view component for inter-view prediction in the initial reference picture list RefPicList1 in decoding an anchor view component with VOIdx equal to i. **num_non_anchor_refs_l0[i]** specifies the number of view components for inter-view prediction in the initial reference picture list RefPicListO in decoding non-anchor view components with VOIdx equal to i. **non_anchor_ref_l0[i][j]** specifies the view_id of the j-th view component for inter-view prediction in the initial reference picture list RefPicListO in decoding non-anchor view components with VOIdx equal to i. **num_non_anchor_refs_l1[i]** specifies the number of view components for inter-view prediction in the initial reference picture list RefPicList1 in decoding non-anchor view components with VOIdx equal to i. **non_anchor_ref_l1[i][j]** specifies the view id of the j-th view component for inter-view prediction in the initial reference picture list RefPicList1 in decoding non-anchor view components with VOIdx equal to i. For any particular view with view id equal to vId1 and VOIdx equal to vOIdx1 and another view with view id equal to vId2 and VOIdx equal to vOIdx2, when vId2 is equal to the value of one of non_anchor_ref_l0[vOIdx1][j] for all j in the range of 0 to num_non_anchor_refs_l0[vOIdx1], exclusive, or one of non_anchor_ref_l1[vOIdx1][j] for all j in the range of 0 to num non_anchor_refs_l1[vOIdx1], exclusive, vId2 is also required to be equal to the value of one of anchor_ref_l0[vOIdx1][j] for all j in the range of 0 to num_anchor_refs_l0[vOIdx1], exclusive, or one of anchor_ref_l1[vOIdx1][j] for all j in the range of 0 to num anchor_refs_l1[vOIdx1], exclusive. The inter-view dependency for non-anchor view components is a subset of that for anchor view components.

In MVC, an operation point may be defined as follows: An operation point is identified by a temporal_id value representing the target temporal level and a set of view id values representing the target output views. One operation point is associated with a bitstream subset, which consists of the target output views and all other views the target output views depend on, that is derived using the sub-bitstream extraction process with tIdTarget equal to the temporal_id value and viewIdTargetList consisting of the set of view id values as inputs. More than one operation point may be associated with the same bitstream subset. When "an operation point is decoded", a bitstream subset corresponding to the operation point may be decoded and subsequently the target output views may be output.

In SVC and MVC, a prefix NAL unit may be defined as a NAL unit that immediately precedes in decoding order a VCL NAL unit for base layer/view coded slices. The NAL unit that immediately succeeds the prefix NAL unit in decoding order may be referred to as the associated NAL unit. The prefix NAL unit contains data associated with the associated NAL unit, which may be considered to be part of the associated NAL unit. The prefix NAL unit may be used to include syntax elements that affect the decoding of the base layer/view coded slices, when SVC or MVC decoding process is in use. An H.264/AVC base layer/view decoder may omit the prefix NAL unit in its decoding process.

An MVC scalable nesting SEI message has been specified in MVC. Similarly to the scalable nesting SEI message of SVC, an MVC scalable nesting SEI message contains one or more nested SEI messages which apply to indicated operation points, views, and/or temporal_id values.

In SVC and MVC, a prefix NAL unit may be defined as a NAL unit that immediately precedes in decoding order a VCL NAL unit for base layer/view coded slices. The NAL unit that immediately succeeds the prefix NAL unit in decoding order may be referred to as the associated NAL unit. The prefix NAL unit contains data associated with the associated NAL unit, which may be considered to be part of the associated NAL unit. The prefix NAL unit may be used to include syntax elements that affect the decoding of the base layer/view coded slices, when SVC or MVC decoding process is in use. An H.264/AVC base layer/view decoder may omit the prefix NAL unit in its decoding process.

In scalable multiview coding, the same bitstream may contain coded view components of multiple views and at least some coded view components may be coded using quality and/or spatial scalability.

A texture view refers to a view that represents ordinary video content, for example has been captured using an ordinary camera, and is usually suitable for rendering on a display. A texture view typically comprises pictures having three components, one luma component and two chroma components. In the following, a texture picture typically comprises all its component pictures or color components unless otherwise indicated for example with terms luma texture picture and chroma texture picture.

A depth view refers to a view that represents distance information of a texture sample from the camera sensor, disparity or parallax information between a texture sample and a respective texture sample in another view, or similar information. A depth view may comprise depth pictures (a.k.a. depth maps) having one component, similar to the luma component of texture views. A depth map is an image with per-pixel depth information or similar. For example, each sample in a depth map represents the distance of the respective texture sample or samples from the plane on which the camera lies. In other words, if the z axis is along the shooting axis of the cameras (and hence orthogonal to the plane on which the cameras lie), a sample in a depth map represents the value on the z axis. The semantics of depth map values may for example include the following:

1. Each luma sample value in a coded depth view component represents an inverse of real-world distance (Z) value, i.e. 1/Z, normalized in the dynamic range of the luma samples, such to the range of 0 to 255, inclusive, for 8-bit luma representation. The normalization may be done in a manner where the quantization 1/Z is uniform in terms of disparity.

2. Each luma sample value in a coded depth view component represents an inverse of real-world distance (Z) value, i.e. 1/Z, which is mapped to the dynamic range of the luma samples, such to the range of 0 to 255, inclusive, for 8-bit luma representation, using a mapping function f(1/Z) or table, such as a piece-wise linear mapping. In other words, depth map values result in applying the function f(1/Z).

3. Each luma sample value in a coded depth view component represents a real-world distance (Z) value normalized in the dynamic range of the luma samples, such to the range of 0 to 255, inclusive, for 8-bit luma representation.

4. Each luma sample value in a coded depth view component represents a disparity or parallax value from the present depth view to another indicated or derived depth view or view position.

While phrases such as depth view, depth view component, depth picture and depth map are used to describe various embodiments, it is to be understood that any semantics of depth map values may be used in various embodiments including but not limited to the ones described above. For example, embodiments of the invention may be applied for depth pictures where sample values indicate disparity values.

An encoding system or any other entity creating or modifying a bitstream including coded depth maps may create and include information on the semantics of depth samples and on the quantization scheme of depth samples into the bitstream. Such information on the semantics of depth samples and on the quantization scheme of depth samples may be for example included in a video parameter set structure, in a sequence parameter set structure, or in an SEI message.

Depth-enhanced video refers to texture video having one or more views associated with depth video having one or more depth views. A number of approaches may be used for representing of depth-enhanced video, including the use of video plus depth (V+D), multiview video plus depth (MVD), and layered depth video (LDV). In the video plus depth (V+D) representation, a single view of texture and the respective view of depth are represented as sequences of texture picture and depth pictures, respectively. The MVD representation contains a number of texture views and respective depth views. In the LDV representation, the texture and depth of the central view are represented conventionally, while the texture and depth of the other views are partially represented and cover only the dis-occluded areas required for correct view synthesis of intermediate views.

A texture view component may be defined as a coded representation of the texture of a view in a single access unit. A texture view component in depth-enhanced video bitstream may be coded in a manner that is compatible with a single-view texture bitstream or a multi-view texture bitstream so that a single-view or multi-view decoder can decode the texture views even if it has no capability to decode depth views. For example, an H.264/AVC decoder may decode a single texture view from a depth-enhanced H.264/AVC bitstream. A texture view component may alternatively be coded in a manner that a decoder capable of single-view or multi-view texture decoding, such H.264/AVC or MVC decoder, is not able to decode the texture view component for example because it uses depth-based coding tools. A depth view component may be defined as a coded representation of the depth of a view in a single access unit. A view component pair may be defined as a texture view component and a depth view component of the same view within the same access unit.

Depth-enhanced video may be coded in a manner where texture and depth are coded independently of each other. For example, texture views may be coded as one MVC bitstream and depth views may be coded as another MVC bitstream. Depth-enhanced video may also be coded in a manner where texture and depth are jointly coded. In a form a joint coding of texture and depth views, some decoded samples of a texture picture or data elements for decoding of a texture picture are predicted or derived from some decoded samples of a depth picture or data elements obtained in the decoding process of a depth picture. Alternatively or in addition, some decoded samples of a depth picture or data elements for decoding of a depth picture are predicted or derived from some decoded samples of a texture picture or data elements obtained in the decoding process of a texture picture. In another option, coded video data of texture and coded video data of depth are not predicted from each other or one is not coded/decoded on the basis of the other one, but coded texture and depth view may be multiplexed into the same bitstream in the encoding and demultiplexed from the bitstream in the decoding. In yet another option, while coded video data of texture is not predicted from coded video data of depth in e.g. below slice layer, some of the high-level coding structures of texture views and depth views may be shared or predicted from each other. For example, a slice header of coded depth slice may be predicted from a slice header of a coded texture slice. Moreover, some of the parameter sets may be used by both coded texture views and coded depth views.

Many video encoders utilize the Lagrangian cost function to find rate-distortion optimal coding modes, for example the desired macroblock mode and associated motion vectors. This type of cost function uses a weighting factor or λ to tie together the exact or estimated image distortion due to lossy coding methods and the exact or estimated amount of information required to represent the pixel/sample values in an image area. The Lagrangian cost function may be represented by the equation:

$$C = D + \lambda R$$

where C is the Lagrangian cost to be minimised, D is the image distortion (for example, the mean-squared error between the pixel/sample values in original image block and in coded image block) with the mode and motion vectors currently considered, λ (lambda) is a Lagrangian coefficient and R is the number of bits needed to represent the required data to reconstruct the image block in the decoder (including the amount of data to represent the candidate motion vectors).

A coding standard may include a sub-bitstream extraction process, and such is specified for example in SVC, MVC, and HEVC. The sub-bitstream extraction process relates to converting a bitstream by removing NAL units to a sub-bitstream. The sub-bitstream still remains conforming to the standard. For example, in a draft HEVC standard, the bitstream created by excluding all VCL NAL units having a temporal_id greater than a selected value and including all other VCL NAL units remains conforming. In another version of the draft HEVC standard, the sub-bitstream extraction process takes a TemporalId and/or a list of LayerId values as input and derives a sub-bitstream (also known as a bitstream subset) by removing from the bitstream all NAL units with TemporalId greater than the input TemporalId value or layer_id value not among the values in the input list of LayerId values.

In a draft HEVC standard, the operation point the decoder uses may be set through variables TargetDecLayerIdSet and HighestTid as follows. The list TargetDecLayerIdSet, which specifies the set of values for layer id of VCL NAL units to be decoded, may be specified by external means, such as decoder control logic. If not specified by external means, the list TargetDecLayerIdSet contains one value for layer_id, which is indicates the base layer (i.e. is equal to 0 in a draft HEVC standard). The variable HighestTid, which identifies the highest temporal sublayer, may be specified by external means. If not specified by external means, HighestTid is set to the highest TemporalId value that may be present in the coded video sequence or bitstream, such as the value of sps_max_sub_layers_minus1 in a draft HEVC standard. The sub-bitstream extraction process may be applied with TargetDecLayerIdSet and HighestTid as inputs and the output assigned to a bitstream referred to as BitstreamToDecode. The decoding process may operate for each coded picture in BitstreamToDecode.

Parameter set syntax structures of other types than those presented earlier have also been proposed. In the following paragraphs, some of the proposed types of parameter sets are described.

It has been proposed that at least a subset of syntax elements that have conventionally been included in a slice header are included in a GOS (Group of Slices) parameter set by an encoder. An encoder may code a GOS parameter set as a NAL unit. GOS parameter set NAL units may be included in the bitstream together with for example coded slice NAL units, but may also be carried out-of-band as described earlier in the context of other parameter sets.

The GOS parameter set syntax structure may include an identifier, which may be used when referring to a particular GOS parameter set instance for example from a slice header or another GOS parameter set. Alternatively, the GOS parameter set syntax structure does not include an identifier but an identifier may be inferred by both the encoder and decoder for example using the bitstream order of GOS parameter set syntax structures and a pre-defined numbering scheme.

The encoder and the decoder may infer the contents or the instance of GOS parameter set from other syntax structures already encoded or decoded or present in the bitstream. For example, the slice header of the texture view component of the base view may implicitly form a GOS parameter set. The encoder and decoder may infer an identifier value for such inferred GOS parameter sets. For example, the GOS parameter set formed from the slice header of the texture view component of the base view may be inferred to have identifier value equal to 0.

A GOS parameter set may be valid within a particular access unit associated with it. For example, if a GOS parameter set syntax structure is included in the NAL unit sequence for a particular access unit, where the sequence is in decoding or bitstream order, the GOS parameter set may be valid from its appearance location until the end of the access unit. Alternatively, a GOS parameter set may be valid for many access units.

The encoder may encode many GOS parameter sets for an access unit. The encoder may determine to encode a GOS parameter set if it is known, expected, or estimated that at least a subset of syntax element values in a slice header to be coded would be the same in a subsequent slice header.

A limited numbering space may be used for the GOS parameter set identifier. For example, a fixed-length code may be used and may be interpreted as an unsigned integer value of a certain range. The encoder may use a GOS parameter set identifier value for a first GOS parameter set and subsequently for a second GOS parameter set, if the first GOS parameter set is subsequently not referred to for example by any slice header or GOS parameter set. The encoder may repeat a GOS parameter set syntax structure within the bitstream for example to achieve a better robustness against transmission errors.

Syntax elements which may be included in a GOS parameter set may be conceptually collected in sets of syntax elements. A set of syntax elements for a GOS parameter set may be formed for example on one or more of the following basis:

- Syntax elements indicating a scalable layer and/or other scalability features
- Syntax elements indicating a view and/or other multiview features
- Syntax elements related to a particular component type, such as depth/disparity
- Syntax elements related to access unit identification, decoding order and/or output order and/or other syntax elements which may stay unchanged for all slices of an access unit
- Syntax elements which may stay unchanged in all slices of a view component
- Syntax elements related to reference picture list modification
- Syntax elements related to the reference picture set used
- Syntax elements related to decoding reference picture marking
- Syntax elements related to prediction weight tables for weighted prediction
- Syntax elements for controlling deblocking filtering
- Syntax elements for controlling adaptive loop filtering
- Syntax elements for controlling sample adaptive offset
- Any combination of sets above

For each syntax element set, the encoder may have one or more of the following options when coding a GOS parameter set:

- The syntax element set may be coded into a GOS parameter set syntax structure, i.e. coded syntax element values of the syntax element set may be included in the GOS parameter set syntax structure.
- The syntax element set may be included by reference into a GOS parameter set. The reference may be given as an identifier to another GOS parameter set. The encoder may use a different reference GOS parameter set for different syntax element sets.
- The syntax element set may be indicated or inferred to be absent from the GOS parameter set.

The options from which the encoder is able to choose for a particular syntax element set when coding a GOS parameter set may depend on the type of the syntax element set. For example, a syntax element set related to scalable layers may always be present in a GOS parameter set, while the set of syntax elements which may stay unchanged in all slices of a view component may not be available for inclusion by reference but may be optionally present in the GOS parameter set and the syntax elements related to reference picture list modification may be included by reference in, included as such in, or be absent from a GOS parameter set syntax structure. The encoder may encode indications in the bitstream, for example in a GOS parameter set syntax structure, which option was used in encoding. The code table and/or entropy coding may depend on the type of the syntax element set. The decoder may use, based on the type of the syntax element set being decoded, the code table and/or entropy decoding that is matched with the code table and/or entropy encoding used by the encoder.

The encoder may have multiple means to indicate the association between a syntax element set and the GOS parameter set used as the source for the values of the syntax element set. For example, the encoder may encode a loop of syntax elements where each loop entry is encoded as syntax elements indicating a GOS parameter set identifier value used as a reference and identifying the syntax element sets copied from the reference GOP parameter set. In another example, the encoder may encode a number of syntax elements, each indicating a GOS parameter set. The last GOS parameter set in the loop containing a particular syntax element set is the reference for that syntax element set in the GOS parameter set the encoder is currently encoding into the bitstream. The decoder parses the encoded GOS parameter sets from the bitstream accordingly so as to reproduce the same GOS parameter sets as the encoder.

A header parameter set (HPS) was proposed in document JCTVC-J0109 (http://phenix.int-evry.fr/jct/doc_end_user/current_document.php?id=5972). An HPS is similar to GOS parameter set. A slice header is predicted from one or more HPSs. In other words, the values of slice header syntax elements can be selectively taken from one or more HPSs. If a picture consists of only one slice, the use of HPS is optional and a slice header can be included in the coded slice NAL unit instead. Two alternative approaches of the HPS design were proposed in JCTVC-J109: a single-AU HPS, where an HPS is applicable only to the slices within the same assess unit, and a multi-AU HPS, where an HPS may be applicable to slices in multiple access units. The two proposed approaches are similar in their syntax. The main differences between the two approaches arise from the fact that the single-AU HPS design requires transmission of an HPS for each access unit, while the multi-AU HPS design allows re-use of the same HPS across multiple AUs.

A camera parameter set (CPS) can be considered to be similar to APS, GOS parameter set, and HPS, but CPS may be intended to carry only camera parameters and view synthesis prediction parameters and potentially other parameters related to the depth views or the use of depth views.

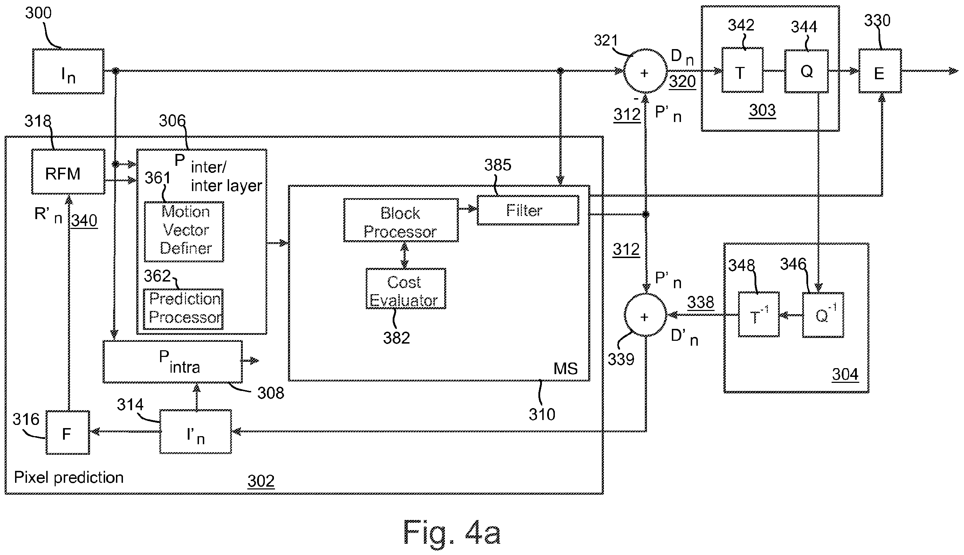

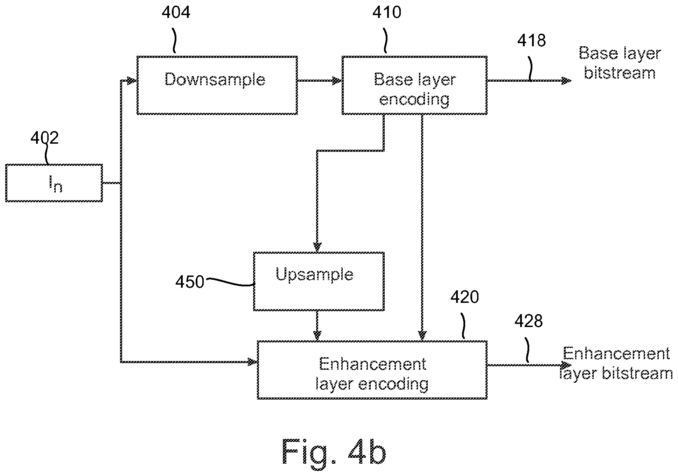

Figs. 4a and 4b show block diagrams for video encoding and decoding according to an example embodiment.

Figure 4a shows the encoder as comprising a pixel predictor 302, prediction error encoder 303 and prediction error decoder 304. Figure 4a also shows an embodiment of the pixel predictor 302 as comprising an inter-predictor 306, an intra-predictor 308, a mode selector 310, a filter 316, and a reference frame memory 318. In this embodiment the mode selector 310 comprises a block processor 381 and a cost evaluator 382. The encoder may further comprise an entropy encoder 330 for entropy encoding the bit stream.

Figure 4b depicts an embodiment of a spatial scalability encoding apparatus 400 comprising a base layer encoding element 410 and an enhancement layer encoding element 420. The base layer encoding element 410 encodes the input video signal 402 to a base layer bitstream 418 and, respectively, the enhancement layer encoding element 420 encodes the input video signal 402 to an enhancement layer bitstream 428. The spatial scalability encoding apparatus 400 may also comprise a downsampler 404 for downsampling the input video signal if the resolution of the base layer representation and the enhancement layer representation differ from each other. For example, the scaling factor between the base layer and an enhancement layer may be 1:2 wherein the resolution of the enhancement layer is twice the resolution of the base layer (in both horizontal and vertical direction).

The base layer encoding element 410 and the enhancement layer encoding element 420 may comprise similar elements with the encoder depicted in Figure 4a or they may be different from each other.

The base layer encoding element 410 encodes frames of the input video signal e.g. as follows, with reference to the encoder of Figure 4a. The pixel predictor 302 receives the image 300 to be encoded at both the inter-predictor 306 (which determines the difference between the image and a motion compensated reference frame 318) and the intra-predictor 308 (which determines a prediction for an image block based only on the already processed parts of a current frame or picture). The output of both the inter-predictor and the intra-predictor are passed to the mode selector 310. Both the inter-predictor 306 and the intra-predictor 308 may have more than one intra-prediction modes. Hence, the inter-prediction and the intra-prediction may be performed for each mode and the predicted signal may be provided to the mode selector 310. The mode selector 310 also receives a copy of the image 300.

The pixel predictor 302 receives the image 300 to be encoded at both the inter-predictor 306 (which determines the difference between the image and a motion compensated reference frame 318) and the intra-predictor 308 (which determines a prediction for an image block based only on the already processed parts of a current frame or picture). The output of both the inter-predictor and the intra-predictor are passed to the mode selector 310. Both the inter-predictor 306 and the intra-predictor 308 may have more than one intra-prediction modes. Hence, the inter-prediction and the intra-prediction may be performed for each mode and the predicted signal may be provided to the mode selector 310. The mode selector 310 also receives a copy of the image 300.

The mode selector 310 determines which encoding mode to use to encode the current block. The mode selector 310 may use cost functions or some other methods to analyze which encoding method gives the most efficient result with respect to a certain criterion or criteria. The selected criteria may include coding efficiency, processing costs and/or some other criteria. The mode selector 310 may examine the prediction for each directionality i.e. for each intra prediction mode and inter prediction mode and calculate the cost value for each intra prediction mode and inter prediction mode, or the mode selector 310 may examine only a subset of all available prediction modes in the selection of the prediction mode.

In some embodiments, the available intra prediction modes include a horizontal mode, a vertical mode, a number of diagonal modes and a DC mode. In the horizontal mode pixel values for a current block are predicted by using pixel values of the neighboring block in the horizontal direction e.g. the neighboring block on the left side of the current block. In the vertical mode pixel values for a current block are predicted by using pixel values of the neighboring block in the vertical direction e.g. the neighboring block above the current block. In the diagonal mode pixel values for a current block are predicted by using pixel values of the neighboring block in a "diagonal" direction.

In some embodiments there may be even tenths of available prediction modes, for example over 40 different prediction modes.

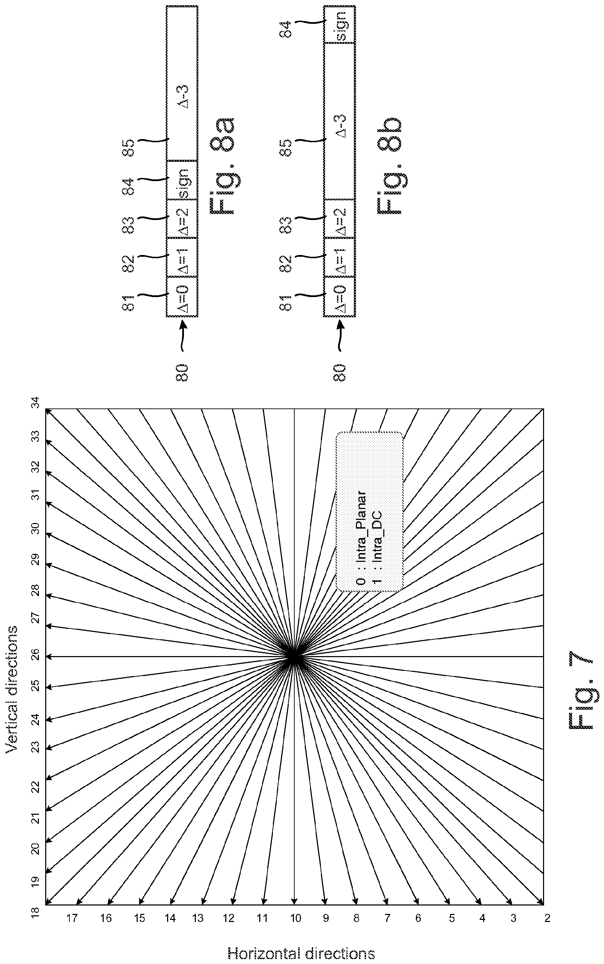

In the example of figure 7 the displacements are expressed as angles thus the term angularity can also be used to express the directionality of the intra-prediction. In this example the angularity can be between -32/32 to +32/32 i.e. -1, ..., +1 in both the horizontal and vertical direction and includes certain values within this range. These values are [-32, -26, -21, -17, -13, -9, -5, -2, 0, 2, 5, 9, 13, 17, 21, 26, 32]/32 but also other sets of angularity values can be used. These values indicate the offset between the current pixel and the pixel from which the prediction is generated or a fraction of a pixel. For example, if the angularity has the value -32/32 that would mean an angle of -45 degrees with respect to the horizontal or vertical direction. Correspondingly, 0/32 means either a horizontal or vertical direction (0 degrees in the horizontal or vertical direction) and 32/32 would mean an angle of +45 degrees with respect to the horizontal or vertical direction.

These directionalities can also be expressed as modes. In the example of Figure 7 the mode 0 corresponds with the intra planar mode, mode 1 corresponds with the intra dc mode, and modes 2 to 32 represent the different directionalities.

In some embodiments the mode selector 310 or another element of the encoder may determine to use only a subset of available intra prediction modes when the block processor 381 performs the prediction for the current block. In some embodiments there are nine different prediction modes from which one prediction mode can be selected. The prediction modes indicate the prediction directions on the basis of which the mode selector 310 may determine which pixel values of a neighboring block of the current block to use in prediction of pixel values of the current block.

The encoder may provide an indication of the subset of the selectable modes to the decoder so that the decoder is aware of the modes from which the selection has been made. In addition to the indication of the subset, the encoder may provide an indication of the selected mode to the decoder. In some example embodiments the indication of the subset of the available modes may be provided in a sequence parameter set. However, the indication of the subset need not be provided in the same bitstream than the prediction information but it can also be provided by using another bitstream or other means of communication.

When the cost has been calculated with respect to each or to a smaller set of intra prediction modes and possibly with respect to the inter prediction mode, the mode selector 310 selects one intra prediction mode or the inter prediction mode for encoding the current block. If an intra prediction mode was selected, the selected intra prediction mode includes the directionality indication which may also be indicated to a decoder.

If the mode selector 310 decides to use an inter-prediction mode it will pass the output of the inter-predictor 306 to the output of the mode selector 310. If the mode selector 310 decides to use an intra-prediction mode it will pass the output of one of the intra-predictor modes to the output of the mode selector 310.

The mode selector 310 may use, in the cost evaluator block 382, for example Lagrangian cost functions to choose between coding modes and their parameter values, such as motion vectors, reference indexes, and intra prediction direction, typically on block basis. This kind of cost function may use a weighting factor *lambda* to tie together the (exact or estimated) image distortion due to lossy coding methods and the (exact or estimated) amount of information that is required to represent the pixel values in an image area: C = D + *lambda* $\times$ R, where C is the Lagrangian cost to be minimized, D is the image distortion (e.g. Mean Squared Error) with the mode and their parameters, and R the number of bits needed to represent the required data to reconstruct the image block in the decoder (e.g. including the amount of data to represent the candidate motion vectors).

The output of the mode selector is passed to a first summing device 321. The first summing device may subtract the pixel predictor 302 output from the image 300 to produce a first prediction error signal 320 which is input to the prediction error encoder 303.

The pixel predictor 302 further receives from a preliminary reconstructor 339 the combination of the prediction representation of the image block 312 and the output 338 of the prediction error decoder 304. The preliminary reconstructed image 314 may be passed to the intra-predictor 308 and to a filter 316. The filter 316 receiving the preliminary representation may filter the preliminary representation and output a final reconstructed image 340 which may be saved in a reference frame memory 318. The reference frame memory 318 may be connected to the inter-predictor 306 to be used as the reference image against which the future image 300 is compared in inter-prediction operations. In many embodiments the reference frame memory 318 may be capable of storing more than one decoded picture, and one or more of them may be used by the inter-predictor 306 as reference pictures against which the future images 300 are compared in inter prediction operations. The reference frame memory 318 may in some cases be also referred to as the Decoded Picture Buffer.

The operation of the pixel predictor 302 may be configured to carry out any pixel prediction algorithm.

The pixel predictor 302 may also comprise a filter 316 to filter the predicted values before outputting them from the pixel predictor 302.

The filter 316 may be used to reduce various artifacts such as blocking, ringing etc. from the reference images.

After motion compensation followed by adding inverse transformed residual, a reconstructed picture may be obtained. This picture may have various artifacts such as blocking, ringing etc. In order to eliminate the artifacts, various post-processing operations may be applied. If the post-processed pictures are used as reference in the motion compensation loop, then the post-processing operations/filters are usually called loop filters. By employing loop filters, the quality of the reference pictures increases. As a result, better coding efficiency can be achieved.

One of the loop filters is a deblocking filter. The deblocking filter is available in both H.264/AVC and HEVC standards. An aim of the deblocking filter is to remove the blocking artifacts occurring in the boundaries of the blocks. This may be achieved by filtering along the block boundaries.

The filter 316 may comprise e.g. a deblocking filter, a Sample Adaptive Offset (SAO) filter and/or an Adaptive Loop Filter (ALF).

In SAO, a picture is divided into regions where a separate SAO decision is made for each region. The SAO information in a region is encapsulated in a SAO parameters adaptation unit (SAO unit) and in HEVC, the basic unit for adapting SAO parameters is CTU (therefore an SAO region is the block covered by the corresponding CTU).

In the SAO algorithm, samples in a CTU are classified according to a set of rules and each classified set of samples are enhanced by adding offset values. The offset values are signalled in the bitstream. There are two types of offsets: 1) Band offset 2) Edge offset. For a CTU, either no SAO or band offset or edge offset is employed. Choice of whether no SAO or band or edge offset to be used may be decided by the encoder with e.g. rate distortion optimization (RDO) and signaled to the decoder.

In the band offset, the whole range of sample values is in some embodiments divided into 32 equal-width bands. For example, for 8-bit samples, width of a band is 8 (=256/32). Out of 32 bands, 4 of them are selected and different offsets are signalled for each of the selected bands. The selection decision is made by the encoder and may be signalled as follows: The index of the first band is signalled and then it is inferred that the following four bands are the chosen ones. The band offset may be useful in correcting errors in smooth regions.

In the edge offset type, the edge offset (EO) type may be chosen out of four possible types (or edge classifications) where each type is associated with a direction: 1) vertical, 2) horizontal, 3) 135 degrees diagonal, and 4) 45 degrees diagonal. The choice of the direction is given by the encoder and signalled to the decoder. Each type defines the location of two neighbour samples for a given sample based on the angle. Then each sample in the CTU is classified into one of five categories based on comparison of the sample value against the values of the two neighbour samples. The five categories are described as follows:

1. Current sample value is smaller than the two neighbour samples
2. Current sample value is smaller than one of the neighbors and equal to the other neighbor
3. Current sample value is greater than one of the neighbors and equal to the other neighbor
4. Current sample value is greater than two neighbour samples
5. None of the above

These five categories are not required to be signalled to the decoder because the classification is based on only reconstructed samples, which may be available and identical in both the encoder and decoder. After each sample in an edge offset type CTU is classified as one of the five categories, an offset value for each of the first four categories is determined and signalled to the decoder. The offset for each category is added to the sample values associated with the corresponding category. Edge offsets may be effective in correcting ringing artifacts.

The SAO parameters may be signalled as interleaved in CTU data. Above CTU, slice header contains a syntax element specifying whether SAO is used in the slice. If SAO is used, then two additional syntax elements specify whether SAO is applied to Cb and Cr components. For each CTU, there are three options: 1) copying SAO parameters from the left CTU, 2) copying SAO parameters from the above CTU, or 3) signalling new SAO parameters.

The adaptive loop filter (ALF) is another method to enhance quality of the reconstructed samples. This may be achieved by filtering the sample values in the loop. In some embodiments the encoder determines which region of the pictures are to be filtered and the filter coefficients based on e.g. RDO and this information is signalled to the decoder.

The base layer encoding element 410 may provide information on base layer coded data such as motion information and information on block partitioning to the enhancement layer encoding element 420. The enhancement layer encoding element 420 may use this data to determine which reference frames have been used in constructing the base layer data, wherein the same reference frames may be used when performing motion prediction of the current block on the enhancement layer.

When the enhancement layer encoding element 420 is encoding a region of an image of an enhancement layer (e.g. a CTU), it determines which region in the base layer corresponds with the region to be encoded in the enhancement layer. For example, the location of the corresponding region may be calculated by scaling the coordinates of the CTU with the spatial resolution scaling factor between the base and enhancement layer.

If the resolution of the base layer and the enhancement layer differ from each other, the filtered base layer sample values may need to be upsampled by the upsampler 450. The output of the upsampler 450 i.e. upsampled filtered base layer sample values are then provided to the enhancement layer encoding element 420 as a reference for prediction of pixel values for the current block on the enhancement layer.

The operation of the prediction error encoder 302 and prediction error decoder 304 will be described hereafter in further detail. In the following examples the encoder generates images in terms of 16x16 pixel macroblocks which go to form the full image or picture. However, it is noted that Fig. 4a is not limited to block size 16x16, but any block size and shape can be used generally, and likewise Fig. 4a is not limited to partitioning of a picture to macroblocks but any other picture partitioning to blocks, such as coding units, may be used. Thus, for the following examples the pixel predictor 302 outputs a series of predicted macroblocks of size 16x16 pixels and the first summing device 321 outputs a series of 16x16 pixel residual data macroblocks which may represent the difference between a first macroblock in the image 300 against a predicted macroblock (output of pixel predictor 302).

The prediction error encoder 303 comprises a transform block 342 and a quantizer 344. The transform block 342 transforms the first prediction error signal 320 to a transform domain. The transform is, for example, the DCT transform or its variant. The quantizer 344 quantizes the transform domain signal, e.g. the DCT coefficients, to form quantized coefficients.

The prediction error decoder 304 receives the output from the prediction error encoder 303 and produces a decoded prediction error signal 338 which when combined with the prediction representation of the image block 312 at the second summing device 339 produces the preliminary reconstructed image 314. The prediction error decoder may be considered to comprise a dequantizer 346, which dequantizes the quantized coefficient values, e.g. DCT coefficients, to reconstruct the transform signal approximately and an inverse transformation block 348, which performs the inverse transformation to the reconstructed transform signal wherein the output of the inverse transformation block 348 contains reconstructed block(s). The prediction error decoder may also comprise a macroblock filter (not shown) which may filter the reconstructed macroblock according to further decoded information and filter parameters.

In the following the operation of an example embodiment of the inter predictor 306 will be described in more detail. The inter predictor 306 receives the current block for inter prediction. In scalable video coding, the inter predictor 306 may, for example, encode first the base layer and after that one or more of the enhancement layers, or the inter predictor 306 may first encode some parts of the base layer and after that the corresponding parts of one or more of the enhancement layers. It is assumed that for the current block there already exists one or more neighbouring blocks which have been encoded and motion vectors have been defined for them. For example, the block on the left side and/or the block above the current block may be such blocks. Spatial motion vector predictions for the current block can be formed e.g. by using the motion vectors of the encoded neighbouring blocks and/or of non-neighbour blocks in the same slice or frame, using linear or non-linear functions of spatial motion vector predictions, using a combination of various spatial motion vector predictors with linear or non-linear operations, or by any other appropriate means that do not make use of temporal reference information. It may also be possible to obtain motion vector predictors by combining both spatial and temporal prediction information of one or more encoded blocks. These kinds of motion vector predictors may also be called as spatio-temporal motion vector predictors.

Reference frames used in encoding the neighbouring blocks have been stored to the reference frame memory 318. The reference frames may be short term references or long term references and each reference frame may have a unique index indicative of the location of the reference frame in the reference frame memory. When a reference frame is no longer used as a reference frame it may be removed from the reference frame memory or marked as a non-reference frame wherein the storage location of that reference frame may be occupied for a new reference frame. In addition to the reference frames of the neighbouring blocks the reference frame selector 360 may also select one or more other frames as potential reference frames and store them to the reference frame memory.

Motion vector information of encoded blocks is also stored into the memory so that the inter predictor 306 is able to retrieve the motion vector information when processing motion vector candidates for the current block.

In some embodiments there may be two or more motion vector prediction procedures and each procedure may have its own candidate set creation process. In one procedure, only the motion vector values are used. In another procedure, which, as already mentioned above, may be called as the merging/merge mode/process/mechanism, each candidate element may comprise 1) the information whether 'block was uni-predicted using only list0' or 'block was uni-predicted using only list1' or 'block was bi-predicted using list0 and list1'; 2) motion vector value for the reference picture list0; 3) reference picture index in the reference picture list0; 4) motion vector value for the reference picture list1; and 5) reference picture index in the reference picture list1. Therefore, whenever two prediction candidates are to be compared, not only the motion vector values are compared, but also the five values mentioned above may be compared to determine whether they correspond with each other or not. On the other hand, if any of the comparisons indicate that the prediction candidates do not have equal motion information, no further comparisons may not be needed.

The motion vector definer 361 defines candidate motion vectors for the current frame by using one or more of the motion vectors of one or more neighbour blocks and/or other blocks of the current block in the same frame and/or co-located blocks and/or other blocks of the current block in one or more other frames. These candidate motion vectors can be called as a set of candidate predictors or a predictor set. Each candidate predictor thus represents the motion vector of one or more already encoded blocks. In some embodiments the motion vector of the candidate predictor is set equal to the motion vector of a neighbour block for the same list if the current block and the neighbour block refer to the same reference frames for that list. Also for temporal prediction there may be one or more previously encoded frames wherein motion vectors of a co-located block or other blocks in a previously encoded frame can be selected as candidate predictors for the current block. The temporal motion vector predictor candidate can be generated by any means that make use of the frames other than the current frame.

The candidate motion vectors can also be obtained by using more than one motion vector of one or more other blocks such as neighbour blocks of the current block and/or co-located blocks in one or more other frames. As an example, any combination of the motion vector of the block to the left of the current block, the motion vector of the block above the current block, and the motion vector of the block at the up-right corner of the current block may be used (i.e. the block to the right of the block above the current block). The combination may be a median of the motion vectors or calculated by using other formulas. For example, one or more of the motion vectors to be used in the combination may be scaled by a scaling factor, an offset may be added, and/or a constant motion vector may be added. In some embodiments the combined motion vector is based on both temporal and spatial motion vectors, e.g. the motion vector of one or more of the neighbour blocks or other block of the current block and the motion vector of a co-located block or other block in another frame.

If a neighbour block does not have any motion vector information a default motion vector such as a zero motion vector may be used instead.

Creating additional or extra motion vector predictions based on previously added predictors may be needed when the current number of candidates is limited or insufficient. This kind of creating additional candidates can be performed by combining previous two predictions and/or processing one previous candidate by scaling or adding offset and/or adding a zero motion vector with various reference indices. Hence, the motion vector definer 361 may examine how many motion vector candidates can be defined and how many potential candidate motion vectors exist for the current block. If the number of potential motion vector candidates is smaller than a threshold, the motion vector definer 361 may create additional motion vector predictions.

To distinguish the current block from the encoded/decoded blocks the motion vectors of which are used as candidate motion vectors, those encoded/decoded blocks are also called as reference blocks in this application.

In some embodiments not only the motion vector information of the reference block(s) is obtained (e.g. by copying) but also a reference index of the reference block in the reference picture list may be copied to the candidate list. The information whether the block was uni-predicted using only list0 or the block was uni-predicted using only list1 or the block was bi-predicted using list0 and list1 may also be copied. The candidate list may also be called as a candidate set or a set of motion vector prediction candidates.

In some embodiments of the scalable coding scheme, the base layer motion vector may predicted from motion vectors of spatially and temporally neighboring blocks. While coding enhancement layer motion vector, a motion vector prediction candidate list of an enhancement layer block may be constructed in such a way that the motion vector predictor from the base layer and motion vector predictor from another picture in the same layer (a temporal motion vector predictor candidate) may both be present in the list if they are both available and the list size is larger than two. This means that the base layer motion vector predictor candidate and the temporal motion vector predictor candidate may be treated with higher priority than the spatial motion vector predictor candidates if the base layer motion vector predictor candidate is present and if the temporal motion vector predictor is allowed. The order in which the base layer candidate and the temporal motion vector predictor candidate is processed may vary. However, independent of the processing order, the addition of candidates to the list may be controlled in some embodiments such that the list is not full before the base layer candidate and the temporal motion vector predictor candidate are processed. In the case where the base layer motion vector predictor is already added to the list, addition of spatial candidates to the list may be restricted such that there is still at least one available slot when the temporal candidate is processed. For example, if the list size is five and there are five spatial candidates and one temporal motion vector predictor candidate and the temporal motion vector predictor candidate is processed last, if the base layer motion vector is added then, three out of five spatial candidates could be added to the list. This may be realized by checking the number of candidates added to the list while processing the spatial candidates and do not continue to process a spatial candidate when the number of candidates added to the list reaches the size of the merging list minus one. This may alternatively implemented by constructing a first list by adding all the spatial, temporal and base layer candidates and the final candidate list is obtained by pruning the first list in such a way that the temporal motion vector candidate and the base layer motion vector candidate is present in the list.

Figure 6b illustrates an example of spatial and temporal prediction of a prediction unit. There is depicted the current block 611 in the frame 610 and a neighbour block 612 which already has been encoded. The motion vector definer 361 has defined a motion vector 613 for the neighbour block 612 which points to a block 614 in the previous frame 615. This motion vector can be used as a potential spatial motion vector prediction 620 for the current block. Figure 6b depicts that a co-located block 616 in the previous frame 615, i.e. the block at the same location than the current block but in the previous frame, has a motion vector 617 pointing to a block 619 in another frame 618. This motion vector 617 can be used as a potential temporal motion vector prediction 621 for the current frame.

Figure 6c illustrates another example of spatial and temporal prediction of a prediction unit. In this example the block 616 of the previous frame 615 uses bi-directional prediction based on the block 619 of the frame preceding the frame 615 and on the block 622 succeeding the current frame 610. The temporal motion vector prediction for the current block 611 may be formed by using both the motion vectors 617, 624 or either of them.

In the following, a merge process for motion information coding according to an example embodiment will be described in more detail. The encoder creates a list of motion prediction candidates from which one of the candidates is to be signalled as the motion information for the current coding unit or prediction unit. The motion prediction candidates may consist of several spatial motion predictions and none, one or more temporal motion predictions. The spatial candidates can be obtained from the motion information of e.g. the spatial neighbour blocks A0, A1, B0, B1, B2, whose motion information is used as spatial candidate motion predictions. The temporal motion prediction candidate(s) may be obtained by processing the motion of a block in a frame other than the current frame.

In this example the spatial motion prediction candidates are the spatial neighbour blocks A0, A1, B0, B1, B2. The spatial motion vector prediction candidate A1 is located on the left side of the prediction unit when the encoding/decoding order is from left to right and from top to bottom of the frame, slice or another entity to be encoded/decoded. Respectively, the spatial motion vector prediction candidate B1 is located above the prediction unit. third; the spatial motion vector prediction candidate B0 is on the right side of the spatial motion vector prediction candidate B1; the spatial motion vector prediction candidate A0 is below the spatial motion vector prediction candidate A1; and the spatial motion vector prediction candidate B2 is located on the same column than spatial motion vector prediction candidate A1 and on the same row than the spatial motion vector prediction candidate B1. In other words, the spatial motion vector prediction candidate B2 is cornerwise neighbouring the prediction unit as can be seen e.g. from Figure 6a.

These spatial motion prediction candidates may be processed in a predetermined order, for example, A1, B1, B0, A0 and B2. The first spatial motion prediction candidate to be selected for further examination is thus A1. Before further examination is performed for the selected spatial motion prediction candidate, it may be determined whether the merge list already contains a maximum number of spatial motion prediction candidates. Hence, the prediction list modifier 363 compares the number of spatial motion prediction candidates in the merge list with the maximum number, and if the number of spatial motion prediction candidates in the merge list is not less than the maximum number, the selected spatial motion prediction candidate is not included in the merge list and the process of constructing the merge list can be stopped. On the other hand, if the number of spatial motion prediction candidates in the merge list is less than the maximum number, a further analyses of the selected spatial motion prediction candidate may be performed or the spatial motion prediction candidate may be added to the merge list without further analyses.

Some of the motion prediction candidates may have the same motion information, resulting redundancy. Therefore, when merging candidates have the same motion information (e.g. the same motion vectors and the same reference indices), the merging candidates may be discarded for the merge list except the merging candidate which has the smallest processing order. In this way, after discarding the redundant candidates, the list containing the remaining candidates can be called as the original merge list. If the number of candidates in the original merge list is smaller than the maximum number of merge candidates, then additional motion prediction candidates may be generated and included in the merge list in order to make the total number of candidates equal to the maximum number. In summary, the final merge list is composed of the candidates in the original merge list and additional candidates obtained in various ways. One of the ways of generating additional candidates is creating a new candidate by combining motion information corresponding to reference picture list0 of a candidate in the original list with motion information corresponding to reference picture list1 of another candidate in the original merge list. A candidate generated in this way can be called as a combined candidate.

Comparing two blocks whether they have the same motion may be performed by comparing all the elements of the motion information, namely 1) The information whether 'the prediction unit is uni-predicted using only reference picture list0' or 'the prediction unit is uni-predicted using only reference picture list1' or 'the prediction unit is bi-predicted using both reference picture list0 and list1' 2) Motion vector value corresponding to the reference picture list0; 3) Reference picture index in the reference picture list0; 4) Motion vector value corresponding to the reference picture list1; and 5) Reference picture index in the reference picture list1.

The maximum number of merge list candidates can be any non-zero value. In the example above the merge list candidates were the spatial neighbour blocks A0, A1, B0, B1, B2 and the temporal motion prediction candidate, but there may be more than one temporal motion prediction candidate and also other spatial motion prediction candidates than the spatial neighbour blocks. In some embodiments there may also be other spatial neighbour blocks than the blocks A0, A1, B0, B1, B2.

It is also possible that the maximum number of spatial motion prediction candidates included in the list can be different than four.

In some embodiments the maximum number of merge list candidates and maximum number of spatial motion prediction candidates included in the list can depend on whether a temporal motion vector candidate is included in the list or not.

A different number of spatial motion prediction candidates located at various locations in the current frame can be processed. The locations can be the same as or different than A1, B1, B0, A0 and B2.

The decisions for the candidates can be taken in any order of A1, B1, B0, A0 and B2 or independently in parallel.

When the candidate motion vector prediction list has been obtained for the base layer, the inter predictor 306 may select one of the candidates in the merging candidate list as the motion vector prediction for the current block in the base layer.

The inter predictor 306 may also perform corresponding steps when preparing a candidate motion vector prediction list for the enhancement layer for example as follows. The inter predictor 306 may initiate a motion vector prediction candidate list and include information on the motion prediction candidate which was selected for the base layer. The information may comprise e.g. the index of the selected motion prediction candidate or other information which identifies the selected motion vector prediction candidate. In some embodiments the information on the motion prediction candidate selected for the base layer is included as the first motion vector prediction candidate in the motion vector prediction candidate list. Then, the inter predictor 306 may obtain the other motion vector prediction candidates in the motion vector prediction candidates list. This may be performed in many ways of which some non-limiting examples are briefly described.

In some embodiments the size of the motion vector prediction candidates list and the number of spatial and temporal candidates are not changed due to the insertion of the motion vector prediction candidate from the corresponding list of the base layer. If the base layer motion vector is added to the motion vector prediction candidates list and temporal motion vector predictor is allowed in the motion vector prediction candidates list, the maximum number of spatial motion vector predictors chosen to be added to the motion vector prediction candidates list may be reduced by 1 by excluding any one of the spatial candidates to keep the list size unchanged. This could be performed e.g. as follows:

The derivation process for motion vectors for the merge mode may be modified so that the merging candidate list, mergeCandList, is constructed as follows. If the base layer motion vector prediction candidate is available, information on the motion vector prediction candidate may be added to the first position in the list. The availability of the base layer motion vector prediction candidate may be determined e.g. on the basis of the value of a variable available-FlagBase, which may be equal to 1, if the base layer motion vector prediction candidate is available.

If the spatial motion vector predictor candidate in the position A1 i.e. on the left side of the current block (illustrated in Figure 6a) is available, information on the motion vector prediction candidate may be added to the second position in the list. The availability of the motion vector predictor candidate in the position A1 may be determined e.g. on the basis of the value of a variable availableFlagA1, which may be equal to 1, if the motion vector predictor candidate in the position A1 is available.

If the spatial motion vector predictor candidate in the position B1 i.e. above the current block (illustrated in Figure 6a) is available, information on the motion vector prediction candidate may be added to the third position in the list. The availability of the base layer motion vector prediction candidate may be determined e.g. on the basis of the value of a variable availableFlagB1, which may be equal to 1, if the motion vector prediction candidate B1 is available.

If the spatial motion vector predictor candidate in the position B0 i.e. on the right side of B1 (illustrated in Figure 6a) is available, information on the motion vector prediction candidate may be added to the fourth position in the list. The availability of the motion vector prediction candidate B0 may be determined e.g. on the basis of the value of a variable availableFlagBO, which may be equal to 1, if the motion vector prediction candidate B0 is available.

If the spatial motion vector predictor candidate in the position A0 i.e. below A1 (illustrated in Figure 6a) is available, information on the motion vector prediction candidate may be added to the fifth position in the list. The availability of the motion vector prediction candidate A0 may be determined e.g. on the basis of the value of a variable available-

FlagAO, which may be equal to 1, if the motion vector prediction candidate A0 is available.

If the spatial motion vector predictor candidate in the position B2 i.e. above A1 and on the left side of B1 (illustrated in Figure 6a) is available, information on the motion vector prediction candidate may be added to the sixth position in the list. The availability of the motion vector prediction candidate B2 may be determined e.g. on the basis of the value of a variable availableFlagB2, which may be equal to 1, if the motion vector prediction candidate B2 is available.

If the temporal motion vector predictor candidate Col in the co-located position is available, information on the motion vector prediction candidate may be added to the seventh position in the list. The availability of the temporal co-located motion vector prediction candidate Col may be determined e.g. on the basis of the value of a variable available-FlagCol, which may be equal to 1, if the temporal co-located motion vector prediction candidate Col is available.

In addition, in the derivation process of spatial merging candidates the number of spatial merging candidates to be selected could be one less of the maximum number of spatial candidates allowed. For example, if the maximum number of allowed spatial candidates is four, three of the five spatial candidates might be selected, when the base layer motion vector is present in the list, in order to leave space for the temporal motion vector predictor.

In the following it is briefly described how some parameters relating to the motion vector prediction may be set in some embodiments on the basis of certain conditions.

If the base layer motion vector prediction candidate and the spatial motion vector predictor candidates in the positions A1, B0 and B1 are available (availableFlagBase + availableFlagA1 + availableFlagBO + availableFlagB1 is equal to 4), the parameter availableFlagA0 is set to the value 0 (i.e. the spatial motion vector predictor candidate in the position A0 is marked as not available). Also both components of the motion vectors mvL0A0 and mvL1A0 are set equal to 0, the reference indices refIdxL0A0 and refIdxL1A0 are set equal to -1 and the prediction flags predFlagL0A0 and predFlagL1A0 are set equal to 0.

If the base layer motion vector prediction candidate is not available but the spatial motion vector predictor candidates in the positions A0, A1, B0 and B1 are available (availableFlagAO + availableFlagA1 + availableFlagB0 + availableFlagB1 is equal to 4), the parameter availableFlagB2 is set to the value 0 (i.e. the spatial motion vector predictor candidate in the position B2 is marked as not available). Also both components of the motion vectors mvL0B2 and mvL1B2 are set equal to 0, the reference indices refIdxL0B2 and refIdxL1B2 are set equal to -1 and the prediction flags predFlagL0B2 and predFlagL1B2 are set equal to 0.

If the base layer motion vector prediction candidate and three of the spatial motion vector predictor candidates in the positions A0, A1, B0 and B1 are available (availableFlagAO + availableFlagA1 + availableFlagB0 + availableFlagB1 is equal to 3 and availableFlagBase is equal to 1), the parameter availableFlagB2 is set to the value 0 (i.e. the spatial motion vector predictor candidate in the position B2 is marked as not available). Also both components of the motion vectors mvL0B2 and mvL1B2 are set equal to 0, the reference indices refIdxL0B2 and refIdxL1B2 are set equal to -1 and the prediction flags predFlagL0B2 and predFlagL1B2 are set equal to 0.

In some other embodiments the size of the motion vector prediction candidates list is not changed due to the insertion of the motion vector prediction candidate from the corresponding list of the base layer. If, however, the base layer motion vector is added to the list and all the spatial candidates are successfully added to the list (i.e. the number of spatial candidates added to the list is equal to the maximum number allowed), the temporal candidate may be excluded from the list to keep the list size unchanged. This could be performed e.g. as follows:

The derivation process for motion vectors for the merge mode may be modified so that the merging candidate list, mergeCandList, is constructed as follows. If the base layer motion vector prediction candidate is available (availableFlagBase is equal to 1), information on the motion vector prediction candidate may be added to the first position in the list.

If the spatial motion vector predictor candidate in the position A1 is available (availableFlagA1 is equal to 1), information on the motion vector prediction candidate may be added to the second position in the list.

If the spatial motion vector predictor candidate in the position B1 is available(availableFlagB1 is equal to 1), information on the motion vector prediction candidate may be added to the third position in the list.

If the spatial motion vector predictor candidate in the position B0 is available (availableFlagBO is equal to 1), information on the motion vector prediction candidate may be added to the fourth position in the list.

If the spatial motion vector predictor candidate in the position A0 is available (availableFlagAO is equal to 1), information on the motion vector prediction candidate may be added to the fifth position in the list.

If the spatial motion vector predictor candidate in the position B2 is available (availableFlagB2 is equal to 1), information on the motion vector prediction candidate may be added to the sixth position in the list.

If the temporal motion vector predictor candidate Col in the co-located position is available (availableFlagCol is equal to 1), information on the motion vector prediction candidate may be added to the seventh position in the list.

In addition, in the derivation process of spatial merging candidates the number of spatial merging candidates to be selected could be the maximum number of spatial candidates allowed. For example, if the maximum number of allowed spatial candidates is four out of e.g. five candidates, four of the five spatial candidates might be selected, when the base layer motion vector is present in the list, wherein the temporal motion vector predictor may not be added to the list.

In the following it is briefly described how some parameters relating to the motion vector prediction may be set in some embodiments on the basis of certain conditions.

If the base layer motion vector prediction candidate and the spatial motion vector predictor candidates in the positions A0, A1, B0 and B1 are available (availableFlagBase + availableFlagA0 + availableFlagA1 + availableFlagB0 + availableFlagB1 is equal to 5), the parameter availableFlagB2 is set to the value 0 (i.e. the spatial motion vector predictor candidate in the position B2 is marked as not available). Also both components of the motion vectors mvL0B2 and mvL1B2 are set equal to 0, the reference indices refIdxL0B2 and refIdxL1B2 are set equal to -1 and the prediction flags predFlagLOB2 and predFlagLlB2 are set equal to 0.

If the base layer motion vector prediction candidate and the spatial motion vector predictor candidates in the positions A0, A1, B0, B1 and B2 are available (availableFlagBase + availableFlagA1 + availableFlagB0 + availableFlagB1 + availableFlagA0 + availableFlagB2 is equal to 6), the parameter availableFlagCol is set to the value 0 (i.e. the temporal co-located motion vector predictor candidate is marked as not available). Also both components of the motion vectors mvLOCol and mvL1Col are set equal to 0, the reference indices refIdxLOCol and refIdxL1Col are set equal to -1 and the prediction flags predFlagLOCol and predFlagL1Col are set equal to 0.

In some embodiments the size of the motion vector prediction candidates list may be increased e.g. by one due to the insertion of the motion vector prediction candidate from the corresponding list of the base layer. Then, if the base layer motion vector is added to the motion vector prediction candidates list and temporal motion vector predictor is allowed in the motion vector prediction candidates list, some of the spatial motion vector predictors chosen to be added to the motion vector prediction candidates list may not be added to the list. For example, three out of five spatial motion vector predictors may be selected. This could be performed e.g. as follows:

> The derivation process for motion vectors for the merge mode may be modified so that the merging candidate list, mergeCandList, is constructed as follows. If the base layer motion vector prediction candidate is available (availableFlagBase is equal to 1), information on the motion vector prediction candidate may be added to the first position in the list.

If the spatial motion vector predictor candidate in the position A1 is available (availableFlagA1 is equal to 1), information on the motion vector prediction candidate may be added to the second position in the list.

If the spatial motion vector predictor candidate in the position B1 is available(availableFlagB1 is equal to 1), information on the motion vector prediction candidate may be added to the third position in the list.

If the spatial motion vector predictor candidate in the position B0 is available (availableFlagBO is equal to 1), information on the motion vector prediction candidate may be added to the fourth position in the list.

If the spatial motion vector predictor candidate in the position A0 is available (availableFlagAO is equal to 1), information on the motion vector prediction candidate may be added to the fifth position in the list.

If the spatial motion vector predictor candidate in the position B2 is available (availableFlagB2 is equal to 1), information on the motion vector prediction candidate may be added to the sixth position in the list.

If the temporal motion vector predictor candidate Col in the co-located position is available (availableFlagCol is equal to 1), information on the motion vector prediction candidate may be added to the seventh position in the list.

In addition, in the derivation process of spatial merging candidates the number of spatial merging candidates to be selected could be less than the maximum number of possible spatial candidates. For example, three of the five spatial candidates might be selected, when the base layer motion vector is present in the list, in order to leave space for the temporal motion vector predictor.

In the following it is briefly described how some parameters relating to the motion vector prediction may be set in some embodiments on the basis of certain conditions.

If the spatial motion vector predictor candidates in the positions A0, A1, B0 and B1 are available (availableFlagAO + availableFlagA1 + availableFlagB0 + availableFlagB1 is equal to 4), the parameter availableFlagB2 is set to the value 0 (i.e. the spatial motion vector predictor candidate in the position B2 is marked as not available). Also both components of the motion vectors mvL0B2 and mvL1B2 are set equal to 0, the reference indices refIdxL0B2 and refIdxL1B2 are set equal to -1 and the prediction flags predFlagL0B2 and predFlagL1B2 are set equal to 0.

In one further embodiment to be mentioned here, the base layer motion vector predictor can be added as the first candidate to the list and the remaining candidates (e,g, four candidates) can be chosen in any order from the spatial and temporal candidates.

When the candidate motion vector prediction list has been obtained for the enhancement layer, the inter predictor 306 may select one of the candidates in the merging candidate list as the motion vector prediction for the current block in the enhancement layer.

In some embodiments of the scalable coding scheme the addition of candidates to the list may be controlled e.g. as follows.

The derivation process for motion vectors for the merge mode may be modified so that the merging candidate list, mergeCandList, is constructed as follows. If the base layer motion vector prediction candidate is available (availableFlagBase is equal to 1), information on the motion vector prediction candidate may be added to the first position in the list.

If the spatial motion vector predictor candidate in the position A1 is available (availableFlagA1 is equal to 1), information on the motion vector prediction candidate may be added to the second position in the list.

If the spatial motion vector predictor candidate in the position B1 is available(availableFlagB1 is equal to 1), information on the motion vector prediction candidate may be added to the third position in the list.

If the spatial motion vector predictor candidate in the position B0 is available (availableFlagBO is equal to 1), information on the motion vector prediction candidate may be added to the fourth position in the list.

If the spatial motion vector predictor candidate in the position A0 is available (availableFlagAO is equal to 1), information on the motion vector prediction candidate may be added to the fifth position in the list.

If the spatial motion vector predictor candidate in the position B2 is available (availableFlagB2 is equal to 1), information on the motion vector prediction candidate may be added to the sixth position in the list.

If the temporal motion vector predictor candidate Col in the co-located position is available (availableFlagCol is equal to 1), information on the motion vector prediction candidate may be added to the seventh position in the list.

In addition, in the derivation process of spatial merging candidates the number of spatial merging candidates to be selected could be one less than the maximum number of spatial candidates allowed. For example, if the maximum number of allowed spatial candidates is four out of e.g. five candidates, three of the five possible spatial candidates might be selected, when the base layer motion vector is present in the list.

In the following it is briefly described how some parameters relating to the motion vector prediction may be set in some embodiments on the basis of certain conditions.

If the base layer motion vector prediction candidate and the spatial motion vector predictor candidates in the positions A1, B0 and B1 are available (availableFlagBase + availableFlagA1 + availableFlagB0 + availableFlagB1 is equal to 4), the parameter availableFlagA0 is set to the value 0 (i.e. the spatial motion vector predictor candidate in the position A0 is marked as not available). Also both components of the motion vectors mvL0A0 and mvL1A0 are set equal to 0, the reference indices refIdxL0A0 and refIdxL1A0 are set equal to -1 and the prediction flags predFlagL0A0 and predFlagL1A0 are set equal to 0.

If the base layer motion vector prediction candidate is not available but the spatial motion vector predictor candidates in the positions A0, A1, B0 and B1 are available (availableFlagAO + availableFlagA1 + availableFlagB0 + availableFlagB1 is equal to 4 and availableFlagBase is equal to 0), the parameter availableFlagB2 is set to the value 0 (i.e. the temporal co-located motion vector predictor candidate is marked as not available). Also both components of the motion vectors mvL0B2 and mvL1B2 are set equal to 0, the reference indices refIdxL0B2 and refIdxL1B2 are set equal to -1 and the prediction flags predFlagL0B2 and predFlagL1B2 are set equal to 0.

In some embodiments of the scalable coding scheme where the motion vector coding is based on competition of spatial and temporal motion prediction candidates, while coding motion vectors of the enhancement layer, the temporal motion vector predictor may be replaced with the base layer motion vector predictor. If the temporal motion vector prediction is disabled, the base layer motion vector predictor may still be processed to be added to the merging candidate list e.g. at the point where the temporal motion vector prediction candidate would have been processed if it had been allowed.

An example implementation is as follows:

The derivation process for motion vectors for the merge mode may be modified so that the merging candidate list is constructed as follows. If the spatial motion vector predictor candidate in the position A1 is available (availableFlagA1 is equal to 1), information on the motion vector prediction candidate may be added to the first position in the list.

If the spatial motion vector predictor candidate in the position B1 is available(availableFlagB1 is equal to 1), information on the motion vector prediction candidate may be added to the second position in the list.

If the spatial motion vector predictor candidate in the position B0 is available (availableFlagBO is equal to 1), information on the motion vector prediction candidate may be added to the third position in the list.

If the spatial motion vector predictor candidate in the position A0 is available (availableFlagAO is equal to 1), information on the motion vector prediction candidate may be added to the fourth position in the list.

If the spatial motion vector predictor candidate in the position B2 is available (availableFlagB2 is equal to 1), information on the motion vector prediction candidate may be added to the fifth position in the list.

If the base layer motion vector prediction candidate is available (availableFlagBase is equal to 1), information on the motion vector prediction candidate may be added to the sixth position in the list.

Derivation process for motion vectors for merge mode can be modified so that the derivation of the temporal motion vector prediction candidate is omitted and replaced with the derivation of the base layer prediction candidate.

Some embodiments of the above described processes may also be expressed uisng the following expressions. This process may only be invoked when PredMode[ xC ][ yC ] is equal to MODE_SKIP or PredMode[ xC ][ yC ] is equal to MODE_INTER and merge_flag [ xP ][ yP ] is equal to 1, where ( xP, yP ) specify the top-left sample of the current luma prediction block relative to the top-left luma sample of the current picture.

Inputs of this process are

- a luma location ( xC, yC ) of the top-left sample of the current luma coding block relative to the top-left luma sample of the current picture,

- a luma location ( xP, yP ) of the top-left sample of the current luma prediction block relative to the top-left luma sample of the current picture,

- a variable nCS specifying the size of the current luma coding block,

- variables specifying the width and the height of the luma prediction block, nPbW and nPbH,

- a variable partIdx specifying the index of the current prediction unit within the current coding unit.

Outputs of this process are

- the luma motion vectors mvL0 and mvL1,

- the reference indices refIdxLO and refIdxL1,

- the prediction list utilization flags predFlagL0 and predFlagL1.

The variables singleMCLFlag is derived as follows.

- If log2_parallel_merge_level_minus2 is greater than 0 and nCS is equal to 8, singleMCLFlag is set to 1.

- Otherwise, singleMCLFlag is set to 0.

When singleMCLFlag is equal to 1, xP is set equal to xC, yP is set equal to yC, and both nPbW and nPbH are set equal to nCS.

NOTE - When singleMCLFlag is equal to 1, all the prediction units of the current coding unit share a single merge candidate list, which is identical to the merge candidate list of the 2Nx2N prediction unit.

The motion vectors mvL0 and mvL1, the reference indices refIdxLO and refIdxL1, and the prediction utilization flags predFlagL0 and predFlagL1 are derived as specified by the following ordered steps:

1. The derivation process for merging candidates from neighboring prediction unit partitions is invoked with the luma coding block location ( xC, yC ), the coding block size nCS, the luma prediction block location ( xP, yP ), the variable singleMCLFlag, the width and the height of the luma prediction block nPbW and nPbH and the partition index partIdx as inputs and the output is assigned to the availability flags availableFlagN, the reference indices refIdxL0N and refIdxL1N, the prediction list utilization flags predFlagLON and predFlagL1N and the motion vectors mvLON and mvL1N with N being replaced by $A_0$, $A_1$, $B_0$, $B_1$ or $B_2$.

2. The derivation process for merging candidates from corresponding base layer block is invoked with the luma coding block location ( xC, yC ), the coding block size nCS, the luma prediction block location ( xP, yP ), the variable singleMCLFlag, the width and the height of the luma prediction block nPbW and nPbH and the partition index partIdx as inputs and the output is assigned to the availability flag availableFlagBase, the reference indices refIdxL0Base and refIdxL1Base, and the motion vectors mvL0Base and mvL1Base.

3. The reference index for temporal merging candidate refIdxLX (with X being 0 or 1) is set equal to 0.

4. The derivation process for temporal luma motion vector prediction is invoked with luma location ( xP, yP ), the width and the height of the luma prediction block nPbW and nPbH, and refIdxLX as the inputs and with the output being the availability flag availableFlagLXCol and the temporal motion vector mvLXCol. The variables available-FlagCol and predFlagLXCol (with X being 0 or 1, respectively) are derived as specified below.

availableFlagCol = availableFlagL0Col || availableFlagL1Col

predFlagLXCol = availableFlagLXCol

5. The merging candidate list, mergeCandList, is constructed as follows.

    1. Base, if availableFlagBase is equal to 1

    2. $A_1$, if availableFlag$A_1$ is equal to 1

    3. $B_1$, if availableFlag$B_1$ is equal to 1

    4. $B_0$, if availableFlag$B_0$ is equal to 1

    5. $A_0$, if availableFlag$A_0$ is equal to 1

    6. $B_2$, if availableFlag$B_2$ is equal to 1

    7. Col, if availableFlagCol is equal to 1

6. The variable numMergeCand and numOrigMergeCand are set to the number of merging candidates in the merge-CandList.

7. When slice_type is equal to B, the derivation process for combined bi-predictive merging candidates is invoked with mergeCandList, the reference indices refIdxL0N and refIdxL1N, the prediction list utilization flags predFlagLON and predFlagL1N, the motion vectors mvLON and mvL1N of every candidate N being in mergeCandList, numMerge-Cand and numOrigMergeCand given as input and the output is assigned to mergeCandList, numMergeCand, the reference indices refIdxL0combCand$_k$ and refIdxL1combCand$_k$, the prediction list utilization flags predFlagL0combCand$_k$ and predFlagL1combCand$_k$ and the motion vectors mvL0combCand$_k$ and mvLl1ombCand$_k$ of every new candidate combCand$_k$ being added in mergeCandList. The number of candidates being added num-CombMergeCand is set equal to ( numMergeCand - numOrigMergeCand). When numCombMergeCand is greater than 0, k ranges from 0 to numCombMergeCand - 1, inclusive.

8. The derivation process for zero motion vector merging candidates is invoked with the mergeCandList, the reference indices refIdxL0N and refIdxL1N, the prediction list utilization flags predFlagLON and predFlagL1N, the motion vectors mvLON and mvL1N of every candidate N being in mergeCandList and the NumMergeCand as the inputs and the output is assigned to mergeCandList, numMergeCand, the reference indices refIdxL0zeroCand$_m$ and refIdxL1zeroCand$_m$, the prediction list utilization flags predFlagL0zeroCand$_m$ and predFlagL1zeroCand$_m$, the motion vectors mvL0zeroCand$_m$ and mvL1zeroCand$_m$ of every new candidate zeroCand$_m$ being added in mergeCandList. The number of candidates being added numZeroMergeCand is set equal to ( numMergeCand - numOrigMergeCand - numCombMergeCand ). When numZeroMergeCand is greater than 0, m ranges from 0 to numZeroMergeCand - 1, inclusive.

9. The following assignments are made with N being the candidate at position merge_idx[ xP][ yP ] in the merging candidate list mergeCandList (N = mergeCandList[ merge_idx[ xP] [ yP ] ]) and X being replaced by 0 or 1:

    mvLX[ 0 ] = mvLXN[ 0 ]

    mvLX[ 1 ] = mvLXN[ 1 ]

    refIdxLX = refIdxLXN

    predFlagLX = predFlagLXN

10. When predFlagLO is equal to 1 and predFlagL1 is equal to 1, and ( nPbW + nPbH ) is equal to 12, the following applies.

refIdxL1 = -1

predFlagL1 = 0

**Derivation process for spatial merging candidates**

Inputs to this process are

- a luma location ( xC, yC ) of the top-left sample of the current luma coding block relative to the top-left luma sample of the current picture,

- a variable nCS specifying the size of the current luma coding block,

- a luma location ( xP, yP ) specifying the top-left sample of the current luma prediction block relative to the top-left luma sample of the current picture,

- a variable singleMCLFlag,

- variables specifying the width and the height of the luma prediction block, nPbW and nPbH,

- a variable availableFlagBase specifying the availability of the base layer prediction candidate,

- a variable partIdx specifying the index of the current prediction unit within the current coding unit.

Outputs of this process are (with N being replaced by $A_0$, $A_1$, $B_0$, $B_1$ or $B_2$ and with X being replaced by 0 or 1)

- the availability flags availableFlagN of the neighbouring prediction units,

- the reference indices refIdxLXN of the neighbouring prediction units,

- the prediction list utilization flags predFlagLXN of the neighbouring prediction units,

- the motion vectors mvLXN of the neighbouring prediction units.

For the derivation of availableFlagN, with N being $A_0$, $A_1$, $B_0$, $B_1$ or $B_2$ and (xN, yN) being (xP - 1, yP + nPbH), (xP - 1, yP + nPbH - 1), ( xP + nPbW, yP - 1 ), ( xP + nPbW - 1, yP - 1) or ( xP - 1, yP - 1 ), the following applies.

- When yP-1 is less than (( yC >> Log2CtbSizeY ) << Log2CtbSizeY), the following applies.

$$xB_0 = ((xB_0 >> 3) << 3) + ((xB_0 >> 3) \& 1)*7$$

$$xB_1 = ((xB_1 >> 3) << 3) + ((xB_1 >> 3) \& 1)*7$$

$$xB_2 = ((xB_2 >> 3) << 3) + ((xB_2 >> 3) \& 1)*7$$

- The availability derivation process for a prediction block is invoked with the luma location ( xC, yC), the current luma coding block size nCbS set equal to nCS, the luma location ( xP, yP ), the width and the height of the luma prediction block nPbW and nPbH, the luma location ( xN, yN ) and the partition index partIdx as inputs and the output is assigned to the prediction block availability flag availableN.
- If one or more of the following conditions are true with X being replaced by 0 and 1, the availableFlagN is set equal to 0, both components mvLXN are set equal to 0, refIdxLXN is set equal to -1 and predFlagLXN is set equal to 0.

  - (xP >> (log2_parallel_merge_level_minus2 + 2)) is equal to (xN >> (log2_parallel_merge_level_minus2 + 2)) and (yP >> (log2_parallel_merge_level_minus2 + 2)) is equal to (yN >> (log2_parallel_merge_level minus2 + 2)).

- N is equal to $A_0$ and availableFlagBase + availableFlag$A_1$ + availableFlag$B_0$ + availableFlag$B_1$ is equal to 4.

- N is equal to $B_2$ and availableFlag$A_0$ + availableFlag$A_1$ + availableFlag$B_0$ + availableFlag$B_1$ is equal to 4 and availableFlagBase is equal to 0.

- N is equal to $B_2$ and availableFlag$A_0$ + availableFlag$A_1$ + availableFlag$B_0$ + availableFlag$B_1$ is equal to 3 and availableFlagBase is equal to 1.

- availableN is equal to FALSE

- singleMCLFlag is equal to 0 and PartMode of the current prediction unit is PART_2NxN or PART_2NxnU or PART_2NxnD and partIdx is equal to 1 and N is equal to B1

- singleMCLFlag is equal to 0 and PartMode of the current prediction unit is PART _Nx2N or PART_nLx2N or PART_nRx2N and partIdx is equal to 1 and N is equal to A1

- N is equal to $B_1$ and the prediction units covering luma location ( $xA_1$, $yA_1$ ) and luma location ( xN, yN ) have the same motion vectors and the same reference indices

- N is equal to $B_0$ and the prediction units covering luma location ( $xB_1$, $yB_1$ ) and luma location ( xN, yN ) have the same motion vectors and the same reference indices

- N is equal to $A_0$ and the prediction units covering luma location ( $xA_1$, $yA_1$ ) and luma location ( xN, yN ) have the same motion vectors and the same reference indices

- N is equal to $B_2$ and the prediction units covering luma location ( $xA_1$, $yA_1$ ) and luma location ( xN, yN ) have the same motion vectors and the same reference indices

- N is equal to $B_2$ and the prediction units covering luma location ( $xA_1$, $yA_1$ ) and luma location ( xN, yN ) have the same motion vectors and the same reference indices

- Otherwise, availableFlagN is set equal to 1 and the following assignments are made.

    mvLXN = MvLX[ xN ][ yN ]
    refIdxLXN = RefIdxLX[ xN ][ yN ]
    predFlagLXN = PredFlagLX[ xN ][ yN ]

**Derivation process for luma motion vector prediction**

Inputs to this process are

- a luma location ( xC, yC ) of the top-left sample of the current luma coding block relative to the top-left luma sample of the current picture,
- a variable nCS specifying the size of the current luma coding block,
- a luma location ( xP, yP ) specifying the top-left sample of the current luma prediction block relative to the top-left luma sample of the current picture,
- variables specifying the width and the height of the luma prediction block, nPbW and nPbH,
- the reference index of the current prediction unit partition refIdxLX (with X being 0 or 1),
- a variable partIdx specifying the index of the current prediction unit within the current coding unit.

Output of this process is

- the prediction mvpLX of the motion vector mvLX (with X being 0 or 1).

The motion vector predictor mvpLX is derived in the following ordered steps.

    1. The derivation process for motion vector predictor candidates from neighboring prediction unit partitions CS, the luma prediction block location ( xP, yP ), the width and the height of the luma prediction block nPbW and nPbH,

refIdxLX (with X being 0 or 1, respectively), and the partition index partIdx as inputs and the availability flags availableFlagLXN and the motion vectors mvLXN with N being replaced by A, B as the output.

2. The derivation process for motion vector predictor candidates from corresponding base layer block is invoked with the luma coding block location ( xC, yC ), the coding block size nCS, the luma prediction block location ( xP, yP ), the width and the height of the luma prediction block nPbW and nPbH, refIdxLX (with X being 0 or 1, respectively), and the partition index partIdx as inputs and the availability flags availableFlagLXBase and the motion vectors mvLXBase as the output.

3. If availableFlagLXBase and one of the availableFlagLXA and availableFlagLXB are equal to 1 or availableFlagLXBase is equal to 0 and both availableFlagLXA and availableFlagLXB are equal to 1 and mvLXA is not equal to mvLXB; availableFlagLXCol is set equal to 0, otherwise, the derivation process for temporal luma motion vector prediction is invoked with luma location ( xP, yP ), the width and the height of the luma prediction block nPbW and nPbH, and refIdxLX (with X being 0 or 1, respectively) as the inputs and with the output being the availability flag availableFlagLXCol and the temporal motion vector predictor mvLXCol.

4. The motion vector predictor candidate list, mvpListLX, is constructed as follows.

    1. mvLXBase, if availableFlagLXBase is equal to 1

    2. mvLXA, if availableFlagLXA is equal to 1

    3. mvLXB, if availableFlagLXB is equal to 1

    4. mvLXCol, if availableFlagLXCol is equal to 1

    1. mvLXA, if availableFlagLXA is equal to 1

    2. mvLXB, if availableFlagLXB is equal to 1

    3. mvLXCol, if availableFlagLXCol is equal to 1

5. When mvLXA and mvLXB have the same value, mvLXB is removed from the list and the variable numMVPCandLX is set to the number of elements within the mvpListLX.

6. The motion vector predictor list is modifed as follows.

- If numMVPCandLX is less than 2, the following applies repeatedly until numMVPCandLX is equal to 2.

    mvpListLX[ numMVPCandLX ][ 0 ] = 0
    mvpListLX[ numMVPCandLX ][ 1 ] = 0
    numMVPCandLX = numMVPCandLX + 1

- Otherwise (numMVPCandLX is greater than or equal to 2), all motion vector predictor candidates mvpListLX[ idx ] with idx greater than 1 are removed from the list.

7. The motion vector of mvpListLX[ mvp_lX_flag[ xP, yP ] ] is assigned to mvpLX.

**Derivation process for motion vector predictor candidates from corresponding base layer block**

Inputs to this process are

- a luma location ( xC, yC ) of the top-left sample of the current luma coding block relative to the top-left luma sample of the current picture,

- a variable nCS specifying the size of the current luma coding block,

- a luma location ( xP, yP ) specifying the top-left sample of the current luma prediction block relative to the top-left luma sample of the current picture,

- variables specifying the width and the height of the luma prediction block, nPbW and nPbH,

- the reference index of the current prediction unit partition refldxLX (with X being 0 or 1),

- a variable scalFactor specifying the spatial scalability factor,

- a variable partIdx specifying the index of the current prediction unit within the current coding unit.

Outputs of this process are

- the motion vectors mvLXBase of the corresponding base layer block,

- the availability flags availableFlagLXBase of the corresponding base layer block.

The variable isScaledFlagLX with X being 0 or 1 is set equal to 0.

The motion vector mvLXBase and the availability flag availableFlagLXBase are derived in the following ordered steps:

1. The sample location (xBase, yBase) is set equal to ((xP + nPbW/2)/scalFactor, (yP + nPbH/2)/scalFactor).

2. The availability flag availableFlagLXBase is set equal to 0 and the both components of mvLXBase are set equal to 0.

3. The availability derivation process for a corresponding base layer block is invoked with the luma location ( xP, yP ), the width and the height of the luma prediction block nPbW and nPbH, the luma location ( xBase, yBase ) is set to ((xP + nPbW/2)/scalFactor, (yP + nPbH/2)/scalFactor) and the partition index partIdx as inputs and the output is assigned to the base layer prediction block availability flag availableBase.

4. When availableBase is equal to TRUE, the variable isScaledFlagLX is set equal to 1.

5. Using scalability factor td and tb are initialized to smallest integers where td/tb is equal to scalability factor (For example in case of dyadic scalability td = 2 and tb = 1)

6. For ( xBase, yBase ) the following applies repeatedly until availableFlagLXBase is equal to 1:

- When availableBase is equal to TRUE, PredModeBase[ xBase][ yBase] is not equal to MODE_INTRA and availableFlagLXBase is equal to 0, the following applies.

  - If, PredFlagLXBase[ xBase ][ yBase ] is equal to 1 and the reference index refldxLXBase[ xBase ][ yBase ] is equal to the reference index of the current prediction unit refldxLX, availableFlagLXBase is set equal to 1 and the following assignments are made.

$$tx = ( 16384 + ( Abs( td ) >> 1 ) ) / td$$

$$distScaleFactor = Clip3( -4096, 4095, ( tb * tx + 32 ) >> 6 )$$

$$mvLXBase = Clip3( -32768, 32767, Sign2( distScaleFactor * MvLXBase[ xBase][ yBase] ) * ((Abs( distScaleFactor * MvLXBase[ xBase][ yBase] ) + 127 ) >>8))$$

$$refldxBase = RefldxLXBase[ xBase ][ yBase ]$$

  - Otherwise, if PredFlagLYBase[ xBase ][ yBase ] (with Y = !X) is equal to 1 and PicOrderCnt( RefPicListYBase[ refldxLYBase[ xBase ][ yBase ] ] ) is equal to PicOrderCnt( RefPicListX[ refldxLX ] ), availableFlagLXBase is set equal to 1 and the following assignments

are made.

$$tx = ( 16384 + ( Abs( td ) >> 1 ) ) / td$$

$$distScaleFactor = Clip3( -4096, 4095, ( tb * tx + 32 ) >> 6 )$$

$$mvLXBase = Clip3( -32768, 32767, Sign2( distScaleFactor *$$
$$MvLYBase[ xBase][ yBase] ) *$$
$$((Abs(distScaleFactor*MvLYBase[ xBase][ yBase])+127)>> 8))$$

$$refIdxBase = to\ RefIdxLYBase[ xBase ][ yBase ]$$

7. When availableFlagLXBase is equal to 0, for ( xBase, yBase ) the following applies repeatedly until available-FlagLXBase is equal to 1:

- When availableBase is equal to TRUE, PredModeBase[ xBase][ yBase ] is not equal to MODE_INTRA and availableFlagLXBase is equal to 0, the following applies.

  - If PredFlagLXBase[ xBase ][ yBase ] is equal to 1, availableFlagLXBase is set equal to 1 and the following assignments are made.

$$tx = ( 16384 + ( Abs( td ) >> 1 ) ) / td$$

$$distScaleFactor = Clip3( -4096, 4095, ( tb * tx + 32 ) >> 6 )$$

$$mvLXBase = Clip3( -32768, 32767, Sign2( distScaleFactor *$$
$$MvLXBase[ xBase ][ yBase ]) * ( (Abs( distScaleFactor *$$
$$MvLXBase[ xBase ][ yBase ]) + 127 ) >> 8 ) )$$

$$refIdxBase = RefIdxLXBase[ xBase ][ yBase ]$$

$$refPicListBase = RefPicListXBase$$

- Otherwise, if PredFlagLY[ xBase ][ yBase ] (with Y = !X) is equal to 1, availableFlagLXBase is set equal to 1 and the following assignments are made.

$$tx = ( 16384 + ( Abs( td ) >> 1 ) ) / td$$

$$distScaleFactor = Clip3( -4096, 4095, ( tb * tx + 32 ) >> 6 )$$

$$mvLXBase = Clip3( -32768, 32767, Sign2( distScaleFactor *$$
$$MvLYBase[ xBase ][ yBase ]) *$$
$$((Abs(distScaleFactor*MvLYBase[ xBase ][ yBase])+127)>>8))$$

$$\text{refIdxBase = to RefIdxLYBase[ xBase ][ yBase ]}$$

$$\text{refPicListBase = RefPicListYBase}$$

- When availableFlagLXBase is equal to 1, and both refPicListBase[ refIdxBase ] and RefPicListX[ refIdxLX ] are short-term reference pictures, mvLXBase is derived as specified below.

$$tx = ( 16384 + ( \text{Abs}( td ) >> 1 ) ) / td$$

$$\text{distScaleFactor = Clip3}( -4096, 4095, ( tb * tx + 32 ) >> 6 )$$

$$\text{mvLXBase = Clip3}( -32768, 32767, \text{Sign2}( \text{distScaleFactor} * \text{MvLXBase}[ xBase ][ y Base] ) * ( (\text{Abs}( \text{distScaleFactor} * \text{MvLXBase}[ xBase ][ yBase]) + 127 ) >> 8 )$$

where td and tb are derived as

$$td = \text{Clip3}( -128, 127, \text{PicOrderCntVal} - \text{PicOrderCnt}( \text{refPicListBase}[ \text{refIdxBase} ] ) )$$

$$tb = \text{Clip3}( -128, 127, \text{PicOrderCntVal} - \text{PicOrderCnt}( \text{RefPicListX}[ \text{refIdxLX} ] ) )$$

**Derivation process for base layer merging candidates**

Inputs to this process are

- a luma location ( xC, yC ) of the top-left sample of the current luma coding block relative to the top-left luma sample of the current picture,
- a variable nCS specifying the size of the current luma coding block,
- a luma location ( xP, yP ) specifying the top-left sample of the current luma prediction block relative to the top-left luma sample of the current picture,
- variables specifying the width and the height of the luma prediction block, nPbW and nPbH,
- the reference index of the current prediction unit partition refIdxLX (with X being 0 or 1),
- a variable scalFactor specifying the spatial scalability factor,
- a variable partIdx specifying the index of the current prediction unit within the current coding unit.

Outputs of this process with X being replaced by 0 or 1 are

- the availability flag availableFlagBase of the corresponding base block,
- the reference indices refIdxLXBase of the corresponding base block,
- the motion vectors mvLXBase of the corresponding base block.

The reference index of the base layer motion vector cannot be directly used for enhancement layer as it might refer to a different picture in enhancement layer. Let's indicate the reference index which will be used for the enhancement layer motion as refIdxLXEnh. The refIdxLXEnh is derived by

$$\text{refIdxLXEnh = refMapTable[LX][refIdxLXBase]}$$

Let's also denote the mapping from reference picture index to corresponding POC for base layer with POC = Ref2POCBase[LX][refIdx] and the same mapping for enhancement layer is denoted by POC = Ref2POCEnh[LX][refIdx]. The refMapTable is initialized once per slice. This initialization can happen by various means:

- The values of refMapTable can be signaled in the bitstream to the decoder.

- The values of the refMapTable can be derived using the corresponding POC values of the reference pictures in enhancement and base layer reference pictures. This derivation could happen by:

  ∘ Searching the reference list for both enhancement and base layer and deriving the refMapTable where the POC value of reference picture at index refIdxBase in base reference picture list corresponds to the same POC value of reference picture at index refIdxEnh in enhancement reference picture list.

  ∘ Furthermore, this searching could take into account the corresponding weighted prediction parameters of each reference picture in the reference picture list.

  ∘ If the aforementioned process could not find a mapping satisfying the above criteria the corresponding entry in the refMapTable could be set to 0.

For the derivation of availableFlagBase with width and the height of the luma prediction block being nPbW and nPbH and (xBase, yBase ) being ((xP + nPbW/2)/scalFactor, (yP+ nPbH)/scalFactor) the following applies.

- If corresponding base layer block including (xBase, yBase) location prediction mode is equal to MODE_INTRA availableFlagBase is set to 0.
- For either of the reference picture lists, if the POC value of the corresponding base layer reference picture for listX is different than POC value of the enhancement layer reference picture, availableFlagBase is set to 0.
- Otherwise, availableFlagBase is set equal to 1 and the following assignments are made.

$$refIdxLXBase = RefIdxLXBase[\ xBase][\ yBase\ ]$$

$$refIdxLXEnh\ = refMapTable[LX][refIdxLXBase]$$

$$refIdxLXBase\ \ = refIdxLXEnh$$

$$mvLXBase = (MvLXBase[\ xBase\ ][\ yBase]/scaleFactor).$$

As was described above the size of the merging candidate list may be increased in some embodiments when the base layer motion vector predictor is used in the enhancement layer, whereas in some other embodiments the number of spatial motion vector predictor candidates may be reduced when the base layer motion vector is used.
In some embodiments a different availability check process than described above may be used. It is also possible that the position of the base layer motion vector predictor and other predictors in the merging candidate list might vary and may be different from the embodiments described above.
In the following some alternatives are briefly described.
During the calculation of the location of the base layer region associated with the current enhancement layer prediction block, any position related to the enhancement layer block may be used. This position can be, for example, the center, inside the bottom-right, or just outside the bottom-right position of the block.
The described motion prediction list modifications can be applied to both the merge mode and the AMVP mode. For the AMVP mode, the predicted information from the base layer may be the motion vectors for the reference picture lists. For the merge mode, the predicted information may be the whole motion information containing the motion vectors and the associated reference indices.
During the list generation of an enhancement layer prediction block, if any of the spatial candidates is unavailable, the motion information from the base layer at the co-located location may be utilized for this unavailable slot.
The motion vectors from the base layer can either be used directly or can be inserted into the list after some operations. These operations may comprise adding an offset, additional scaling and/or any other linear/non-linear transformation.
In the candidate motion list creation, a constraint on the list may be imposed such that the base layer motion prediction candidate does not undergo a redundancy check with another motion predictor candidate.
In the following an example of derivation of luma intra prediction mode to include base layer intra direction mode in the most probable mode list is described in more detail.

Inputs to this process are the location of the luma sample ( xB, yB ) specifying the top-left luma sample of the current block relative to the top left luma sample of the current picture, the size of the current luma prediction block, the spatial scalability ratio between the current picture and base layer picture, and intra prediction mode information of the base layer block that corresponds to the current block.

The size of the current luma prediction block may be provided to the intra encoder 308 e.g. as a variable log2PbSize, the spatial scalability ratio may be provided to the intra encoder 308 e.g. as a variable scaleRatio, and the intra prediction mode information of the base layer block that corresponds to the current block may be provided to the intra encoder 308 e.g. as a variable IntraPredModeBase[ xBase ][ yBase ], where ( xBase, yBase ) may be calculated from ( xB, yB ) using the spatial scalability ratio (scaleRatio) between the current picture and base layer picture with the following eqauations: xBase = xB/ scaleRatio and yBase = yB / scaleRatio.

Table 1 specifies examples of the value for the intra prediction mode and the associated names:

Table 1

| | |
|---|---|
| 0 | Intra Planar |
| 1 | Intra_DC |
| Otherwise (2..34) | Intra_Angular |

IntraPredMode[ xB ][ yB ] labelled 0..34 represents directions of predictions as illustrated in Figure 7. The IntraPredMode[ xB ][ yB ] may be derived as follows. The neighbouring locations ( xBA, yBA ) and ( xBB, yBB ) of the current block are set equal to ( xB-1, yB ) and ( xB, yB-1 ), respectively. For N being either replaced A or B, the variables candIntraPredModeN may be derived as follows. The availability derivation process for a block in z-scan order may be invoked with the location ( xCurr, yCurr ) set equal to ( xB, yB ) and the neighbouring location ( xN, yN ) set equal to ( xBN, yBN ) as the input and the output is assigned to availableN. The candidate intra prediction mode candIntraPred-ModeBase is equal to IntraPredModeBase[ xBase ][ yBase ].

The candidate intra prediction mode candIntraPredModeN may be derived as follows. If the value of the variable availableN is equal to FALSE, the candidate intra prediction mode for the current block is set to Intra DC, i.e. the variable candIntraPredModeN is set equal to Intra_DC. Otherwise (i.e. the value of the variable availableN is not equal to FALSE), if the prediction mode of the neighbouring locations ( xBA, yBA ) and ( xBB, yBB ) of the current block (PredMode[ xBN ][ yBN ]) is not equal to MODE_INTRA, the candidate intra prediction mode for the current block is set to Intra_DC (i.e. candIntraPredModeN is set equal to Intra DC). Otherwise, if N is equal to B and yB-1 is less than (( yB >> Log2CtbSizeY ) << Log2CtbSizeY), intraPredModeB is set equal to Intra_DC. If N is not equal to B and yB-1 is less than ((yB >> Log2CtbSizeY ) << Log2CtbSizeY), the candidate intra prediction mode for the current block is set to the same than the intra prediction mode of the neighbouring location, i.e. candIntraPredModeN is set equal to IntraPredMode[ xBN ][ yBN ].

The values for the candModeList[ x ] with x=0..2 may be derived as follows. If the candidate intra prediction modes for the neighbouring locations ( xBA, yBA ) and ( xBB, yBB ) of the current block are the same (candIntraPred-ModeB is equal to candIntraPredModeA), the following applies. If candIntraPredModeA is less than 2 (either Intra_Planar or Intra_DC), candModeList[ x ] with x=0..2 may be derived as follows.

If candIntraPredModeBase is available and if it is different from candIntraPredModeA, candIntraPredModeB, Intra_Planar or Intra DC, candModeList[ x ] with x=0..2 may be derived as candModeList[0] = candIntraPredModeBase; candModeList[1] = Intra Planar; and candModeList[2] = Intra_DC.

Otherwise, candModeList[ x ] with x=0..2 may be derived as candModeList[0] = Intra_Planar; candModeList[1] = Intra DC; and candModeList[2] = Intra_Angular (26).

Otherwise, i.e. candIntraPredModeA is Intra Angular, candModeList[ x ] with x=0..2 may be derived as follows.

If candIntraPredModeBase is available and if it is different from candIntraPredModeA, 2 + (( candIntraPredModeA + 29 ) % 32 ), candModeList[ x ] with x=0..2 is derived as candModeList[0] = candIntraPred-ModeBase; candModeList[1] = candIntraPredModeA; and candModeList[2] = 2 + ( ( candIntraPredModeA + 29 ) % 32 ).

Otherwise, candModeList[ x ] with x=0..2 may be derived as candModeList[0] = candIntraPredModeA; cand-ModeList[1] = 2 + ( ( candIntraPredModeA + 29 ) % 32 ); candModeList[2] = 2 + ( ( candIntraPredModeA - 2 + 1 ) % 32 ).

Otherwise, i.e. candIntraPredModeB is not equal to candIntraPredModeA, the following may apply.

The candModeList[ x ] with x=0..2 is derived as follows. If candIntraPredModeBase is available and if it is different from candIntraPredModeA, candIntraPredModeB, then candModeList[0] = candIntraPredModeBase; candModeList[1] = candIntraPredModeA; and candModeList[2] = candIntraPredModeB.

Otherwise candModeList[0] and candModeList[1] are derived as follows:

candModeList[0] = candIntraPredModeA; and

candModeList[1] = candIntraPredModeB.

If none of candModeList[0] and candModeList[1] is equal to Intra Planar, candModeList[2] is set equal to Intra_Planar. Otherwise, if none of candModeList[0] and candModeList[1] is equal to Intra DC, candModeList[2] is set equal to Intra_DC. Otherwise, candModeList[2] is set equal to Intra_Angular (26).

The value IntraPredMode[ xB ][ yB ] may be derived by applying the following procedure:

If prev_intra_luma_pred_flag[ xB ][ yB ] is equal to 1, the IntraPredMode[ xB ][ yB ] is set equal to candModeList[ mpm_idx ]. Otherwise IntraPredMode[ xB ][ yB ] may be derived e.g. as follows.

The modification of an array candModeList[x], x=0..2 may include the following.

When candModeList[0] is greater than candModeList[1], both values are swapped as ( candModeList[0], candModeList[1] ) = Swap( candModeList[0], candModeList[1] ).

When candModeList[0] is greater than candModeList[2], both values are swapped as ( candModeList[0], candModeList[2] ) = Swap( candModeList[0], candModeList[2] ).

When candModeList[1] is greater than candModeList[2], both values are swapped as ( candModeList[1], candModeList[2] ) = Swap( candModeList[1], candModeList[2] ).

IntraPredMode[xB][yB] may be derived as follows.

IntraPredMode[ xB ][ yB ] is set equal to rem_intra_luma_pred_mode[ xB ][ yB ]. When IntraPredMode[ xB ][ yB ] is greater than or equal to candModeList[ 0 ], the value of IntraPredMode[ xB ][ yB ] is increased by one. When IntraPredMode[ xB ][ yB ] is greater than or equal to candModeList[ 1 ], the value of IntraPredMode[ xB ][ yB ] is increased by one. When IntraPredMode[ xB ][ yB ] is greater than or equal to candModeList[ 2 ], the value of IntraPredMode[ xB ][ yB ] is increased by one.

The above procedure may also be exemplified with the following steps:

The candModeList[ x ] with x=0..2 is derived as follows:

- If candIntraPredModeB is equal to candIntraPredModeA, the following applies:

  - If candIntraPredModeA is less than 2 (either Intra_Planar or Intra DC),

    i. If candIntraPredModeBase is available and if it is different from candIntraPredModeA, candIntraPredModeB, Intra_Planar or Intra DC; candModeList[ x ] with x=0..2 is derived as:

    candModeList[0] = candIntraPredModeBase
    candModeList[1] = Intra_Planar
    candModeList[2] = Intra_DC

    ii. Otherwise, candModeList[ x ] with x=0..2 is derived as:

    candModeList[0] = Intra_Planar
    candModeList[1] = Intra_DC
    candModeList[2] = Intra_Angular (26)

  - Otherwise (candIntraPredModeA is Intra_Angular),

    i. If candIntraPredModeBase is available and if it is different from candIntraPredModeA, 2 + (( candIntraPredModeA + 29 ) % 32 ); candModeList[ x ] with x=0..2 is derived as:

    candModeList[0] = candIntraPredModeBase
    candModeList[1] = candIntraPredModeA
    candModeList[2] = 2 + ( ( candIntraPredModeA + 29 ) % 32 )

    ii. Otherwise, candModeList[ x ] with x=0..2 is derived as:

    candModeList[0] = candIntraPredModeA
    candModeList[1] = 2 + (( candIntraPredModeA + 29 ) % 32 )
    candModeList[2] = 2 + (( candIntraPredModeA - 2 + 1 ) % 32 )

- Otherwise (candIntraPredModeB is not equal to candIntraPredModeA), the following applies:

  - The candModeList[ x ] with x=0..2 is derived as follows:
  - If candIntraPredModeBase is available and if it is different from candIntraPredModeA, candIntraPred-ModeB,
    candModeList[0] = candIntraPredModeBase
    candModeList[1] = candIntraPredModeA
    candModeList[2] = candIntraPredModeB
  - Otherwise candModeList[0] and candModeList[1] are derived as follows:
  - candModeList[0] = candIntraPredModeA
    candModeList[1] = candIntraPredModeB
  - If none of candModeList[0] and candModeList[1] is equal to Intra_Planar, candModeList[2] is set equal to Intra Planar,
  - Otherwise, if none of candModeList[0] and candModeList[1] is equal to Intra_DC, candModeList[2] is set equal to Intra DC,
  - Otherwise, candModeList[2] is set equal to Intra Angular (26).

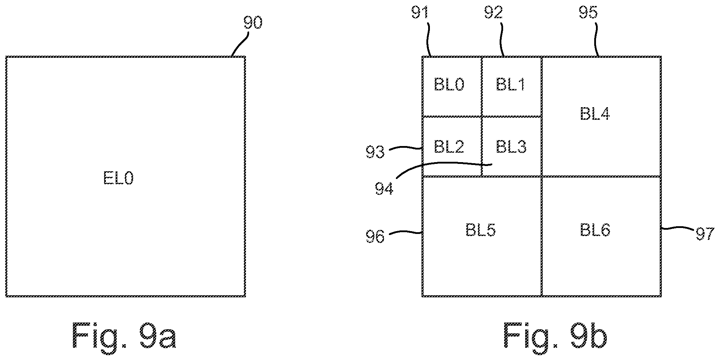

In the above described implementation it was assumed that the candIntraPredModeBase equals to the prediction mode of the block from the base layer, whose position is top left of the prediction blocks that is spanned by the prediction block of enhancement layer. An example of this is illustrated as Block BL0 in Figure 9a (also referred by the reference numeral 90 in Figure 9a). In some example embodiments, the candIntraPredModeBase may be equal to prediction modes other than the mode of the prediction block of the top-left block. In some other example embodiments the candIntraPredModeBase may be calculated using some or all of the prediction modes of the prediction blocks in the base layer, spanned by the prediction modes of the enhancement layer.

Figures 9a and 9b illustrate an example in which the prediction block 90 of the enhancement layer spans seven blocks 91--97 from the base layer.

In some embodiments the intra prediction mode from the base layer can be placed in any position in the most-probable-mode list. If a standard scalable coding is used (i.e. base layer is coded with a video codec other than HEVC), there could be a process to map the intra prediction mode in the base layer to the enhancement layer intra prediction mode. This process could be done e.g. by defining a look up table.

In the above described implementation it was assumed that the size of the most-probable-mode list stays the same. However, the size of the most-probable-mode candidate list can be increased for the enhancement layer by utilizing the base layer intra prediction mode.

In some other embodiments the indication of the mode for the enhancement layer may be performed e.g. as follows. A number of bins may be reserved for indicating the mode. Each bin may receive a binary value such as 0 or 1 which may be interpreted e.g. as false or true. In some embodiments the value 0 indicates a false and the value 1 indicates a true, but this may also be the other way around. Further, a combination of more than one bin may be interpreted to represent a value as will be described later in this specification.

Some examples of the structure 80 of the bins is illustrated in Figures 8a and 8b. In the example of Figure 8a the first bin 81 may be used to indicate whether the prediction mode of the base layer and the prediction mode of the enhancement layer are the same or not (i.e. the prediction modes are equal or not). If so, the first bin may receive the value 1 (true). Otherwise, the first bin may receive the value 0 (false). The second bin 82 may be used to indicate whether the absolute value of the difference $\Delta$ of the prediction mode of the base layer and the prediction mode of the enhancement layer is 1 ($\Delta=\pm1$). If so, the first bin may receive the value 1 (true). Otherwise, the first bin may receive the value 0 (false). The third bin 82 may be used to indicate whether the absolute value of the difference $\Delta$ of the prediction mode of the base layer and the prediction mode of the enhancement layer is 2 ($\Delta=\pm2$). If so, the second bin may receive the value 1 (true). Otherwise, the second bin may receive the value 0 (false). The fourth bin 83 may be used to indicate the sign of the difference $\Delta$ of the prediction mode of the base layer and the prediction mode of the enhancement layer. For example, if the sign is negative, the fourth bin may receive the value 1. Otherwise, the first bin may receive the value 0.

The other bins 85 of the structure 80 may indicate the absolute value of the difference $\Delta$ of the prediction mode of the base layer and the prediction mode of the enhancement layer, when the difference is greater than 2 or smaller than -2. The bins 85 can be filled with the value $\Delta$ subtracted with a certain constant, e.g. 3 ($\Delta$-3). If the maximum value of the mode is 34, the maximum value of the difference is also 34, wherein when the constant 3 is subtracted by 3, five bins are sufficient to express the value of the difference $\Delta$ ($\Delta=\pm3-\pm34$).

For the determination of the values of the bins the encoder (e.g. the intra encoder 308 of the encoder) may examine what is the difference between the prediction mode of the base layer and the prediction mode of the enhancement layer. For example, the prediction mode of the base layer could be 4 and the prediction mode of the enhancement layer could be 7 wherein the difference were -3. As another example, the prediction mode of the base layer could be 2 and the prediction mode of the enhancement layer could be 0 (Intra DC) wherein the difference were 2.

When the difference between the prediction modes has been determined for the current block, the encoder sets the values of the bins accordingly, e.g. using the principles presented above, or using other principles.

In some embodiments the first bin indicates whether the difference between the base layer intra prediction mode and the enhancement layer intra prediction mode is equal to zero, i.e. the base layer intra prediction mode is the same than the enhancement layer intra prediction mode or not. The second bin can be coded as:

If the base layer intra prediction mode is Intra_Planar, the second bin indicates whether the enhancement layer intra prediction mode is Intra_DC or not. If the base layer intra prediction mode is Intra_DC, the second bin indicates whether the enhancement layer intra prediction mode is Intra_Planar or not. Otherwise (i.e. if the base layer intra prediction mode is neither Intra_Planar nor Intra DC), the second bin indicates whether enhancement layer intra prediction mode is Intra_Planar (or Intra DC).

If the base layer intra prediction mode is Intra_Planar (or Intra DC), the remaining bins indicate the enhancement layer intra prediction mode (which may take 33 values in this example embodiment) which can be coded in various ways. First, it may be coded by six bins with equal probability, or one of the enhancement layer intra prediction modes (e.g. the most probable one) can be coded with one bin and the rest can be coded by five bins with equal probability, or the base layer intra prediction mode is assumed as Intra_Angular(26) and the difference is calculated again. In this example embodiment the difference values range from -8 to 26 which can be coded by 1 bin for sign and five bins for magnitude of the difference. Furthermore, one bin may be used to indicate whether the enhancement layer intra prediction mode is in the vertical directions range (18 < Intra_Angular < 35) or horizontal directions range (1 < Intra_Angular < 19). If the enhancement layer intra prediction mode is in the vertical (horizontal) directions range, base layer intra prediction mode is taken as Intra_Angular (26 for Vertical and 10 for Horizontal). The difference between the two may be calculated and the sign is indicated by one bin and magnitude is indicated by four bins.

If the base layer intra prediction mode is neither Intra_Planar nor Intra DC, the third bin indicates whether the enhancement layer intra prediction mode is Intra DC (or Intra_Planar).

If the base layer intra prediction mode is neither Intra_Planar nor Intra DC, the fourth bin indicates the sign of the difference, the fifth bin indicates whether the absolute value of the difference is equal to 1 or not, the sixth bin indicates whether the absolute value of the difference is equal to 2 or not, and the remaining 32 absolute value of the difference are coded with five bins with equal probability.

In some embodiments the intra prediction mode of the enhancement layer may be coded according to the value of the intra prediction mode of the base layer block. For example, the difference between the intra prediction modes of the base layer and the enhancement layer can be coded. A non-limiting example coding scheme is as follows:

The difference between the intra prediction modes of the base layer and the enhancement layer blocks is taken as the value to be coded. In some embodiments the possible value of the indices of the coding modes are between 0 to 34. Hence, the difference between the intra prediction modes of the base layer and the enhancement layer blocks is within the range from -34 to +34.

Various syntax elements may be defined e.g. as follows in order to efficiently code this value. A binary valued syntax element indicating whether the difference is 0 or not and may be defined as luma_intra_pred_equal_base_flag. If the value of luma_intra_pred_equal_base_flag is not equal to 1, a binary valued syntax element indicating the sign of the difference may be defined as luma_intra_pred_diff_sign_flag. It should be noted that this syntax element may only be present if luma_intra_pred_equal_base_flag takes a value of 0.

Another binary valued syntax element indicating whether the absolute value of the difference is equal to 1 or not may also be defined e.g. as a luma_intra_pred_diff_abs_equal1_flag. If the value of luma_intra_pred_diff_abs_equal1_flag is not equal to 1, a binary valued syntax element indicating whether the absolute value of the difference is equal to 2 or not may be defined as luma_intra_pred_diff_abs_equal2_flag. If the value of luma_intra_pred_diff_abs_equal2_flag is not equal to 1, a non-binary valued syntax element indicating the absolute value of the difference minus 3 (which corresponds to 32 different values ranging from 0 to 31) may be defined as luma_intra_pred_diff_abs_remaining.

One step of encoding process for a context adaptive binary arithmetic coding (CABAC) or context-based variable length coding or any similar entropy coding is binarization where non-binary valued syntax elements are mapped to a binary sequence called a bin string. For binary valued syntax elements this binarization step is bypassed. In the above example only the syntax element called luma_intra_pred_diff_abs_remaining may require binarization which may be done using Fixed-Length (FL) binarization scheme of CABAC.

In the regular coding mode of CABAC, a bin enters the context modeling stage, where a probability model is chosen according to previously coded syntax elements or bins. Then the bin value and the assigned context model are entered to the regular coding engine where the final stage of arithmetic coding takes place together with subsequent model updating. An alternative to the regular coding mode, there may also be a bypass coding mode which is a simplified coding engine that does not use an explicitly assigned model which allows a speedup of the encoding process. In the above example, all the syntax elements may be coded with 1 bin except luma_intra_pred_diff_abs_remaining which may be coded with five bins. The bin value corresponding to the syntax element luma_intra_pred_diff_sign_flag may be coded with the bypass coding mode and rests of the bins may be coded with regular coding engine with their own contexts. Therefore, in some embodiments of the coding process, a first bin indicates whether the difference is equal to zero or not, i.e. the base layer intra prediction mode is equal to the enhancement layer intra prediction mode or not. A second bin indicates the sign of the difference. The sign may either be positive or negative. A third bin indicates whether the absolute value of the difference is equal to 1 or not. A fourth bin indicates whether the absolute value of the difference is equal to 2 or not. Since the difference value ranges from -34 to 34 and values 0, +-1 and +-2 are covered by the previous bins and the sign of the difference value is indicated by the second bin, there are a total of 32 absolute values that the difference can take. The remaining values can be coded by assigning the absolute value of the difference minus 3 to five bins with equal probability.

In this coding scheme, it is assumed that the most probable value of the difference is zero followed by +-1 with equal probability and +-2 with equal probability. The rest of the difference values are assumed to have equal (but much lower) probability.

In the above example derivation process for luma intra prediction mode could also be modified e.g. as deriving the IntraPredMode[ xB ][ yB ] by applying the following procedure.

If luma_intra_pred_equal_base_flag[ xB ][ yB ] is equal to 1 then IntraPredMode[ xB ][ yB ] is equal to IntraPredModeBase[ xBase ][ yBase ] and it is set accordingly. Otherwise, IntraPredMode[ xB ][ yB ] may be derived as follows:

The sign of the difference between the intra layer prediction modes of corresponding base layer block and current block is determined. This may comprise the following:

If luma_intra_pred_diff_sign_flag[ xB ][ yB ] is equal to 1, then a variable indicating the sign of the difference called signOfDiff is set to 1. Otherwise, the variable indicating the sign of the difference (signOfDiff) is set to -1.

If luma_intra_pred_diff_abs_equal1_flag[ xB ][ yB ] is equal to 1, then a variable indicating the absolute value of the difference called magnOfDiff is set to 1. Otherwise, if luma_intra_pred_diff_abs_equal2_flag[ xB ][ yB ] is equal to 1, then the variable indicating the absolute value of the difference (magnOfDiff) is set to 2. Otherwise the variable indicating the absolute value of the difference (magnOffDiff) is set to (luma_intra_pred_diff_abs_remaining[ xB ][ yB ] + 3 ).

The value of the intra prediction mode IntraPredMode[ xB ][ yB ] is set to ( IntraPredModeBase[ xBase ][ yBase ] - (signOfDiff * magnOfDiff ) ).

As a conclusion of the above described process, the following notations may be derived. The first bin indicates whether the difference between the base layer intra prediction mode and the enhancement layer intra prediction mode is equal to zero, i.e. the base layer intra prediction mode is the same than the enhancement layer intra prediction mode or not. The second bin indicates whether the difference is equal to -1 or not, the third bin indicates whether the difference is equal to +1 or not, the fourth bin indicates the sign of the difference, and the fifth bin indicates whether the absolute value of the difference is equal to 2 or not.

Since in this example embodiment the difference value ranges from -34 to 34 and values 0, +-1 and +-2 are covered by the previous bins and the sign of the difference value is indicated by the fourth bin, there are a total of 32 absolute values that the difference can take. The remaining values can be coded by assigning absolute value of the difference minus 2 to 5 bins with equal probability.

For each bin, various context assignments may be done. During the context assignments, the intra prediction mode information of the base layer and the enhancement layer in the neighboring blocks may be utilized.

In this coding scheme, it is assumed that the most probable value of the difference is zero followed by -1, followed by +1. The rest of the difference values are assumed to have equal (but probably much lower) probability.

The first alternative of the above procedure may also be exemplified with the following steps:

- First bin indicates whether the difference is equal to zero, i.e. base layer intra prediction mode is equal to enhancement layer intra prediction mode or not.
- Second bin can be coded as:

  ◦ If base layer intra prediction mode is Intra_Planar, second bin indicates whether enhancement layer intra prediction mode is Intra_DC or not.
  ◦ If base layer intra prediction mode is Intra DC, second bin indicates whether enhancement layer intra prediction mode is Intra_Planar or not.

○ Otherwise (if base layer intra prediction mode is neither Intra_Planar nor Intra DC), second bin indicates whether enhancement layer intra prediction mode is Intra_Planar (or Intra DC).

- If base layer intra prediction mode is Intra Planar (or Intra DC), remaining bins indicate the enhancement layer intra prediction mode (which may take 33 values) which can be coded in various ways:

  ○ By 6 bins with equal proability
  ○ One of the enhancement layer intra prediction modes (preferably the most probable one) can be coded with 1 bin and the rest can be coded by 5 bins with equal probability.
  ○ Base layer intra prediction mode is assumed as Intra_Angular(26) and the difference is calculated again. The difference values range from -8 to 26 which can be coded by 1 bin for sign and 5bins for magnitude of the difference.
  ○ One bin is used to indicate the whether the enhancement layer intra prediction mode is in the vertical directions range (18 < Intra_Angular < 35) or horizontal directions range (1 < Intra_Angular < 19). If the enhancement layer intra prediction mode is in the vertical (horizontal) directions range, base layer intra prediction mode is taken as Intra Angular (26 for Vertical and 10 for Horizontal). The difference between the two is calculated and the sign is indicated by 1 bin and magnitude is indicated by 4 bins.

- If base layer intra prediction mode is neither Intra_Planar nor Intra DC, the third bin indicates whether the enhancement layer intra prediction mode is Intra DC (or Intra_Planar).
- If base layer intra prediction mode is neither Intra_Planar nor Intra DC, fourth bin indicates the sign of the difference, fifth bin indicates whether the absolute value of the difference is equal to 1 or not, sixth bin indicates whether the absolute value of the difference is equal to 2 or not and finally the remaining 32 absolute value of the difference are coded with 5 bins equal probability.

The second alternative of the above procedure may also be exemplified with the following steps:

- First bin indicates whether the difference is equal to zero, i.e. base layer intra prediction mode is equal to enhancement layer intra prediction mode or not.
- Second bin indicates whether the difference is equal to -1 or not
- Third bin indicates whether the difference is equal to +1 or not
- Fourth bin indicates the sign of the difference.
- Fifth bin indicates whether the absolute value of the difference is equal to 2 or not.
- Since the difference values ranges from -34 to 34 and values 0, +-1 and +-2 are covered by the previous bins and the sign of the difference value is indicated by the fourth bin, there are a total of 32 absolute values that the difference can take. The remaining values can be coded by assigning absolute value of the difference minus 2 to 5 bins with equal probability.
- For each bin, various context assignments can be done. During the context assignments, the intra prediction mode information of base and enhancement layer in the neighboring blocks can be utilized.

In this coding scheme, it is assumed that the most probable value of the difference is zero followed by -1, followed by +1. The rest of the difference values are assumed to have equal (but much lower) probability.

In some embodiments, if the base layer information is not available, the base layer information has been lost, or for some other reason the IntraPredModeBase can be set to a predetermined value, such as INTRA_DC.

In some embodiments the above described examples of using a set of bins to indicate the difference $\Delta$ between the prediction modes may be used, for example, only when the base layer information is available, the base layer information has not been lost, or for some other reason. In some embodiments whether to use the above described examples of using a set of bins to indicate the difference $\Delta$ between the prediction modes may also be indicated in a bitstream so that the decoder may use this indication in the decoding process.

In the following an example of a coding unit syntax and coding unit semantics are provided.

| coding_unit( x0, y0, log2CbSize ) { | Descriptor |
|---|---|
|    if( transquant_bypass_enable_flag) { | |
|       **cu_transquant_bypass_flag** | ae(v) |
|    } | |

(continued)

| coding_unit( x0, y0, log2CbSize ) { | Descriptor |
|---|---|
|    if( slice_type != I) | |
|       **skip_flag**[ x0 ][ y0 ] | ae(v) |
|    if( skip_flag[ x0 ][ y0 ] ) | |
|       prediction_unit( x0, y0, log2CbSize ) | |
|    else { | |
|       nCbS = ( 1 << log2CbSize) | |
|       if( slice_type != I) | |
|          **pred_mode_flag** | ae(v) |
|       if( PredMode[ x0 ][ y0 ] != MODE_INTRA \|\| log2CbSize = = Log2MinCbSize ) | |
|          **part_mode** | ae(v) |
|       if( PredMode[ x0 ][ y0 ] = = MODE_INTRA ) { | |
|          if( PartMode = = PART_2Nx2N && pcm_enabled_flag && <br>            log2CbSize >= Log2MinIPCMCUSize && <br>            log2CbSize <= Log2MaxIPCMCUSize ) | |
|             **pcm_flag** | ae(v) |
|          if( pcm_flag) { | |
|             **num_subsequent_pcm** | tu(3) |
|             NumPCMBlock = num_subsequent_pcm + 1 | |
|             while( !byte_aligned( ) ) | |
|                **pcm_alignment_zero_bit** | f(1) |
|             pcm_sample( x0, y0, log2CbSize ) | |
|          } else { | |
|             pbOffset = ( PartMode = = PART_NxN ) ? ( nCbS / 2 ) : 0 | |
|             for( j = 0; j <= pbOffset; j = j + pbOffset ) | |
|                for( i = 0; i <= pbOffset; i = i + pbOffset) { | |
|                   **luma_intra_pred_equal_base_flag**[x0 + i][y0 + j] | ae(v) |
|                } | |
|             for( j = 0; j <= pbOffset; j = j + pbOffset ) | |
|                for( i = 0; i <= pbOffset; i = i + pbOffset) { | |
|                  if( luma_intra_pred_equal_base_flag [ x0 + i ][ y0+ j ] ) | |
|                   **luma_intra_pred_diff_sign_flag**[ x0 + i ][ y0 + j ] <br>                  **luma_intra_pred_diff_abs_equal1 _flag**[ x0 + i ][ y0 + j ] <br>                  if( luma_intra_pred_diff_abs_level_equal1_flag [ x0 + i ][ y0+ j ] ) <br>                     **luma_intra_pred_diff_abs_equal2_flag**[ x0 + i ][ y0 + j ] <br>                     if( luma_intra_pred_diff_abs_level_equal2_flag [x0 + i ] [ y0+ j ] ) <br>                       **luma_intra_pred_diff_abs_remaining**[ x0 + i ][ y0 + j ] | ae(v) |
|                } | |
|             **intra_chroma_pred_mode**[ x0 ][ y0 ] | |
|          } | |

(continued)

| coding_unit( x0, y0, log2CbSize ) { | Descriptor |
|---|---|
| } else { | |
| if( PartMode = = PART_2Nx2N) | |
| prediction_unit( x0, y0, nCbS, nCbS ) | ae(v) |
| else if( PartMode = = PART_2NxN) { | |
| prediction_unit( x0, y0, nCbS, nCbS / 2 ) | |
| prediction_unit( x0, y0 + ( nCbS / 2 ), nCbS, nCbS / 2 ) | |
| } else if( PartMode = = PART_Nx2N) { | |
| prediction_unit( x0, y0, nCbS / 2, nCbS ) | |
| prediction_unit( x0 + ( nCbS / 2 ), y0, nCbS / 2, nCbS ) | |
| } else if( PartMode = = PART_2NxnU ) { | |
| prediction_unit(x0, y0, nCbS, nCbS / 4 ) | |
| prediction_unit( x0, y0 + ( nCbS / 4 ), nCbS, nCbS *3 / 4 ) | |
| } else if( PartMode = = PART_2NxnD ) { | |
| prediction_unit( x0, y0, nCbS, nCbS *3 / 4 ) | |
| prediction_unit( x0, y0 + (nCbS * 3 / 4 ), nCbS, nCbS / 4 ) | |
| } else if( PartMode = = PART_nLx2N ) { | |
| prediction_unit( x0, y0, nCbS /4, nCbS ) | |
| prediction_unit( x0 + ( nCbS / 4 ), y0, nCbS *3 / 4, nCbS) | |
| } else if( PartMode = = PART_nRx2N ) { | |
| prediction_unit( x0, y0, nCbS *3 / 4, nCbS ) | |
| prediction_unit( x0 + ( nCbS * 3 / 4 ), y0, nCbS / 4, nCbS ) | |
| } else { /* PART_NxN */ | |
| prediction_unit( x0, y0, nCbS / 2, nCbS / 2) | |
| prediction_unit( x0 + ( nCbS / 2 ), y0, nCbS / 2, nCbS / 2 ) | |
| prediction_unit(x0, y0 + ( nCbS / 2 ), nCbS / 2, nCbS / 2 ) | |
| prediction_unit( x0 + (nCbS / 2 ), y0 + (nCbS / 2 ), nCbS / 2, nCbS / 2 ) | |
| } | |
| } | |
| if( !pcm_flag) { | |
| if( PredMode[ x0 ][ y0 ] != MODE_INTRA && !(PartMode == PART 2Nx2N && merge_flag[x0][y0]) ) | |
| **no_residual_syntax_flag** | |
| if( !no residual syntax_flag ) { | |
| MaxTrafoDepth = ( PredMode[ x0 ][ y0] == MODE_INTRA ? max_transform_hierarchy_depth_intra + IntraSplitFlag : max transform hierarchy depth inter) | |
| transform_tree( x0, y0 x0, y0, log2CbSize, 0, 0 ) | |
| } | ae(v) |
| } | |

(continued)

| coding_unit( x0, y0, log2CbSize ) { | Descriptor |
|---|---|
| } | |
| } | |

The variables l**uma_intra_pred_equal_base_flag**[x0 + i][y0 + j],
**luma_intra_pred_diff_sign_flag**[x0 + i][y0 + j],
**luma_intra_pred_diff_abs_equal1_flag**[x0 + i][y0 + j],
**luma_intra_pred_diff_abs_equal2_flag**[x0 + i][y0 + j] and
**luma_intra_pred_diff_abs_remaining**[x0 + i][y0 + j] specify the intra prediction mode for luma samples.

**intra_chroma_pred_mode**[ x0 ][ y0 ] specifies the intra prediction mode for chroma samples. The array indices x0, y0 specify the location ( x0, y0 ) of the top-left luma sample of the considered prediction block relative to the top-left luma sample of the picture.

Reference frames used in encoding may be stored to the reference frame memory. Each reference frame may be included in one or more of the reference picture lists, within a reference picture list, each entry has a reference index which identifies the reference frame. When a reference frame is no longer used as a reference frame it may be removed from the reference frame memory or marked as "unused for reference" or a non-reference frame wherein the storage location of that reference frame may be occupied for a new reference frame.

As described above, an access unit may contain slices of different component types (e.g. primary texture component, redundant texture component, auxiliary component, depth/disparity component), of different views, and of different scalable layers. A component picture may be defined as a collective term for a dependency representation, a layer representation, a texture view component, a depth view component, a depth map, or anything like. Coded component pictures may be separated from each other using a component picture delimiter NAL unit, which may also carry common syntax element values to be used for decoding of the coded slices of the component picture. An access unit can consist of a relatively large number of component pictures, such as coded texture and depth view components as well as dependency and layer representations. The coded size of some component pictures may be relatively small for example because they can be considered to represent deltas relative to base view or base layer and because depth component pictures may be relatively easy to compress. When component picture delimiter NAL units are present in the bitstream, a component picture may be defined as a component picture delimiter NAL unit and the subsequent coded slice NAL units until the end of the access unit or until the next component picture delimiter NAL unit, exclusive, whichever is earlier in decoding order.

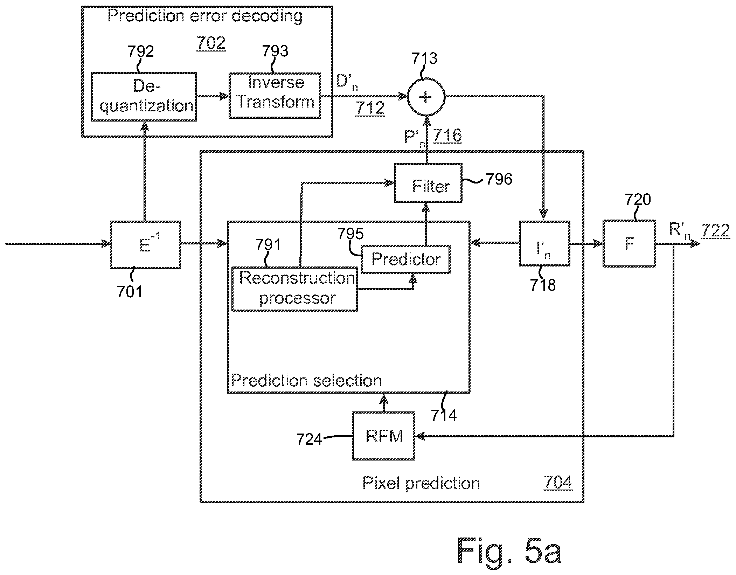

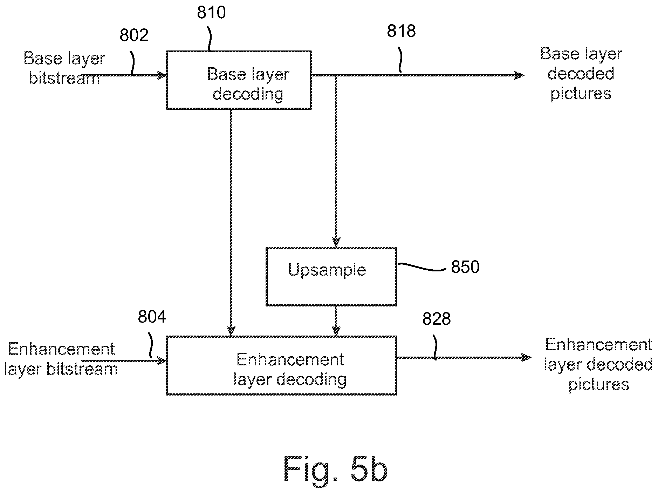

For completeness a suitable decoder is hereafter described. At the decoder side similar operations are performed to reconstruct the image blocks. Figure 5a shows a block diagram of a video decoder suitable for employing embodiments of the invention. Figure 5b shows a block diagram of a spatial scalability decoding apparatus 800 comprising a base layer decoding element 810 and an enhancement layer decoding element 820. The base layer decoding element 810 decodes the encoded base layer bitstream 802 to a base layer decoded video signal 818 and, respectively, the enhancement layer decoding element 820 decodes the encoded enhancement layer bitstream 804 to an enhancement layer decoded video signal 828. The spatial scalability decoding apparatus 800 may also comprise an upsampler 850 for upsampling reconstructed base layer pixel values.

The base layer decoding element 810 and the enhancement layer decoding element 820 may comprise similar elements with the encoder depicted in Figure 5a or they may be different from each other. In other words, both the base layer decoding element 810 and the enhancement layer decoding element 820 may comprise all or some of the elements of the decoder shown in Figure 5a. In some embodiments the same decoder circuitry may be used for implementing the operations of the base layer decoding element 810 and the enhancement layer decoding element 820 wherein the decoder is aware the layer it is currently decoding.

The decoder shows an entropy decoder 700 which performs an entropy decoding on the received signal. The entropy decoder thus performs the inverse operation to the entropy encoder 330 of the encoder described above. The entropy decoder 700 outputs the results of the entropy decoding to a prediction error decoder 702 and pixel predictor 704.

The pixel predictor 704 receives the output of the entropy decoder 700. The output of the entropy decoder 700 may include an indication on the prediction mode used in encoding the current block. A predictor selector 714 within the pixel predictor 704 may determine that the current block to be decoded is an enhancement layer block. Hence, the predictor selector 714 may select to use information from a corresponding block on another layer such as the base layer to determine the prediction mode from e.g. the most probable mode list while decoding the current enhancement layer block.

The predictor selector may output a predicted representation of an image block 716 to a first combiner 713.

The predicted representation of the image block 716 is used in conjunction with the reconstructed prediction error signal 712 to generate a preliminary reconstructed image 718. The preliminary reconstructed image 718 may be used in the predictor 714 or may be passed to a filter 720. The filter 720 applies a filtering which outputs a final reconstructed signal 722. The final reconstructed signal 722 may be stored in a reference frame memory 724, the reference frame memory 724 further being connected to the predictor 714 for prediction operations.

The prediction error decoder 702 receives the output of the entropy decoder 700. A dequantizer 792 of the prediction error decoder 702 may dequantize the output of the entropy decoder 700 and the inverse transform block 793 may perform an inverse transform operation to the dequantized signal output by the dequantizer 792. The output of the entropy decoder 700 may also indicate that prediction error signal is not to be applied and in this case the prediction error decoder produces an all zero output signal.

It is assumed that the decoder has decoded the corresponding base layer block from which information for the modification may be used by the decoder. The current block of pixels in the base layer corresponding to the enhancement layer block may be searched by the decoder or the decoder may receive and decode information from the bitstream indicative of the base block and/or which information of the base block to use in the modification process.

In some embodiments the base layer may be coded with another standard other than H.264/AVC or HEVC.

In example embodiments, common notation for arithmetic operators, logical operators, relational operators, bit-wise operators, assignment operators, and range notation e.g. as specified in H.264/AVC or a draft HEVC may be used. Furthermore, common mathematical functions e.g. as specified in H.264/AVC or a draft HEVC may be used and a common order of precedence and execution order (from left to right or from right to left) of operators e.g. as specified in H.264/AVC or a draft HEVC may be used.

In example embodiments, the following descriptors may be used to specify the parsing process of each syntax element.

- b(8): byte having any pattern of bit string (8 bits).
- se(v): signed integer Exp-Golomb-coded syntax element with the left bit first.
- u(n): unsigned integer using n bits. When n is "v" in the syntax table, the number of bits varies in a manner dependent on the value of other syntax elements. The parsing process for this descriptor is specified by n next bits from the bitstream interpreted as a binary representation of an unsigned integer with the most significant bit written first.
- ue(v): unsigned integer Exp-Golomb-coded syntax element with the left bit first.

An Exp-Golomb bit string may be converted to a code number (codeNum) for example using the following table:

| Bit string | codeNum |
|---|---|
| 1 | 0 |
| 0 1 0 | 1 |
| 0 1 1 | 2 |
| 0 0 1 0 0 | 3 |
| 0 0 1 0 1 | 4 |
| 0 0 1 1 0 | 5 |
| 0 0 1 1 1 | 6 |
| 0 0 0 1 0 0 0 | 7 |
| 0 0 0 1 0 0 1 | 8 |
| 0 0 0 1 0 1 0 | 9 |
| ... | ... |

A code number corresponding to an Exp-Golomb bit string may be converted to se(v) for example using the following table:

| codeNum | syntax element value |
|---|---|
| 0 | 0 |
| 1 | 1 |

(continued)

| codeNum | syntax element value |
|---------|---------------------|
| 2 | -1 |
| 3 | 2 |
| 4 | -2 |
| 5 | 3 |
| 6 | -3 |
| ... | ... |

In example embodiments, syntax structures, semantics of syntax elements, and decoding process may be specified as follows. Syntax elements in the bitstream are represented in **bold** type. Each syntax element is described by its name (all lower case letters with underscore characters), optionally its one or two syntax categories, and one or two descriptors for its method of coded representation. The decoding process behaves according to the value of the syntax element and to the values of previously decoded syntax elements. When a value of a syntax element is used in the syntax tables or the text, it appears in regular (i.e., not bold) type. In some cases the syntax tables may use the values of other variables derived from syntax elements values. Such variables appear in the syntax tables, or text, named by a mixture of lower case and upper case letter and without any underscore characters. Variables starting with an upper case letter are derived for the decoding of the current syntax structure and all depending syntax structures. Variables starting with an upper case letter may be used in the decoding process for later syntax structures without mentioning the originating syntax structure of the variable. Variables starting with a lower case letter are only used within the context in which they are derived. In some cases, "mnemonic" names for syntax element values or variable values are used interchangeably with their numerical values. Sometimes "mnemonic" names are used without any associated numerical values. The association of values and names is specified in the text. The names are constructed from one or more groups of letters separated by an underscore character. Each group starts with an upper case letter and may contain more upper case letters.

In example embodiments, a syntax structure may be specified using the following. A group of statements enclosed in curly brackets is a compound statement and is treated functionally as a single statement. A "while" structure specifies a test of whether a condition is true, and if true, specifies evaluation of a statement (or compound statement) repeatedly until the condition is no longer true. A "do ... while" structure specifies evaluation of a statement once, followed by a test of whether a condition is true, and if true, specifies repeated evaluation of the statement until the condition is no longer true. An "if ... else" structure specifies a test of whether a condition is true, and if the condition is true, specifies evaluation of a primary statement, otherwise, specifies evaluation of an alternative statement. The "else" part of the structure and the associated alternative statement is omitted if no alternative statement evaluation is needed. A "for" structure specifies evaluation of an initial statement, followed by a test of a condition, and if the condition is true, specifies repeated evaluation of a primary statement followed by a subsequent statement until the condition is no longer true.

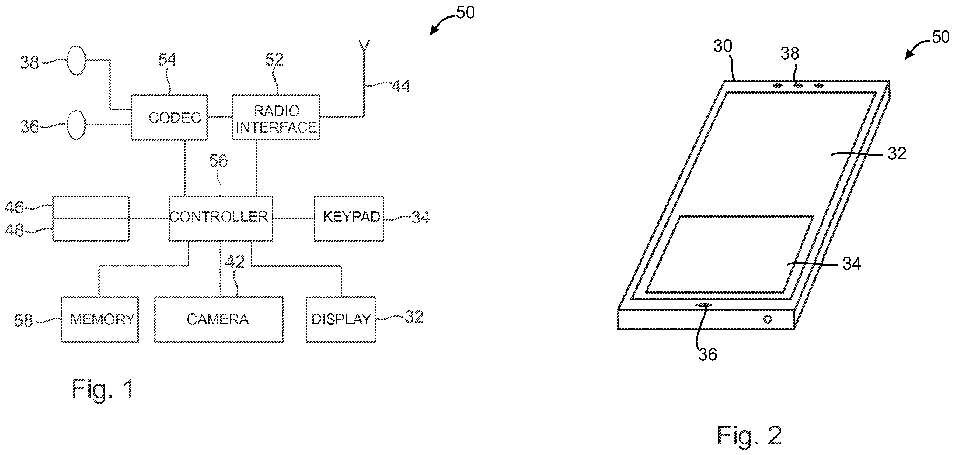

Fig. 1 shows a block diagram of a video coding system according to an example embodiment as a schematic block diagram of an exemplary apparatus or electronic device 50, which may incorporate a codec according to an embodiment of the invention. Fig. 2 shows a layout of an apparatus according to an example embodiment. The elements of Figs. 1 and 2 will be explained next.

The electronic device 50 may for example be a mobile terminal or user equipment of a wireless communication system. However, it would be appreciated that embodiments of the invention may be implemented within any electronic device or apparatus which may require encoding and decoding or encoding or decoding video images.

The apparatus 50 may comprise a housing 30 for incorporating and protecting the device. The apparatus 50 further may comprise a display 32 in the form of a liquid crystal display. In other embodiments of the invention the display may be any suitable display technology suitable to display an image or video. The apparatus 50 may further comprise a keypad 34. In other embodiments of the invention any suitable data or user interface mechanism may be employed. For example the user interface may be implemented as a virtual keyboard or data entry system as part of a touch-sensitive display. The apparatus may comprise a microphone 36 or any suitable audio input which may be a digital or analogue signal input. The apparatus 50 may further comprise an audio output device which in embodiments of the invention may be any one of: an earpiece 38, speaker, or an analogue audio or digital audio output connection. The apparatus 50 may also comprise a battery 40 (or in other embodiments of the invention the device may be powered by any suitable mobile energy device such as solar cell, fuel cell or clockwork generator). The apparatus may further comprise a camera 42 capable of recording or capturing images and/or video. In some embodiments the apparatus 50 may further comprise an infrared port for short range line of sight communication to other devices. In other embodiments the apparatus 50 may further comprise any suitable short range communication solution such as for example a Bluetooth wireless connection or a USB/firewire wired connection.

The apparatus 50 may comprise a controller 56 or processor for controlling the apparatus 50. The controller 56 may be connected to memory 58 which in embodiments of the invention may store both data in the form of image and audio data and/or may also store instructions for implementation on the controller 56. The controller 56 may further be connected to codec circuitry 54 suitable for carrying out coding and decoding of audio and/or video data or assisting in coding and decoding carried out by the controller 56.

The apparatus 50 may further comprise a card reader 48 and a smart card 46, for example a UICC and UICC reader for providing user information and being suitable for providing authentication information for authentication and authorization of the user at a network.

The apparatus 50 may comprise radio interface circuitry 52 connected to the controller and suitable for generating wireless communication signals for example for communication with a cellular communications network, a wireless communications system or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es).

In some embodiments of the invention, the apparatus 50 comprises a camera capable of recording or detecting individual frames which are then passed to the codec 54 or controller for processing. In some embodiments of the invention, the apparatus may receive the video image data for processing from another device prior to transmission and/or storage. In some embodiments of the invention, the apparatus 50 may receive either wirelessly or by a wired connection the image for coding/decoding.

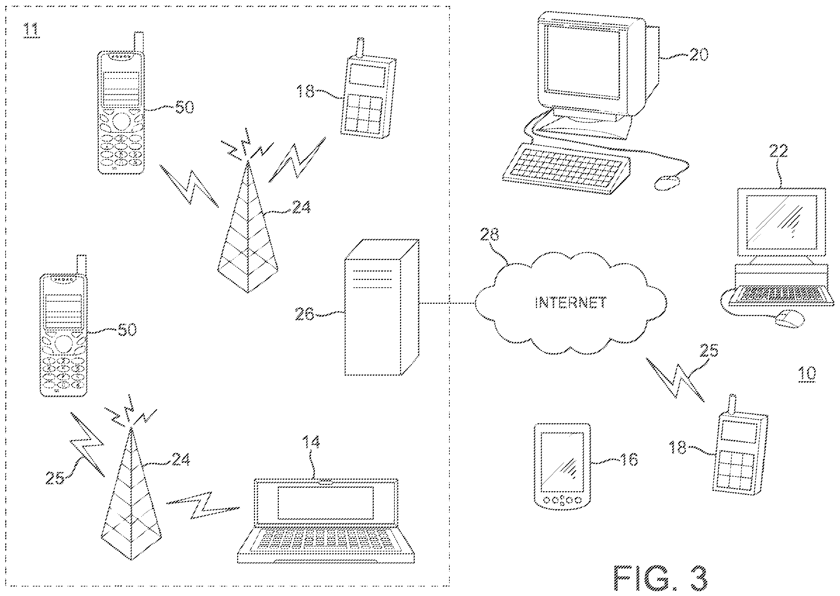

Fig. 3 shows an arrangement for video coding comprising a plurality of apparatuses, networks and network elements according to an example embodiment. With respect to Figure 3, an example of a system within which embodiments of the present invention can be utilized is shown. The system 10 comprises multiple communication devices which can communicate through one or more networks. The system 10 may comprise any combination of wired or wireless networks including, but not limited to a wireless cellular telephone network (such as a GSM, UMTS, CDMA network etc), a wireless local area network (WLAN) such as defined by any of the IEEE 802.x standards, a Bluetooth personal area network, an Ethernet local area network, a token ring local area network, a wide area network, and the Internet.

The system 10 may include both wired and wireless communication devices or apparatus 50 suitable for implementing embodiments of the invention. For example, the system shown in Figure 3 shows a mobile telephone network 11 and a representation of the internet 28. Connectivity to the internet 28 may include, but is not limited to, long range wireless connections, short range wireless connections, and various wired connections including, but not limited to, telephone lines, cable lines, power lines, and similar communication pathways.

The example communication devices shown in the system 10 may include, but are not limited to, an electronic device or apparatus 50, a combination of a personal digital assistant (PDA) and a mobile telephone 14, a PDA 16, an integrated messaging device (IMD) 18, a desktop computer 20, a notebook computer 22. The apparatus 50 may be stationary or mobile when carried by an individual who is moving. The apparatus 50 may also be located in a mode of transport including, but not limited to, a car, a truck, a taxi, a bus, a train, a boat, an airplane, a bicycle, a motorcycle or any similar suitable mode of transport.

Some or further apparatuses may send and receive calls and messages and communicate with service providers through a wireless connection 25 to a base station 24. The base station 24 may be connected to a network server 26 that allows communication between the mobile telephone network 11 and the internet 28. The system may include additional communication devices and communication devices of various types.

The communication devices may communicate using various transmission technologies including, but not limited to, code division multiple access (CDMA), global systems for mobile communications (GSM), universal mobile telecommunications system (UMTS), time divisional multiple access (TDMA), frequency division multiple access (FDMA), transmission control protocol-internet protocol (TCP-IP), short messaging service (SMS), multimedia messaging service (MMS), email, instant messaging service (IMS), Bluetooth, IEEE 802.11 and any similar wireless communication technology. A communications device involved in implementing various embodiments of the present invention may communicate using various media including, but not limited to, radio, infrared, laser, cable connections, and any suitable connection.

In the above, some embodiments have been described in relation to particular types of parameter sets. It needs to be understood, however, that embodiments could be realized with any type of parameter set or other syntax structure in the bitstream.

In the above, some embodiments have been described in relation to encoding indications, syntax elements, and/or syntax structures into a bitstream or into a coded video sequence and/or decoding indications, syntax elements, and/or syntax structures from a bitstream or from a coded video sequence. It needs to be understood, however, that embodiments could be realized when encoding indications, syntax elements, and/or syntax structures into a syntax structure or a data unit that is external from a bitstream or a coded video sequence comprising video coding layer data, such as coded slices, and/or decoding indications, syntax elements, and/or syntax structures from a syntax structure or a data unit that is external from a bitstream or a coded video sequence comprising video coding layer data, such as coded slices. For example, in some embodiments, an indication according to any embodiment above may be coded into a video parameter set or a sequence parameter set, which is conveyed externally from a coded video sequence for example using a control protocol, such as SDP. Continuing the same example, a receiver may obtain the video parameter set or the sequence parameter set, for example using the control protocol, and provide the video parameter set or the sequence parameter set for decoding.

In the above, some embodiments have been described in relation to coding/decoding methods or tools having inter-component dependency, such as base layer /enhancement layer decoding or prediction tools. It needs to be understood that embodiments may not be specific to the described coding/decoding methods but could be realized with any similar coding/decoding methods or tools.

In the above, the example embodiments have been described with the help of syntax of the bitstream. It needs to be understood, however, that the corresponding structure and/or computer program may reside at the encoder for generating the bitstream and/or at the decoder for decoding the bitstream. Likewise, where the example embodiments have been described with reference to an encoder, it needs to be understood that the resulting bitstream and the decoder have corresponding elements in them. Likewise, where the example embodiments have been described with reference to a decoder, it needs to be understood that the encoder has structure and/or computer program for generating the bitstream to be decoded by the decoder.

Although the above examples describe embodiments of the invention operating within a codec within an electronic device, it would be appreciated that the invention as described below may be implemented as part of any video codec. Thus, for example, embodiments of the invention may be implemented in a video codec which may implement video coding over fixed or wired communication paths.

Thus, user equipment may comprise a video codec such as those described in embodiments of the invention above. It shall be appreciated that the term user equipment is intended to cover any suitable type of wireless user equipment, such as mobile telephones, portable data processing devices or portable web browsers.

Furthermore elements of a public land mobile network (PLMN) may also comprise video codecs as described above.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatuses, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. implemented within the processor, magnetic media such as hard disk or floppy disks, and optical media such as for example DVD and the data variants thereof, CD.

The various embodiments of the invention can be implemented with the help of computer program code that resides in a memory and causes the relevant apparatuses to carry out the invention. For example, a terminal device may comprise circuitry and electronics for handling, receiving and transmitting data, computer program code in a memory, and a processor that, when running the computer program code, causes the terminal device to carry out the features of an embodiment. Yet further, a network device may comprise circuitry and electronics for handling, receiving and transmitting data, computer program code in a memory, and a processor that, when running the computer program code, causes the network device to carry out the features of an embodiment.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs) and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys Inc., of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims.

**Claims**

1. A method for scalable video coding, the method comprising:

    deriving motion vectors for an enhancement layer block based on spatial motion vector prediction candidates of already decoded neighbouring blocks of the enhancement layer block and motion vectors from another picture in the enhancement layer;

    determining a co-located block in a reference layer for the enhancement layer block;

    scaling the motion vector information from the co-located block in the reference layer according to spatial resolution of the reference layer, and spatial resolution of the enhancement layer;

    adding the scaled motion vector information from the co-located block to a candidate list;

    adding a first maximum number or less of spatial motion vector prediction candidates to the candidate list;

    examining whether temporal prediction is allowed and the number of motion prediction candidates in the candidate list is less than a second maximum number of motion prediction candidates, and if so, adding a motion vector prediction candidate from another picture in the enhancement layer into the candidate list;

    obtaining an indication of selected motion vector prediction candidate as an index in the candidate list;

    selecting a motion vector from said candidate list based on the index;

    decoding the motion information of enhancement layer based on the selected motion vector.

2. The method according to claim 1, wherein the candidate list is ordered:

    If spatial motion vector predictor candidate of the neighbouring block in the position at lower-left (A1) of the enhancement layer block is available, information on the motion vector prediction candidate is added to the first position in the candidate list;

    If spatial motion vector predictor candidate of the neighbouring block in the position at above-right (B1) of the enhancement layer block is available, information on the motion vector prediction candidate is added to the next position in the candidate list;

    If spatial motion vector predictor candidate of the neighbouring block in the position to above and to the right (B0) of the enhancement layer block is available, information on the motion vector prediction candidate is added to the next position in the candidate list;

    If spatial motion vector predictor candidate of the neighbouring block in the position to left and below (A0) the enhancement layer block is available, information on the motion vector prediction candidate is added to the next position in the candidate list;

    If spatial motion vector predictor candidate of the neighbouring block in the position above and the left (B2) of the enhancement layer block is available, information on the motion vector prediction candidate is added to the next position in the candidate list;

    If the reference layer motion vector prediction candidate is available, information on the motion vector prediction candidate is added to the next position in the list.

3. The method according to claim 1 or 2, wherein the reference layer is one of the following:

    a base layer; or

    a view of a multiview video.

4. An apparatus for scalable video coding, the apparatus comprising:

Means for deriving motion vectors for an enhancement layer block based on spatial motion vector prediction candidates of the already decoded neighbouring blocks of the enhancement layer block and motion vectors from another picture in the enhancement layer;

Means for determining a co-located block in a reference layer for the enhancement layer block;

Means for scaling the motion vector information from the co-located block in the reference layer according to spatial resolution of the reference layer, and spatial resolution of the enhancement layer;

Means for adding the scaled motion vector information from the co-located block to a candidate list;

Means for adding a first maximum number or less of spatial motion vector prediction candidates to the candidate list;

Means for examining whether temporal prediction is allowed and the number of motion prediction candidates in the candidate list is less than a second maximum number of motion prediction candidates, and if so, adding a motion vector prediction candidate from another picture in the enhancement layer into the candidate list;

Means for obtaining an indication of selected motion vector prediction candidate as an index in the candidate list;

Means for selecting a motion vector from said candidate list based on the index; and

Means for decoding the motion information of enhancement layer based on the selected motion vector.

**5.** The apparatus according to claim 4, wherein the reference layer is one of the following:

a base layer; or
a view of a multiview video.

**6.** The apparatus according to claim 4 or 5, wherein the candidate list is ordered:

If spatial motion vector predictor candidate of the neighbouring block in the position at lower-left (A1) of the enhancement layer block is available, information on the motion vector prediction candidate is added to the first position in the candidate list;

If spatial motion vector predictor candidate of the neighbouring block in the position at above-right (B1) of the enhancement layer block is available, information on the motion vector prediction candidate is added to the next position in the candidate list;

If spatial motion vector predictor candidate of the neighbouring block in the position to above and to the right (B0) of the enhancement layer block is available, information on the motion vector prediction candidate is added to the next position in the candidate list;

If spatial motion vector predictor candidate of the neighbouring block in the position to left and below (A0) the enhancement layer block is available, information on the motion vector prediction candidate is added to the next position in the candidate list;

If spatial motion vector predictor candidate of the neighbouring block in the position above and the left (B2) of the enhancement layer block is available, information on the motion vector prediction candidate is added to the next position in the candidate list;

If the reference layer motion vector prediction candidate is available, information on the motion vector prediction candidate is added to the next position in the list.

**Patentansprüche**

**1.** Verfahren für eine skalierbare Videocodierung, wobei das Verfahren umfasst:

Ableiten von Bewegungsvektoren für einen Anreicherungsschichtblock basierend auf räumlichen Bewegungsvektor-Vorhersagekandidaten von bereits decodierten Nachbarblöcken des Anreicherungsschichtblocks und Bewegungsvektoren aus einem anderen Bild in der Anreicherungsschicht;

Bestimmen eines ko-lokalisierten Blocks in einer Referenzschicht für den Anreicherungsschichtblock;

Skalieren der Bewegungsvektorinformationen aus dem ko-lokalisierten Block in der Referenzschicht entsprechend der räumlichen Auflösung der Referenzschicht und der räumlichen Auflösung der Anreicherungsschicht;

Hinzufügen der skalierten Bewegungsvektorinformation aus dem ko-lokalisierten Block zu einer Kandidatenliste;

Hinzufügen einer ersten maximalen Anzahl oder weniger von räumlichen Bewegungsvektor-Vorhersagekandidaten zu der Kandidatenliste;

Prüfen, ob die zeitliche Vorhersage erlaubt ist und die Anzahl der Bewegungsvorhersagekandidaten in der Kandidatenliste kleiner ist als eine zweite maximale Anzahl von Bewegungsvorhersagekandidaten, und wenn ja, Hinzufügen eines Bewegungsvektorvorhersagekandidaten aus einem anderen Bild in der Anreicherungsschicht in die Kandidatenliste;

Erhalten einer Angabe des ausgewählten Bewegungsvektor-Vorhersagekandidaten als Index in der Kandidatenliste;

Auswählen eines Bewegungsvektors aus der Kandidatenliste basierend auf dem Index;

Decodieren der Bewegungsinformationen der Anreicherungsschicht basierend auf dem ausgewählten Bewegungsvektor.

2. Verfahren nach Anspruch 1, wobei die die Kandidatenliste wie folgt sortiert ist:

wenn ein räumlicher Bewegungsvektor-Vorhersagekandidat des benachbarten Blocks an der Position unten links (A1) des Anreicherungsschichtblocks verfügbar ist, wird die Information über den Bewegungsvektor-Vorhersagekandidaten zur ersten Position in der Kandidatenliste hinzugefügt;

wenn ein räumlicher Bewegungsvektor-Vorhersagekandidat des benachbarten Blocks an der Position oben rechts (B1) des Anreicherungsschichtblocks verfügbar ist, wird die Information über den Bewegungsvektor-Vorhersagekandidaten zur nächsten Position in der Kandidatenliste hinzugefügt;

wenn ein räumlicher Bewegungsvektor-Vorhersagekandidat des benachbarten Blocks an der Position oberhalb und rechts (B0) des Anreicherungsschichtblocks verfügbar ist, wird die Information über den Bewegungsvektor-Vorhersagekandidaten zur nächsten Position in der Kandidatenliste hinzugefügt;

wenn ein räumlicher Bewegungsvektor-Vorhersagekandidat des benachbarten Blocks an der Position links und unterhalb (A0) des Anreicherungsschichtblocks verfügbar ist, wird die Information über den Bewegungsvektor-Vorhersagekandidaten zur nächsten Position in der Kandidatenliste hinzugefügt;

wenn ein räumlicher Bewegungsvektor-Vorhersagekandidat des benachbarten Blocks an der Position oberhalb und links (B2) des Anreicherungsschichtblocks verfügbar ist, wird die Information über den Bewegungsvektor-Vorhersagekandidaten zur nächsten Position in der Kandidatenliste hinzugefügt;

wenn der Bewegungsvektor-Vorhersagekandidat der Referenzschicht verfügbar ist, wird die Information über den Bewegungsvektor-Vorhersagekandidaten zu der nächsten Position in der Liste hinzugefügt.

3. Verfahren nach Anspruch 1 oder 2, wobei die Referenzschicht eine der Folgenden ist:

eine Basisschicht; oder

eine Ansicht eines Multiview-Videos.

4. Vorrichtung für eine skalierbare Videocodierung, wobei die Vorrichtung umfasst:

Mittel zum Ableiten von Bewegungsvektoren für einen Anreicherungsschichtblock basierend auf räumlichen Bewegungsvektor-Vorhersagekandidaten der bereits decodierten Nachbarblöcke des Anreicherungsschichtblocks und Bewegungsvektoren aus einem anderen Bild in der Anreicherungsschicht;

Mittel zum Bestimmen eines ko-lokalisierten Blocks in einer Referenzschicht für den Anreicherungsschichtblock;

Mittel zum Skalieren der Bewegungsvektorinformationen aus dem ko-lokalisierten Block in der Referenzschicht entsprechend der räumlichen Auflösung der Referenzschicht und der räumlichen Auflösung der Anreicherungsschicht;

Mittel zum Hinzufügen der skalierten Bewegungsvektorinformationen aus dem ko-lokalisierten Block zu einer Kandidatenliste;

Mittel zum Hinzufügen einer ersten maximalen Anzahl oder weniger von räumlichen Bewegungsvektor-Vorhersagekandidaten zu der Kandidatenliste;

Mittel zum Prüfen, ob die zeitliche Vorhersage erlaubt ist und die Anzahl der Bewegungsvorhersagekandidaten in der Kandidatenliste kleiner ist als eine zweite maximale Anzahl von Bewegungsvorhersagekandidaten, und wenn ja, Hinzufügen eines Bewegungsvektorvorhersagekandidaten aus einem anderen Bild in der Anreicherungsschicht in die Kandidatenliste;

Mittel zum Erhalten einer Angabe des ausgewählten Bewegungsvektor-Vorhersagekandidaten als Index in der Kandidatenliste;

Mittel zum Auswählen eines Bewegungsvektors aus der Kandidatenliste basierend auf dem Index; und

Mittel zum Decodieren der Bewegungsinformation der Anreicherungsschicht basierend auf dem ausgewählten Bewegungsvektor.

5. Vorrichtung nach Anspruch 4, wobei die Referenzschicht eine der Folgenden ist:

eine Basisschicht; oder

eine Ansicht eines Multiview-Videos.

6. Vorrichtung nach Anspruch 4 oder 5, wobei die die Kandidatenliste wie folgt sortiert ist:

wenn ein räumlicher Bewegungsvektor-Vorhersagekandidat des benachbarten Blocks an der Position unten links (A1) des Anreicherungsschichtblocks verfügbar ist, wird die Information über den Bewegungsvektor-Vorhersagekandidaten zur ersten Position in der Kandidatenliste hinzugefügt;
wenn ein räumlicher Bewegungsvektor-Vorhersagekandidat des benachbarten Blocks an der Position oben rechts (B1) des Anreicherungsschichtblocks verfügbar ist, wird die Information über den Bewegungsvektor-Vorhersagekandidaten zur nächsten Position in der Kandidatenliste hinzugefügt;
wenn ein räumlicher Bewegungsvektor-Vorhersagekandidat des benachbarten Blocks an der Position oberhalb und rechts (B0) des Anreicherungsschichtblocks verfügbar ist, wird die Information über den Bewegungsvektor-Vorhersagekandidaten zur nächsten Position in der Kandidatenliste hinzugefügt;
wenn ein räumlicher Bewegungsvektor-Vorhersagekandidat des benachbarten Blocks an der Position links und unterhalb (A0) des Anreicherungsschichtblocks verfügbar ist, wird die Information über den Bewegungsvektor-Vorhersagekandidaten zur nächsten Position in der Kandidatenliste hinzugefügt;
wenn ein räumlicher Bewegungsvektor-Vorhersagekandidat des benachbarten Blocks an der Position oberhalb und links (B2) des Anreicherungsschichtblocks verfügbar ist, wird die Information über den Bewegungsvektor-Vorhersagekandidaten zur nächsten Position in der Kandidatenliste hinzugefügt;
wenn der Bewegungsvektor-Vorhersagekandidat der Referenzschicht verfügbar ist, wird die Information über den Bewegungsvektor-Vorhersagekandidaten zu der nächsten Position in der Liste hinzugefügt.

**Revendications**

1. Procédé de codage vidéo évolutif, dans lequel le procédé comprend :

la dérivation de vecteurs de déplacement pour un bloc de couche d'amélioration sur la base de candidats de prédiction de vecteur de déplacement spatial de blocs voisins déjà décodés du bloc de bouche d'amélioration et de vecteurs de déplacement issus d'une autre image dans la couche d'amélioration ;
la détermination d'un bloc co-implanté dans une couche de référence pour le bloc de couche d'amélioration ;
le redimensionnement des informations de vecteur de déplacement issues du bloc co-implanté dans la couche de référence selon la résolution spatiale de la couche de référence, et la résolution spatiale de la couche d'amélioration ;
l'ajout des informations de vecteur de déplacement redimensionnées issues du bloc co-implanté à une liste de candidats ;
l'ajout d'un premier nombre maximum ou moins de candidats de prédiction de vecteur de déplacement spatial à la liste de candidats ;
la vérification du fait qu'une prédiction temporelle soit autorisée ou non et que le nombre de candidats de prédiction de déplacement dans la liste de candidats soit inférieur ou non à un second nombre maximum de candidats de prédiction de déplacement, et, si c'est le cas, l'ajout d'un candidat de prédiction de vecteur de déplacement issu d'une autre image dans la couche d'amélioration à la liste de candidats ;
l'obtention d'une indication du candidat de prédiction de vecteur de déplacement sélectionné en guise d'index dans la liste de candidats ;
la sélection d'un vecteur de déplacement dans ladite liste de candidats sur la base de l'index ;
le décodage des informations de déplacement de la couche d'amélioration sur la base du vecteur de déplacement sélectionné.

2. Procédé selon la revendication 1, dans lequel la liste de candidats est classée comme suit :

si le candidat de prédiction de vecteur de déplacement spatial du bloc voisin à l'emplacement situé en bas à gauche (A1) du bloc de couche d'amélioration est disponible, les informations sur le candidat de prédiction de vecteur de déplacement sont ajoutées au premier emplacement dans la liste de candidats ;
si le candidat de prédiction de vecteur de déplacement spatial du bloc voisin à l'emplacement situé en haut à droite (B1) du bloc de couche d'amélioration est disponible, les informations sur le candidat de prédiction de vecteur de déplacement sont ajoutées à l'emplacement suivant dans la liste de candidats ;
si le candidat de prédiction de vecteur de déplacement spatial du bloc voisin à l'emplacement situé au-dessus et à droite (B0) du bloc de couche d'amélioration est disponible, les informations sur le candidat de prédiction de vecteur de déplacement sont ajoutées à l'emplacement suivant dans la liste de candidats ;
si le candidat de prédiction de vecteur de déplacement spatial du bloc voisin à l'emplacement situé à gauche et au-dessous (A0) du bloc de couche d'amélioration est disponible, les informations sur le candidat de prédiction de vecteur de déplacement sont ajoutées à l'emplacement suivant dans la liste de candidats ;
si le candidat de prédiction de vecteur de déplacement spatial du bloc voisin à l'emplacement situé au-dessus et à gauche (B2) du bloc de couche d'amélioration est disponible, les informations sur le candidat de prédiction de vecteur de déplacement sont ajoutées à l'emplacement suivant dans la liste de candidats ;
si le candidat de prédiction de vecteur de déplacement de couche de référence est disponible, les informations sur le candidat de prédiction de vecteur de déplacement sont ajoutées à l'emplacement suivant dans la liste.

3. Procédé selon la revendication 1 ou 2, dans lequel la couche de référence est l'une de ce qui suit :

une couche de base ; ou
une vue d'une vidéo multivues.

4. Appareil de codage vidéo évolutif, dans lequel l'appareil comprend :

un moyen destiné à dériver des vecteurs de déplacement pour un bloc de couche d'amélioration sur la base de candidats de prédiction de vecteur de déplacement spatial des blocs voisins déjà décodés du bloc de couche d'amélioration et les vecteurs de déplacement issus d'une autre image dans la couche d'amélioration ;
un moyen destiné à déterminer un bloc co-implanté dans une couche de référence pour le bloc de couche d'amélioration ;
un moyen destiné à redimensionner les informations de vecteur de déplacement issues du bloc co-implanté dans la couche de référence selon la résolution spatiale de la couche de référence, et la résolution spatiale de la couche d'amélioration ;
un moyen destiné à ajouter les informations de vecteur de déplacement redimensionnées issues du bloc co-implanté à une liste de candidats ;
un moyen destiné à ajouter un premier nombre maximum ou moins de candidats de prédiction de vecteur de déplacement spatial à la liste de candidats ;
un moyen destiné à vérifier si une prédiction temporelle est autorisée ou non et si le nombre de candidats de prédiction de déplacement dans la liste de candidats est inférieur ou non à un second nombre maximum de candidats de prédiction de déplacement, et, si c'est le cas, à ajouter un candidat de prédiction de vecteur de déplacement issu d'une autre image dans la couche d'amélioration à la liste de candidats ;
un moyen destiné à obtenir une indication du candidat de prédiction de vecteur de déplacement sélectionné en guise d'index dans la liste de candidats ;
un moyen destiné à sélectionner un vecteur de déplacement dans ladite liste de candidats sur la base de l'index ;
un moyen destiné à décoder les informations de déplacement de la couche d'amélioration sur la base du vecteur de déplacement sélectionné.

5. Appareil selon la revendication 4, dans lequel la couche de référence est l'une de ce qui suit :

une couche de base ; ou
une vue d'une vidéo multivues.

6. Appareil selon la revendication 4 ou 5, dans lequel la liste de candidats est classée comme suit :

si le candidat de prédiction de vecteur de déplacement spatial du bloc voisin à l'emplacement situé en bas à gauche (A1) du bloc de couche d'amélioration est disponible, les informations sur le candidat de prédiction de vecteur de déplacement sont ajoutées au premier emplacement dans la liste de candidats ;
si le candidat de prédiction de vecteur de déplacement spatial du bloc voisin à l'emplacement situé en haut à droite (B1) du bloc de couche d'amélioration est disponible, les informations sur le candidat de prédiction de vecteur de déplacement sont ajoutées à l'emplacement suivant dans la liste de candidats ;
si le candidat de prédiction de vecteur de déplacement spatial du bloc voisin à l'emplacement situé au-dessus et à droite (B0) du bloc de couche d'amélioration est disponible, les informations sur le candidat de prédiction de vecteur de déplacement sont ajoutées à l'emplacement suivant dans la liste de candidats ;
si le candidat de prédiction de vecteur de déplacement spatial du bloc voisin à l'emplacement situé à gauche et au-dessous (A0) du bloc de couche d'amélioration est disponible, les informations sur le candidat de prédiction de vecteur de déplacement sont ajoutées à l'emplacement suivant dans la liste de candidats ;

si le candidat de prédiction de vecteur de déplacement spatial du bloc voisin à l'emplacement situé au-dessus et à gauche (B2) du bloc de couche d'amélioration est disponible, les informations sur le candidat de prédiction de vecteur de déplacement sont ajoutées à l'emplacement suivant dans la liste de candidats ;
si le candidat de prédiction de vecteur de déplacement de couche de référence est disponible, les informations sur le candidat de prédiction de vecteur de déplacement sont ajoutées à l'emplacement suivant dans la liste.

Fig. 1

Fig. 2

FIG. 3

Fig. 4a

EP 2 904 797 B1

Fig. 4b

Fig. 5a

Fig. 5b

Fig. 6a

EP 2 904 797 B1

610 623

612 625

611 622

613 624

614

615

616

620 621

617

618 619

Fig. 6c

610

612

611

613

614

615

616

620 621

617

618 619

Fig. 6b

Vertical directions

18  19  20  21  22  23  24  25  26  27  28  29  30  31  32  33  34

17 16 15 14 13 12 11 10 9 8 7 6 5 4 3 2

Horizontal directions

0 : Intra_Planar
1 : Intra_DC

Fig. 7

81  82  83  84  85

80 → | Δ=0 | Δ=1 | Δ=2 | sign | Δ-3 |

Fig. 8a

81  82  83  85  84

80 → | Δ=0 | Δ=1 | Δ=2 | Δ-3 | sign |

Fig. 8b

Fig. 9b

Fig. 9a

## REFERENCES CITED IN THE DESCRIPTION

**Patent documents cited in the description**

- US 2006153300 A

**Non-patent literature cited in the description**

- *JCTVC-H0388, http://phe- nix.int-evry.fr/jct/doc_end_user/documents/8_San%20Jose/wg11/JCTVC-H0388-v4.zip*

- *JCTVC-I0356, http://phe- nix.int-evry.fr/jct/doc_end_user/documents/9_Geneva/wg11/JCTVC-I0356-v1.zip*
- *JCTVC-J0109, http://phe- nix.int-evry.fr/jct/doc_end_user/current_document.p hp?id=5972*